(19) Europäisches Patentamt
European Patent Office
Office européen des brevets

(11) **EP 4 118 152 B1**

(12) # EUROPEAN PATENT SPECIFICATION

(45) Date of publication and mention of the grant of the patent:
**24.04.2024 Bulletin 2024/17**

(21) Application number: **21710338.1**

(22) Date of filing: **09.03.2021**

(51) International Patent Classification (IPC):
***C09D 1/02*** *(2006.01)* ***H01B 9/00*** *(2006.01)*
***C09D 5/08*** *(2006.01)* ***H01B 5/08*** *(2006.01)*
***H01B 7/28*** *(2006.01)* ***C09D 5/33*** *(2006.01)*
***H01B 7/29*** *(2006.01)* ***H01B 7/42*** *(2006.01)*

(52) Cooperative Patent Classification (CPC):
**H01B 7/292; C09D 1/02; C09D 5/004; C09D 5/08; C09D 7/61; C09D 7/67; H01B 7/2806; H01B 7/421; H01B 9/008;** C08K 2003/2241

(86) International application number:
**PCT/GB2021/050576**

(87) International publication number:
**WO 2021/181076 (16.09.2021 Gazette 2021/37)**

(54) **OVERHEAD CONDUCTOR WITH SUPERHYDROPHOBIC COATING**

OBERLEITER MIT SUPERHYDROPHOBER BESCHICHTUNG

CONDUCTEUR AÉRIEN AVEC REVÊTEMENT SUPERHYDROPHOBE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA TN**

(30) Priority: **09.03.2020 GB 202003419**
**12.03.2020 LU 101672**

(43) Date of publication of application:
**18.01.2023 Bulletin 2023/03**

(73) Proprietor: **Cable Coatings Limited**
**Leeds**
**LS2 3AA (GB)**

(72) Inventors:
- **COOGAN, Niall**
  **Leeds LS2 3AA (GB)**
- **PARKER, Rachel**
  **Leeds LS2 3AA (GB)**

(74) Representative: **Dehns**
**St. Bride's House**
**10 Salisbury Square**
**London EC4Y 8JD (GB)**

(56) References cited:
**JP-B2- 4 502 723**
**US-A- 2 871 099**
**US-A1- 2015 235 739**
**US-A1- 2015 353 737**
**US-A1- 2018 112 078**
**US-A1- 2018 118 952**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE PRESENT INVENTION

The present invention relates to electric overhead conductors. Various preferred embodiments relate to high voltage electric overhead conductors which have a single coating for the purpose of reducing the temperature of the conductor thereby reducing the resistance of the conductor (as electrical resistance is temperature dependent) and hence reducing power losses in the conductor (since power loss is dependent upon electrical resistance). The single coated high voltage electric overhead conductor includes a superhydrophobic self-cleaning agent.

BACKGROUND

Various different types of high voltage electric overhead conductors are known comprising aluminium cables suspended between pylons. The various different types of known high voltage electric overhead conductors can be divided into two groups. The first group comprises conductors which have a maximum operating temperature of 80°C. The second group comprises conductors which have a higher maximum operating temperature in the range 150-250°C.

There are various particular problems associated with high voltage electric overhead conductors and these problems can become particularly acute with high voltage electric overhead conductors which are operable at elevated operating temperatures in the range 150-250°C. Such conductors may, for example, be installed in particularly hot regions of the world such as Southern USA, the Middle East and Australia.

High voltage electric overhead conductors which are installed in particularly hot regions of the world suffer from the problem that the overhead conductors are exposed to significant solar heating due to intense sunlight for a majority of the year. An overhead electric conductor which is subjected to sustained solar radiation throughout the year presents a number of significant operational challenges to a utility company seeking to manage an overhead power transmission or distribution line or network.

As will be understood by those skilled in the art, the temperature of a high voltage electric overhead conductor will tend to increase due to two main factors. The first factor is that there will be Ohmic losses due to the transmission of electric current through the conductor which will result in Joule heating of the conductor. The second factor is that the conductor will be subjected to relatively intense solar radiation (i.e. sunlight) and hence will be heated by solar radiation. It will be apparent that both factors will play a role in elevating the temperature of the conductor.

It will also be understood that there are also a number of other potential factors which will tend to decrease the temperature of the conductor. For example, a conductor may lose energy by emitting infra-red (heat) radiation. A conductor may also lose energy by conduction or by convection (e.g. due to air currents, wind etc.). However, as a practical matter, energy losses due to conduction are fairly minimal and energy losses due to convection depend upon the geographic location where the conductor is installed.

It will be understood by those skilled in the art that the predominant cooling mechanism by which an overhead electric conductor will lose energy is via radiation i.e. by radiating heat energy and in particular infra-red radiation in the infrared wavelength range 2.5-30.0 $\mu$m.

Accordingly, to a first approximation the temperature of a high voltage overhead electric conductor will increase due to the combined effects of Joule heating and solar radiation with this temperature increase being offset by energy loss due to the conductor emitting infra-red radiation.

For illustrative purposes, a bare overhead aluminium electric conductor may be considered having an average solar absorptivity coefficient A of 0.5 across the solar spectrum 0.3-2.5 $\mu$m. It will be understood that the bare aluminium conductor will have a corresponding average solar reflectivity coefficient R of 0.5. Accordingly, a bare aluminium electric conductor exposed to solar radiation (i.e. sunshine) will absorb approx. 50% of the incident solar radiation.

The net effect of the conductor absorbing approx. 50% of incident solar radiation over a sustained period of time coupled with significant Joule heating of the conductor will cause the temperature of the overhead conductor to rise up to a maximum rated operating temperature. Dependent upon the geographic location of the conductor energy losses due to air currents (i.e. wind) may be low or negligible. The maximum operating temperature of the conductor may be either 80°C or in the range 150-250°C.

Once an overhead conductors reaches or approaches its maximum rated operating temperature then the utility company managing the power transmission or distribution line or network is required to reduce the transmitted current through the conductor so as to reduce the effects of Joule heating thereby maintaining the overhead conductor within a safe operating temperature range.

Various different types of conductors are known and will now be described in more detail below.

All Aluminium Conductors ("AAC") comprise hard drawn aluminium wires stranded in successive layers in opposite directions to form the conductor as per BS EN 50182 or IEC 61089. AAC conductors may be used for aerial distribution lines having relatively short spans, aerial feeders and bus bars of substations. AAC conductors have a high

corrosion resistance since steel is not present. Conventional AAC conductors are typically rated up to a maximum operating temperature of 80°C.

All Aluminium Alloy Conductors ("AAAC") comprise All Aluminium Alloy ("ALMELEC") wires stranded in successive layers in opposite directions to form the conductor as per IEC 61089, BS EN 50182 or ASTM B 399. AAAC conductors are mainly used for overhead lines in transmission and distribution electrical networks having relatively long spans. They are also used as a messenger to support overhead electrical cables. AAAC conductors have a high corrosion resistance since steel is not present. Conventional AAAC conductors are typically rated up to a maximum operating temperature of 80°C.

Aluminium Conductor Steel Reinforced ("ACSR") conductors comprise an outer layer of aluminium conductor concentrically stranded over a central core of galvanized or stranded steel wires to form the conductor as per BS EN 50182, ASTM B 232 or IEC 61089. ACSR conductors are widely used for electrical power transmission over long distances. ACSR conductors may also be used as a messenger for supporting overhead electrical cables. Conventional ACSR conductors are typically rated up to a maximum operating temperature of 80°C.

Aluminium Conductor Aluminium Clad Steel Reinforced ("ACSR/AW") conductors comprise an outer layer of aluminium conductor concentrically stranded over a central core of aluminium clad steel solid or stranded cable to form the conductor as per ASTM B 549. ACSR/AW conductors are used for electrical power transmission and are ideal for long overhead lines spans like ACSR conductors but with slightly better resistance and current carrying capacity in addition to good corrosion resistance. Conventional ACSR/AW conductors are typically rated up to a maximum operating temperature of 80°C.

Areal Bundled Cables ("ABC") are made from aluminium conductors which are insulated by XLPE insulation and assembled to form two (Duplex), three (Triplex), four (Quadruplex) or more conductors as per ICEA S 474-76 or BS EN 50182. They are used for secondary overhead lines (in circuits not exceeding 600 V phase to phase) on poles or as feeders to residential premises.

Various High Temperature Low Sag ("HTLS") conductors are also known which are designed to operate at significantly higher operational temperatures of up to 150-250°C.

Known HTLS conductors include Aluminium Conductor Composite Core ("ACCC") conductors, Aluminium Conductor Steel Supported ("ACSS/MA") conductors, Aluminium Conductor Aluminium Clad Steel Supported ("ACSS/AW") conductors, Thermal Resistant Aluminium Alloy Conductor Steel Reinforced ("TACSR") conductors, Thermal Resistant Aluminium Alloy Conductor Aluminium Clad Steel Reinforced ("TACSR/AW") conductors and Super Thermal Resistant Aluminium Alloy Conductor Aluminium Clad Invar Reinforced ("STACIR/AW") conductors.

Aluminium Conductor Composite Core ("ACCC") conductors comprise a concentrically stranded conductor with one or more layers of trapezoidal shaped annealed 1350-0 aluminium wires on a central core of light weight carbon-glass fibre composite. ACCC conductors comprising a hybrid carbon composite core are stronger and lighter than traditional steel cores. ACCC conductors are capable of carrying twice the current of traditional ACSR conductors as ACCC conductors are designed for continuous operating temperatures of up to 180°C in addition to its lighter core which allows approx. 30% more aluminium to be used without increasing the total weight. Usage of ACCC conductors reduces line losses by 30-40% under equal load conditions compared with traditional ACSR conductors of the same diameter and weight. ACCC conductors have greater strength, effective self-damping, superior fatigue resistance and a low coefficient of expansion thereby reducing conductor sag under heavy electrical load conditions. As a result, ACCC conductors can be used to increase spans between fewer or shorter structures. ACCC conductors have greater corrosion resistance than traditional ACSR conductors.

ACCC conductors are used for overhead distribution and transmission lines and are particularly useful in reconductoring applications requiring increased current with existing tensions and clearances, new line applications where structures can be economised due to reduced conductor sag, new line applications requiring high emergency loading and lines where vibration due to wind is a problem. ACCC conductors can also be used at corrosive and coastal environments due to their good corrosion resistance. Conventional ACCC conductors are typically rated up to a maximum operating temperature of 180°C.

Aluminium Conductor Steel Supported ("ACSS/MA") conductors comprise one or more layers of annealed aluminium 1350-0 wires stranded over a central core of zinc-5% aluminium mischmetal alloy coated steel wires that are designed to withstand most or all of the mechanical load on the ACSS conductor. ACSS conductors may be manufactured according to ASTM B 856.

ACSS/MA conductors are similar to traditional ACSR conductors except that ACSS/MA conductors can be operated continuously at high temperatures up to 250°C without damage. ACSS/MA conductors sag less under emergency loading than ACSR conductors, have self-damping properties and final sag is not affected by long time creep of the aluminium.

ACSS/MA conductors are used for overhead distribution and transmission lines and are particularly useful in reconductoring applications requiring increased current with existing tensions and clearances. ACSS/MA conductors are also used for new line applications where structures can be economised due to reduced conductor sag, new line

applications requiring high emergency loadings and lines where vibration due to wind is a problem. Conventional ACSS/MA conductors are typically rated up to a maximum operating temperature of 250°C.

Aluminium Conductor Aluminium Clad Steel Supported ("ACSS/AW") conductors comprise one or more layers of annealed aluminium 1350-0 wires stranded over a central core of aluminium clad steel wires that are designed to withstand most or all of the mechanical load on ACSS/AW conductors. ACSS/AW conductors may be manufactured according to ASTM B 856.

ACSS/AW conductors can operate continuously at high temperatures up to 200°C without damage. The aluminium clad steel core which consists of a thick layer of aluminium (approx. 10% of the nominal wire radius) over steel gives ACSS/AW conductors the advantages of ACSS conductors along with light weight and good conductivity of aluminium with the high tensile strength and ruggedness of steel.

ACSS/AW conductors are used for overhead distribution and transmission lines and are especially useful in reconductoring applications requiring increased current with existing tensions and clearances. ACSS/AW conductors are also used for new line applications where structures can be economised due to reduced conductor sag, new line applications requiring high emergency loadings and lines where vibration due to wind is a problem.

ACSS/AW conductors have strength characteristics similar to ACSS conductors along with slightly greater ampacity and resistance to corrosion due to aluminium cladding of the steel core wires. Conventional ACSS/AW conductors are typically rated up to a maximum operating temperature of 200°C.

Thermal Resistant Aluminium Alloy Conductor Steel Reinforced ("TACSR") conductors comprise one or more layers of thermal resistant aluminium zirconium alloy (AT1) wires stranded over a central core of zinc coated steel wire(s) as per IEC 62004 and IEC 60888 and generally according to IEC 61089.

TACSR conductors are able to carry higher (150%) load current than traditional ACSR conductors as they are designed for continuous operating temperatures of up to 150°C. TACSR conductors have the same installation technique as ACSR conductors.

TACSR conductors are used for overhead distribution and transmission lines and are particularly useful in new line applications requiring increased current. Conventional TACSR conductors are typically rated up to a maximum operating temperature of 150°C.

Thermal Resistant Aluminium Alloy Conductor Aluminium Clad Steel Reinforced ("TACSR/AW") conductors comprise one or more layers of thermal resistant aluminium zirconium alloy (AT1) wires stranded over a central core of stranded aluminium clad steel (20SA Type A) wire(s) as per IEC 62004 and IEC 61232 and generally according to IEC 61089.

TACSR/AW conductors are able to carry higher load current than traditional ACSR conductors as they are designed for continuous operating temperatures of up to 150°C. TACSR/AW conductors have increased corrosion resistance and lower electrical resistance and lower mass than TACSR conductors. TACSR/AW conductors have the same installation technique as ACSR conductors.

TACSR/AW conductors are used for overhead distribution and transmission lines and are particularly useful in new line applications requiring increased current. TACSR/AW may be used at corrosive and coastal environments due to their good corrosion resistance. Conventional TACSR/AW conductors are typically rated up to a maximum operating temperature of 150°C.

Super Thermal Resistant Aluminium Alloy Conductor Aluminium Clad Invar Reinforced ("STACIR/AW") conductors comprise one or more layers of super thermal resistant aluminium zirconium alloy (AT3) wires stranded over a central core of stranded aluminium clad invar wires as per IEC 62004 and generally according to IEC 61089 and IEC 61232. Invar is a special Fe/Ni alloy having a very low coefficient of linear expansion.

STACIR/AW conductors are able to carry higher (200%) load current than traditional ACSR conductors as they are designed for continuous operating temperatures of up to 210°C. Beyond knee point STACIR/AW conductors experience a sag increase due to the expansion of the Invar core alone (extremely low value $\leq 3.7 \times 10^{-6}$ /°C) which controls sag at high operating temperatures. STACIR/AW conductors have increased corrosion resistance and have the same installation technique as ACSR conductors.

STACIR/AW conductors are used for overhead distribution and transmission lines and are particularly useful in new line applications requiring increased current. STACIR/AW conductors may be used at corrosive and coastal environments due to their good corrosion resistance. Conventional STACIR/AW conductors are typically rated up to a maximum operating temperature of 210°C.

Accordingly, known HTLS conductors enable high voltage overhead electric conductors to be operated at significantly higher temperatures up to a maximum operating temperature in the range 150-250°C.

It will be appreciated that there can potentially be significant power losses due to Ohmic loses if an electric conductor is operated at a maximum operating temperature in the range 150-250°C. If the temperature of a conductor begins to approach the maximum operating temperature of e.g. 150-250°C then the power operator is required to reduce the current being transmitted through the conductor in order to reduce Joule heating effects and thus ensure that the maximum safe operating temperature of the conductor is not exceeded. It will be appreciated that it is problematic for

a utility company to have to reduce the current being transmitted through the conductor especially as the reduction in transmitted power may coincide with increased consumer or business demand for electricity.

It will be appreciated that a high voltage overhead electric power line installed in a hot region of the world such as the Middle East may operate at high ambient temperatures e.g. > 40°C. Furthermore, the conductor may operate at a high maximum operating temperature in the range 150-250 °C. It will be apparent that such conductors will suffer from the problem of having high energy losses due to the high resistance of the conductor at such elevated temperatures. Furthermore, the ampacity (i.e. maximum current carrying capacity) of the conductor will be reduced.

The amount of heat generated in an overhead electric conductor due to Ohmic losses (or Joule heating) will follow the following relationship:

$$\text{Ohmic losses} = I^2R \qquad (1)$$

wherein I is the current passing through the overhead electric conductor and R is the electrical resistance of the conductor.

It will also be understood that the electrical resistance R of an electric conductor is temperature dependent. The electric resistance R of a conductor as a function of temperature may be determined by the following relationship:

$$R_\theta = R_{20}[1 + \alpha(\theta - 20)]\ \Omega/\text{km} \qquad (2)$$

wherein $R_\theta$ is the electrical DC resistance of the conductor at $\theta$°C, $R_{20}$ is the electrical DC resistance of the conductor at 20°C and $\alpha$ is the temperature coefficient of resistance of the conductor. For aluminium, $\alpha$ = 0.00403.

For completeness, cable ampacity or current carrying capacity is defined as the continuous maximum current that a conductor can carry at its maximum operating temperature.

Accordingly, a combination of Joule heating, high ambient temperatures, high solar heating and an absence of cooling due to air currents (e.g. wind) will result in the temperature of the conductor quickly rising. It will be understood that as the temperature of the conductor rises then in view of the positive correlation between temperature and resistance then the electrical resistance of the conductor will increase which will result in further electrical losses in the conductor (and hence further Joule heating). As a result, the temperature of the overhead electrical conductor will tend to increase yet further which only exacerbates the problem.

It is apparent, therefore, that operating an overhead electrical conductor in a particularly high temperature region of the world presents significant operational problems.

It is known to attempt to reduce the temperature of an overhead electric conductor by applying a coating to the conductor in order to reduce the temperature of the overhead conductor.

A first known approach involves utilising a black coating such as carbon black which has a high solar absorptivity of A = 0.96 (R = 0.04) but also a high emissivity of E = 0.96. The first known approach focuses upon enabling a conductor to lose thermal energy which it has gained.

WO 2015/105972 (Ranganathan) is an example of a variant of the first known approach and discloses an arrangement comprising a conductor having a single polymeric layer of a carbon black based polymer. An infra-red ("IR") reflective agent may be included in the carbon black layer. The emissivity E of the conductor is stated as being ≥ 0.85 and the overall absorptivity A is stated as being ≤ 0.3 (R ≥ 0.7).

WO 2014/025420 (Davis) discloses coating a bare conductor with a non-white (i.e. grey, black etc.) inorganic coating. It is stated that the non-white coating may have an emissivity E > 0.8 and a solar absorptivity coefficient A > 0.3 (R < 0.7). Colour may be defined with reference to CIE Publication 15.2(1986), section 4.2 and the disclosed CIE colour space which is organised as a cube with L*, a* and b* axes. The minimum for L* is 0 which represents perfect blackness. WO 2014/025420 (Davis) defines white as having a L* ≥ 80. Accordingly, the non-white coating disclosed in WO 2014/025420 (Davis) is stated as having a L* < 80 (i.e. is non-white).

A second different known approach is to coat the electric conductor with a white coating which has a low solar absorbance and hence a high solar reflectance.

For example, WO 2007/034248 (Simic) is an example of the second known approach and discloses coating a bare conductor with various white coatings which may in some cases have an emissivity E ≥ 0.7 and a coefficient of solar absorption A ≤ 0.3 (R ≥ 0.7).

One disclosed coating in WO 2007/034248 (Simic) is titanium oxide ($TiO_2$) white paint with potassium silicate. The titanium oxide in the white paint provides the coating with a high emissivity of E = 0.92. The absorptivity coefficient A is stated as being 0.17 and hence the reflectivity coefficient R is 0.83. The form of the titanium oxide is not stated in WO 2007/034248 (Simic) but it is assumed that the titanium oxide comprises rutile titanium dioxide ($TiO_2$) which is the most common form of titanium dioxide ($TiO_2$) and which is commonly used in white paint. Furthermore, as shown in Fig. 11 of the present application, rutile titanium dioxide ($TiO_2$) has a higher reflectance in the solar spectrum than the less

common form of titanium dioxide ($TiO_2$) namely anatase titanium dioxide ($TiO_2$).

In addition to the first known approach (black coating) and the second known approach (white coating) it is known to provide specific formulations of a coating in order to solve other problems.

For example, FR-2971617 (Nexans) discloses coating an electrical conductor with a polyvinylidene difluoride ("PVDF") polymeric coating in order to improve the age resistance of the coating. The PVDF polymeric coating is stated as having an emissivity $E \geq 0.85$ and a solar absorptivity $A \leq 0.10$ ($R \geq 0.90$). FR-2971617 (Nexans) states that fabricating a temperature reducing coating for an overhead electrical conductor using PVDF results in the electrical conductor having an improved resistance to ultraviolet radiation and hence having an improved resistance to aging.

The PVDF coating disclosed in FR-2971617 (Nexans) may be applied to a conductor in the form of a paint comprising an organic solvent into which PVDF as a binder is dissolved. An additive such as a white pigment (e.g. barium sulphate, magnesium oxide or aluminium oxide) may be added to the paint in order the achieve the stated emissivity and solar absorptivity values. According to a disclosed arrangement the liquid paint may comprise a liquid paint marketed by ARKEMA (RTM) referred to as KYNAR (RTM) 500 in which was added a white pigment comprising either magnesium oxide (E=0.9, A=0.09, R=0.81), aluminium oxide (E=0.9, A=0.09, R=0.81) or barium sulphate (E=0.88, A= 0.06, R=0.94).

In summary, it is known to coat an overhead conductor with a black coating in order to maximise the emissivity E of the conductor or alternatively to coat an overhead conductor with a white coating having a low solar absorbance A and hence a correspondingly high solar reflectance R.

However, the present inventors have tested conventional coatings and have found that both known approaches only result in a limited improvement in performance (i.e. a small reduction in temperature) or indeed in some cases they have found that e.g. a white coating without, for example, a thermal emitter additive actually results in worse performance than a bare uncoated conductor. Furthermore, some known white coatings and have been found to have a poor corrosion resistance and to discolour rapidly making them commercially impractical.

In particular, it has been suggested that a magnesium oxide white paint might be applied to an overhead conductor in order to reduce the operating temperature of the conductor. However, the present inventors have been unable to replicate any such alleged performance benefits and indeed theoretical calculations (reference is made to Table 1 and associated discussion below) and empirical testing of certain white painted conductors was found by the present inventors to result in an increase in the temperature of the conductor rather than a reduction of the temperature of the conductor.

The present inventors therefore consider that coating an overhead conductor with e.g. a magnesium oxide white paint *per se* is disadvantageous in terms of performance and highly problematic in terms of poor corrosion resistance.

Accordingly, there remains a need for an improved overhead conductor having an improved temperature reduction performance together with having a good or excellent corrosion resistance and which remains white for an extended period of time. Furthermore, various embodiments of the present invention are concerned with High Temperature Low Sag ("HTLS") conductors having a maximum operating temperature in the range 150-250°C. At such elevated temperatures problems with known coated conductors become particularly acute.

An improved overhead conductor capable of providing significant temperature reduction effects particularly at elevated operating temperatures in the range 150-250°C would result in a significant reduction in power losses coupled with a higher ampacity.

It will be understood by those skilled in the art that the ability to provide an improved overhead conductor capable of operating at elevated temperatures (e.g. in the range 150-250°C), with good corrosion resistance, which remains white for an extended period of time and having an improved temperature reduction performance would be of significant commercial interest and would represent a significant advance in the art.

A particularly significant problem with white coated conductors which is often overlooked is that white coatings will accrete dirt and will discolour over a period of time as the conductor is exposed to environmental pollutants or contaminants. As a result, the initial high solar reflectance can rapidly drop as the white coating discolours resulting in a significant reduction in performance. For example, it has been reported that materials having a high initial reflectance R of > 0.80 may experience a reduction of reflectance R by an average of 0.16 over three years.

Other studies have shown that the darkening effects on the solar reflectance of roof members resulted in a 11-59% reduction in solar reflectance after a period of 5-8 years of outdoor exposure.

Overhead transmission lines often operate in a desert environment such as the Gulf. Desert environments are often highly corrosive especially in the Gulf region. Corrosion in such regions is high due to salts from the desert and from the seawater in more costal areas the Gulf. These effects are compounded with other factors such as very high levels of ultra-violet, high temperatures (which accelerates corrosion kinetics) and atmospheric pollutants such as NOx and SOx.

Accordingly, in many cases, the steel cores of ACSR conductors can rapidly corrode in such hostile conditions. The steel cores can also suffer from surface pitting and crevice corrosion which further reduces the usable life of the conductor.

These phenomena are particularly pronounced on lines which are temporarily or permanently lightly loaded as

they in turn operate at near ambient temperature. Accordingly, at night when the dew point is reached, significant moisture can collect on the lines. The moisture then enters the core and rapidly accelerates the corrosion of the core often leading to the lines needing replacing after a relatively short service life.

It is therefore desired to provide an improved overhead conductor which is less prone to water ingress in a desert environment.

US 2018/0112078 discloses a coating composition including a silicate binder, a hydrophobically-modified filler, a film forming lubricant, and a crosslinking agent.

## SUMMARY OF THE PRESENT INVENTION

According to an aspect of the present invention there is provided a single coated conductor for an overhead power transmission or distribution line comprising:

one or more electrical conductors; and
a first coating provided on at least a portion of the one or more electrical conductors, wherein the first coating comprises:

(i) an inorganic alkali metal silicate resin;
(ii) from about 5 to about 25 wt.% of an optically active element which comprises rutile titanium dioxide ($TiO_2$) having an average particle size ("aps") of ≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane.

The first coating has an average thermal emissivity coefficient E ≥ 0.90 across the infrared spectrum 2.5-30.0 μm when tested in accordance with ASTM E408 (2013) and has an average solar reflectivity coefficient R ≥ 0.80 and/or an average solar absorptivity coefficient A ≤ 0.20 across the solar spectrum 0.3-2.5 μm when tested in accordance with ASTM E903 (2012).

Preferably, the first coating has an average thermal emissivity coefficient E ≥ 0.90 across the infrared spectrum 2.5-30.0 μm and has an average solar reflectivity coefficient R ≥ 0.90 and/or an average solar absorptivity coefficient A ≤ 0.10 across the solar spectrum 0.3-2.5 μm.

It will be apparent that according to various preferred embodiments it is desired to provide an overhead power transmission or distribution line which incorporates a corrosion barrier. In particular, it is desired to provide an overhead power transmission or distribution line which reduces the amount of salt laden moisture entering a steel core conductor during the night or early morning when the dew point is reached.

Various embodiments of the present invention are particularly directed at addressing corrosion problems inherent with a lightly loaded conductor overnight when the ambient temperature drops significantly and the dew point is reached. It will be understood that when the dew point is reached during the night then moisture in the atmosphere will start to condense and, for example, an overhead power transmission or distribution line which for reasons of lack of consumer demand for electricity is lightly loaded during the night time and without suffering from the heating effects of solar radiation may be operating at essentially ambient temperature.

Accordingly, salt laden moisture in the atmosphere may condense out of the atmosphere and onto the overhead power transmission or distribution line and the salt in the condensate can have a highly corrosive effect upon the steel core of the conductor.

According to various embodiments of the present invention a first coating is provided on one more electrical conductors which preferably comprise aluminium conductors optionally mounted around a steel inner core (for mechanical strength).

The first coating includes a superhydrophobic agent which is incorporated into an inorganic alkali metal silicate resin.

One method of achieving a corrosion barrier according to various embodiments of the present invention is by making the outer surface of the conductor superhydrophobic by, for example, applying a superhydrophobic coating to the one or more conductors.

The provision of a superhydrophobic coating or outer barrier to one or more electrical overhead power transmission or distribution lines results in an (outer) surface, preferably outer barrier surface, which is not fully wetted by water droplets.

Typically, hydrophobic surfaces are characterised as being surfaces with a water contact angle ("WCA") > 90°. In the present application this same definition is used i.e. a hydrophobic surface should be understood as meaning a

surface with a water contact angle ("WCA") > 90°.

Typically, superhydrophobic surfaces are characterised as being surfaces with a water contact angle ("WCA") > 150°. In the present application this same definition is used i.e. a superhydrophobic surface should be understood as meaning a surface with a water contact angle ("WCA") > 150°.

Contact angle hysteresis ("CAH") and water sliding angle ("WSA") are also important properties with respect to the superhydrophobicity of a material.

Contact angle hysteresis refers to the difference between advancing and receding contact angles.

Water sliding angle refers to the angle at which a droplet of water of a specified weight begins sliding off the substrate.

For both contact angle hysteresis ("CAH") and water sliding angle ("WSA"), a surface is superhydrophobic if the recorded contact angle hysteresis and/or the water sliding angle ("WSA") < 10°.

It will be understood that by minimizing the contact area between the corrosive liquids and the conductor surface, superhydrophobic surfaces can offer great resistance to corrosion.

One area of chemistry which has been developed by the present inventors and which is currently unpublished is the creation of coatings which cool overhead conductors by applying a coating to a conductor wherein the coating includes as one component an alkali metal silicate.

It will be appreciated by those skilled in the art that alkali metal silicate materials are inherently abundant and of low toxicity. Such materials are silica in nature and are inherently ultra-violet stable and represent an appropriate option for use as a coating material for overhead lines.

However, alkali metal silicate suffer from particular problems related to moisture resistance.

According to various embodiments the coating or mixture which is provided on the electrical conductor preferably comprises an inorganic resin or binder which preferably comprises a water based alkali metal silicate binder. Water based silicate coatings include a silicate anion stabilised by an alkali metal cation as shown in Eqn. 3 below:

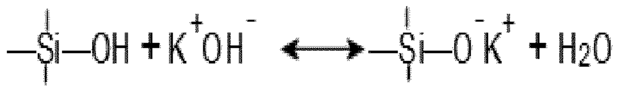

(3)

Eqn. 1 above illustrates equilibrium between undissociated silanol (Si-OH) groups and an alkali metal stabilised silicate anion (Si-$O^-$).

The alkali metal cation may comprise either sodium, potassium or lithium creating sodium silicate, potassium silicate or lithium silicate.

The above water-based coatings may be cured by a condensation reaction whereby the silicate anions condense to form a siloxane chain and produce water as shown below:

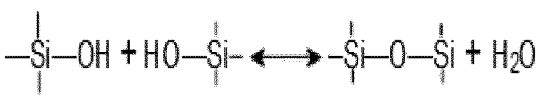

(4)

Eqn. 4 above shows equilibrium between two silanol groups and a siloxane bond, with water as a by-product.

The full removal of water is desirable for the silicate polymer to form completely i.e. the equilibrium needs to be driven completely to the right. Without the full removal of water, the film might resolubilise and the coating might degrade.

The coatings may be self-cured through the addition of divalent metal cations and/or may be post-cured with dilute phosphoric acid. Dried films may be assisted by the addition of divalent metal cations such as $Mg^{2+}$ and $Ca^{2+}$. The resultant coatings are moisture stable at ambient temperatures.

The alkali metal silicate film or coating may be cured. The coating may be subjected to a stepwise thermal curing process over a period of several hours. The thermal curing process may be for a period of 4-24 hours. The alkali metal silicate film or coating may be thermally cured for a period of < 1 hour, 1-2 hours, 2-3 hours, 3-4 hours, 4-5 hours, 5-6 hours, 6-7 hours, 7-8 hours, 8-9 hours, 9-10 hours, 10-11 hours, 11-12 hours, 12-13 hours, 13-14 hours, 14-15 hours, 15-16 hours, 16-17 hours, 17-18 hours, 18-19 hours, 19-20 hours, 20-21 hours, 21-22 hours, 22-23 hours, 23-24 hours or > 24 hours.

The thermal curing process may be arranged to dehydrate the silicate film or inorganic coating which also includes a superhydrophobic agent.

The thermal curing process may comprise a stepwise curing process in order to incrementally dehydrate the film and cause the coating or film or mixture to solidify or otherwise harden.

The final curing temperature may in the range 50-80°C. For example, the final curing temperature may be in the range 50-60°C, 60-70°C or 70-80°C. In particular, if the coating is applied to a conductor which has a maximum operating temperature of 80°C then the final curing temperature may be arranged to be ≤ 80°C, ≤ 90°C or ≤ 100°C.

According to other embodiments the final curing temperature may in the range 150-250°C. For example, the final curing temperature may be in the range 150-160°C, 160-170°C, 170-180°C, 180-190°C, 190-200°C, 200-210°C, 210-220°C, 220-230°C, 230-240°C or 240-250°C. In particular, if the coating is applied to a conductor which has a maximum operating temperature of 250°C then the final curing temperature may be arranged to be ≤ 250°C, ≤ 260°C, ≤ 270°C, ≤ 280°C, ≤ 290°C or ≤ 300°C.

The silicate coating which is applied to conductors according to various arrangements may have a long lifetime due to their purely inorganic nature, which makes degradation by ultra-violet and general atmospheric exposure very limited.

The silicate inorganic coating which includes a superhydrophobic agent is also particularly effective as a self-cleaning layer which maintains the substantially white coating to a high level of whiteness for an extended period of time.

According to various embodiments the coating which is preferably applied to a conductor helps to reduce the accretion of dirt which would otherwise reduce solar reflectance. By making the coatings self-cleaning by incorporating a superhydrophobic agent into the inorganic alkali metal silicate resin are able to maintain increased solar reflectance overtime. Self-cleaning can be achieved by making the surfaces superhydrophobic.

Beneficially, the superhydrophobic coating is also self-cleaning as inspired by the lotus leaf structure. The self-cleaning functionality can be attributed to the rolling water droplets underpinned by the low water sliding angle. This is a beneficial synergy as it allows for the solar reflectance to remain highly solar reflective over time.

One aspect of the present invention is that a coating is provided comprising an inorganic alkali metal silicate resin which incorporates a superhydrophobic agent. The inorganic alkali metal silicate resin by itself has many advantages over other conventional or known coatings. In particular, the resin has a high level of ultra-violet durability which is particularly important if the coating is to be deployed on a power transmission or distribution line located in a desert or other location where the line will be exposed to high levels of ultra-violet radiation.

However, for all the advantages of using an inorganic alkali metal silicate resin one problem with using such a coating per se is that inorganic alkali metal silicate resins can suffer from a low level of moisture resistance for the reasons explained above.

Accordingly, incorporating a superhydrophobic agent into such a resin has the beneficial effect of significantly improving the moisture resistance of the alkali metal silicate resin thereby significantly improving the corrosion resistance of the coating which is otherwise particularly vulnerable to exposure salt laden moisture during the night when a low load power line may be operating at ambient temperature and may be at a temperature below the dew point.

Accordingly, the coating according to the present invention is superhydrophobic which in turn simultaneously acts as a corrosion barrier to the electrical conductor which would otherwise be damaged from a highly corrosive desert environment and at the same time the superhydrophobic nature of the coating means that the coating is inherently self-cleaning i.e. it actively prevents the accretion of dirt or other pollutants which would have the effect of discolouring the coating i.e. changing the coating from white to off-white. As will be understood by those skilled in the art, and for the reasons given above, according to the preferred embodiment the coating preferably has a high level of whiteness which is preferably maintained for an extended period of time (years) thereby helping to ensure that a high level of solar reflectance is maintained over an extended period of time.

The inorganic alkali metal silicate resin preferably comprises potassium silicate ($K_2SiO_3$).

The inorganic alkali metal silicate resin preferably comprises sodium silicate.

The sodium silicate preferably comprises sodium metasilicate ($Na_2SiO_3$), sodium orthosilicate ($Na_4SiO_4$) or sodium pyrosilicate ($Na_6Si_2O_7$).

The inorganic alkali metal silicate resin preferably comprises lithium silicate ($Li_2SiO_3$).

The optically active element preferably comprises rutile titanium dioxide ($TiO_2$), silicon dioxide ($SiO_2$), Copper Oxide (CuO) or cerium hydroxide ($Ce(OH)_3$).

The rutile titanium dioxide ($TiO_2$) has an average particle size ("aps"): (i) ≥ 100 nm; (ii) 100-200 nm; (iii) 200-300nm; (iv) 300-400 nm; (v) 400-500 nm; (vi) 500-600 nm; (vii) 600-700 nm; (viii) 700-800 nm; (ix) 800-900 nm; and (x) 900-1000 nm.

The optically active element preferably comprises rutile titanium dioxide ($TiO_2$) having an average particle size ("aps") of ≥ 100 nm.

The rutile titanium dioxide ($TiO_2$) preferably comprises substantially spherical particles.

The optically active agent preferably comprises sodium aluminosilicate ($AlNa_{12}SiO_5$).

The optically active agent preferably comprises a white filler.

The white filler comprises: (i) magnesium oxide (MgO); (ii) calcium oxide (CaO); (iii) aluminium oxide ($Al_2O_3$); (iv) zinc oxide (ZnO); (v) calcium carbonate (CaCOs); (vi) aluminium silicate ($Al_2SiO_5$); (vii) kaolin ($Al_2O_3.2SiO_2$); (viii) titanium dioxide ($TiO_2$); or (viii) barium sulphate ($BaSO_4$).

The inorganic alkali metal silicate resin preferably comprises a water based coating which is dehydrated, dried or cured after the first coating is provided on at least a portion of the one or more electrical conductors.

The superhydrophobic agent preferably comprises surface functionalised silica nanoparticles.

The surface functionalised silica nanoparticles are surface functionalised with one or more silane coupling agents to impart superhydrophobicity.

The one or more silane coupling agents comprise hexamethyldisilazane (HMDS), tetraethyl orthosilicate (TEOS), tetramethyl orthosilicate (TMOS), Methyltrimethoxy silane (MTMS), vinyltrimethoxysilane (VTMS), phenyltrimethoxysilane (PTMS), 3-Aminopropyltriethoxysilane (APS), trimethylchlorosilane (TMCS), triethoxyoctylsilane (C8-TEOS), 3-(2-Aminoethylamino)propyldimethoxymethylsilane (AEAPS), 3-Glycidyloxypropyl)trimethoxysilane (GPTMS), 3-(Methacryloyloxy)propyl]trimethoxysilane (MAPTS), hexadecyltrimethoxysilane (C16-silane), (3-Mercaptopropyl)trimethoxysilane (MPTMS), triethoxyphenylsilane (phenyl-silane) and 1H,1 H,2H,2H-Perfluorooctyltriethoxysilane (FAS), trichloro(1H,1 H,2H,2H-perfluorooctyl)silane, 1H,1H,2H,2H-perfluorodecyltriethoxysilane (PFDTES) or any other appropriate silane.

The superhydrophobic agent preferably comprises one or more functional polysiloxanes which may include siloxane resins functionalised with amino groups, or hydrophobic silanes including hexamethyldisilazane (HMDS), tetraethyl orthosilicate (TEOS), tetramethyl orthosilicate (TMOS), Methyltrimethoxy silane (MTMS), vinyltrimethoxysilane (VTMS), phenyltrimethoxysilane (PTMS), 3-Aminopropyltriethoxysilane (APS), trimethylchlorosilane (TMCS), triethoxyoctylsilane (C8-TEOS), 3-(2-Aminoethylamino)propyldimethoxymethylsilane (AEAPS), 3-Glycidyloxypropyl)trimethoxysilane (GPTMS), 3-(Methacryloyloxy)propyl]trimethoxysilane (MAPTS), hexadecyltrimethoxysilane (C16-silane), (3-Mercaptopropyl)trimethoxysilane (MPTMS), triethoxyphenylsilane (phenyl-silane) and 1H,1H,2H,2H-Perfluorooctyltriethoxysilane (FAS), trichloro(1H,1H,2H,2H-perfluorooctyl)silane, 1H,1H,2H,2H-perfluorodecyltriethoxysilane (PFDTES) or any other appropriate silane.

The superhydrophobic agent preferably comprises micro powder polymethylsilsesquioxane.

The first coating further preferably comprises a photocatalytic agent.

The photocatalytic agent preferably comprises $\geq$ 75%, $\geq$ 80%, $\geq$ 85%, $\geq$ 90%, $\geq$ 95% or $\geq$ 99% wt% anatase titanium dioxide ($TiO_2$).

The photocatalytic agent preferably comprises $\geq$ 70 wt% anatase titanium dioxide ($TiO_2$) having an average particle size ("aps") $\leq$ 100 nm.

The first coating further preferably comprises an organic adjunct or additional resin.

The inorganic alkali metal silicate resin and the organic adjunct or additional resin together form a mixed binder system.

The organic adjunct or additional resin preferably comprises a poly(diorganosiloxane).

The organic adjunct or additional resin further preferably comprises an acrylic resin.

The first coating further preferably comprises an emissive agent.

The emissive agent preferably comprises an inorganic filler.

The inorganic filler preferably comprises either: (i) calcium carbonate (CaCOs); (ii) calcined kaolin ($Al_2O_3.2SiO_2$); or (iii) talc (hydrated magnesium silicate ($H_2Mg_3(SiO_3)_4$ or $Mg_3Si_4O_{10}(OH)_2$)).

The first coating further preferably comprises a curing agent.

The curing agent is selected from the group consisting of: (i) zinc oxide (ZnO); (ii) zinc stearate ($C_{36}H_{70}O_4Z_n$); (iii) trimagnesium orthophosphate ($Mg_3O_6P_2$); (iv) magnesium oxide (MgO); (v) magnesium carbonate ($MgCO_3$); and (vi) magnesium hydroxide ($Mg(OH)_2$).

The first coating further preferably comprises a rheology agent.

The rheology agent may be selected from the group consisting of: (i) methyl cellulose; (ii) hydroxyethyl cellulose ("HEC" $CH_2CH_2OH$); (iii) carboxy methyl cellulose ("CMC"); (iv) hydroxy propyl cellulose ("HPC"); (v) hydrophobically modified hydroxyethyl cellulose; (vi) an alkali swellable emulsion ("ASE"); (vii) hydrophobic alkali swellable emulsions ("HASE"); (viii) a hydrophobically modified ethylenoxide urethane rheology modifier ("HUER"); (ix) one or more organoclays; (x) one or more polyamides; and (xi) one or more fumed silicas.

The first coating further preferably comprises an ultra-violet stabiliser.

The ultra-violet stabiliser preferably comprises 2-(2H-benzotriazol-2-yl)-p-cresol, 2- -(4,6-bis-(2,4-dimethylphenyl)-1,3,5-triazin-2-yl)-5-(octyloxy)-phenol or a hindered amine light stabiliser ("HALS") such as bis(1-octyloxy-2,2,6,6-tetramethyl-4-piperidyl)sebacate or bis(1,2,2,6,6-pentamethyl-4-piperidyl)sebacate.

The first coating is substantially white in colour and has a $L^* \geq 80$, $L^* \geq 85$, $L^* \geq 90$ or a $L^* \geq 95$.

The first coating may has an average thermal emissivity coefficient $E \geq 0.90$ across the infrared spectrum 2.5-30.0 $\mu$m when tested in accordance with ASTM E408 (2013) and an average solar reflectivity coefficient $R \geq 0.80$ and/or an average solar absorptivity coefficient $A \leq 0.20$ across the solar spectrum 0.3-2.5 $\mu$m when tested in accordance with ASTM E903 (2012).

The first coating may have an average thermal emissivity coefficient $E \geq 0.90$ across the infrared spectrum 2.5-30.0 $\mu$m when tested in accordance with ASTM E408 (2013) and an average solar reflectivity coefficient $R \geq 0.90$

and/or an average solar absorptivity coefficient A ≤ 0.10 across the solar spectrum 0.3-2.5 μm when tested in accordance with ASTM E903 (2012).

The single coated conductor when tested in accordance with ANSI C119.4-2004 operates at a lower temperature than the temperature of the same one or more electrical conductors without the first coating.

The one or more electrical conductors are arranged and adapted to transmit, in use, electrical power at a voltage ≥ 2 kV, 2-50 kV, 50-100 kV, 100-150 kV, 150-200 kV, 200-250 kV, 250-300 kV, 300-350 kV, 350-400 kV, 400-450 kV, 450-500 kV, 500-550 kV, 550-600 kV, 600-650 kV, 650-700 kV, 700-750 kV, 750-800 kV or ≥ 800 kV.

The single coated conductor is arranged and adapted to operate, in use, up to a maximum operating temperature of 80°C, 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C or > 300 °C.

The single coated conductor is arranged and adapted to be suspended, in use, between overhead pylons.

The one or more electrical conductors comprise one or more metallic conductors.

The one or more electrical conductors comprise one or more metal cables.

The one or more metallic conductors and/or the one or more metal cables comprise aluminium or an aluminium alloy.

The one or more electrical conductors comprise one or more: (i) All Aluminium Conductors ("AAC"); (ii) All Aluminium Alloy Conductors ("AAAC"); (iii) Aluminium Conductor Steel Reinforced ("ACSR") conductors; (iv) Aluminium Conductor Aluminium Clad Steel Reinforced ("ACSR/AW") conductors; (v) Areal Bundled Cables ("ABC"); (vi) High Temperature Low Sag ("HTLS") conductors; (vii) Aluminium Conductor Composite Core ("ACCC") conductors; (viii) Aluminium Conductor Steel Supported ("ACSS/MA") conductors; (ix) Aluminium Conductor Aluminium Clad Steel Supported ("ACSS/AW") conductors; (x) Thermal Resistant Aluminium Alloy Conductor Steel Reinforced ("TACSR") conductors; (xi) Thermal Resistant Aluminium Alloy Conductor Aluminium Clad Steel Reinforced ("TACSR/AW') conductors; or (xii) Super Thermal Resistant Aluminium Alloy Conductor Aluminium Clad Invar Reinforced ("STACIR/AW') conductors.

The first coating has a thickness in the range 1-10 μm, 10-20 μm, 20-30 μm, 30-40 μm, 40-50 μm, 50-60 μm, 60-70 μm, 70-80 μm, 80-90 μm, 90-100 μm, 100-110 μm, 110-120 μm, 120-130 μm, 130-140 μm, 140-150 μm, 150-160 μm, 160-170 μm, 170-180 μm, 180-190 μm, 190-200 μm, 200-300 μm, 300-400 μm, 400-500 μm, 500-600 μm, 600-700 μm, 700-800 μm, 800-900 μm, 900-1000 μm or > 1 mm.

According to another aspect there is provided an overhead conductor, a high voltage overhead conductor or an electric power or distribution line comprising one or more single coated conductors as claimed in any preceding claim.

According to another aspect there is provided a kit for coating one or more electrical conductors to form a single coated conductor for an overhead power transmission or distribution line, the kit comprising:

a first part comprising: (i) an inorganic alkali metal silicate resin; (ii) an optically active element which comprises rutile titanium dioxide ($TiO_2$) having an average particle size ("aps") of ≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and (iii) a superhydrophobic agent which comprises surface functionalised silica nanoparticles; one or more functional polysiloxanes; or micro powder polymethylsilsesquioxane; and

a second part comprising: (i) a curing agent;

wherein, in use, the first and second parts are mixed together to form a first mixture and the first mixture is then sprayed, painted, coated or applied on to at least a portion of one or more electric conductors to form a first coating, wherein the first coating comprises from about 5 to about 25 wt.% of the optically active element and has an average thermal emissivity coefficient E ≥ 0.90 across the infrared spectrum 2.5-30.0 μm when tested in accordance with ASTM E408 (2013) and an average solar reflectivity coefficient R ≥ 0.80, preferably R ≥ 0.90 and/or an average solar absorptivity coefficient A ≤ 0.20, preferably A ≤ 0.10 across the solar spectrum 0.3-2.5 μm when tested in accordance with ASTM E903 (2012).

The inorganic alkali metal silicate resin preferably comprises a water based inorganic alkali metal silicate resin.

The first part further preferably comprises one or more of: (i) a photocatalytic agent; (ii) an adjunct or additional resin; (iii) a emissive agent; (iv) a curing agent; (v) a rheology agent; and (vi) an ultra-violet stabiliser.

The second part further preferably comprises one or more of: (i) a photocatalytic agent; (ii) an adjunct or additional resin; (iii) a emissive agent; (iv) a curing agent; (v) a rheology agent; and (vi) an ultra-violet stabiliser.

The kit preferably further comprises a first device for spraying, painting or applying the first mixture on to at least a portion of one or more electric conductors to form the first coating.

According to another aspect there is provided a method of producing a first coating for coating an overhead power transmission or distribution line, wherein the method preferably comprises the step of:

(i) hydrolysing an alkali metal silicate either in the presence of an acid or by using an ion exchange resin in order

to form a silicic acid hydrogel.

The method preferably further comprises the step of:
(ii) performing solvent exchange in order to improve the viscosity of the hydrogel and/or to improve the ability of the hydrogel to disperse pigments.
The method preferably further comprises the step of:
(iii) silyl modification of the hydrogel in order to impart superhydrophobicity.
The method preferably further comprises dispersing an optically active element into the hydrogel.
The method preferably further comprises dispersing a superhydrophobic agent into the hydrogel.
The method preferably further comprises dispersing an optically active element into the hydrogel.
The method preferably further comprises dispersing a photocatalytic agent into the hydrogel.
The method preferably further comprises dispersing an organic adjunct or additional resin into the hydrogel.
The method preferably further comprises dispersing an emissive agent into the hydrogel.
The method preferably further comprises dispersing a curing agent into the hydrogel.
The method preferably further comprises dispersing a rheology agent into the hydrogel.
The method preferably further comprises dispersing an ultra-violet stabiliser into the hydrogel.
According to another aspect there is provided a method of coating one or more electrical conductors to form a single coated conductor for an overhead power transmission or distribution line comprising:

spraying, painting, coating or applying a first coating on to at least a portion of one or more electrical conductors, wherein the first coating comprises:

(i) an inorganic alkali metal silicate resin;
(ii) from about 5 to about 25 wt.% of an optically active element which comprises rutile titanium dioxide ($TiO_2$) having an average particle size ("aps") of ≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane;

wherein the first coating has an average thermal emissivity coefficient E ≥ 0.90 across the infrared spectrum 2.5-30.0 μm and has an average solar reflectivity coefficient R ≥ 0.80 and/or an average solar absorptivity coefficient A ≤ 0.20 across the solar spectrum 0.3-2.5 μm;
preferably wherein the first coating has an average thermal emissivity coefficient E ≥ 0.90 across the infrared spectrum 2.5-30.0 μm and has an average solar reflectivity coefficient R ≥ 0.90 and/or an average solar absorptivity coefficient A ≤ 0.10 across the solar spectrum 0.3-2.5 μm.

The inorganic alkali metal silicate resin preferably comprises a water based inorganic alkali metal silicate resin and the method further preferably comprises dehydrating, drying or curing the inorganic alkali metal silicate resin.
The method preferably further comprises thermally curing the first coating.
According to another aspect there is provided a method of retro-fitting an overhead power transmission or distribution line comprising one or more electrical conductors, the method comprising:

spraying, painting, coating or applying a first coating on to at least a portion of one or more electrical conductors, wherein the first coating comprises:

(i) an inorganic alkali metal silicate resin;
(ii) from about 5 to about 25 wt.% of an optically active element which comprises rutile titanium dioxide ($TiO_2$) having an average particle size ("aps") of ≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane;

wherein the first coating has an average thermal emissivity coefficient E ≥ 0.90 across the infrared spectrum 2.5-30.0 μm and has an average solar reflectivity coefficient R ≥ 0.80 and/or an average solar absorptivity coefficient A ≤ 0.20 across the solar spectrum 0.3-2.5 μm;
preferably wherein the first coating has an average thermal emissivity coefficient E ≥ 0.90 across the infrared

spectrum 2.5-30.0 μm and has an average solar reflectivity coefficient R ≥ 0.90 and/or an average solar absorptivity coefficient A ≤ 0.10 across the solar spectrum 0.3-2.5 μm.

The inorganic alkali metal silicate resin preferably comprises a water based inorganic alkali metal silicate resin and the method further preferably comprises dehydrating, drying or curing the inorganic alkali metal silicate resin.

The method preferably further comprises thermally curing the first coating.

The method preferably further comprising drying, allowing to dry, air wiping, heating, subjecting to a direct flame or curing the first coating.

According to various embodiments the first coating may have an average thermal emissivity coefficient E in the range 0.90-0.91, 0.91-0.92, 0.92-0.93, 0.93-0.94, 0.94-0.95, 0.95-0.96, 0.96-0.97, 0.97-0.98, 0.98-0.99 or 0.99-1.00 across the infrared spectrum 2.5-30.0 μm.

According to various embodiments the first coating may have an average solar reflectivity coefficient R in the range 0.80-0.81, 0.81-0.82, 0.82-0.83, 0.83-0.84, 0.84-0.85, 0.85-0.86, 0.86-0.87, 0.87-0.88, 0.88-0.89 or 0.89-0.90 and/or an average solar absorptivity coefficient A in the range 0.10-0.11, 0.11-0.12, 0.12-0.13, 0.13-0.14, 0.14-0.15, 0.15-0.16, 0.16-0.17, 0.17-0.18, 0.18-0.19 or 0.19-0.20 across the solar spectrum 0.3-2.5 μm.

According to various embodiments the first coating may have an average solar reflectivity coefficient R in the range 0.90-0.91, 0.91-0.92, 0.92-0.93, 0.93-0.94, 0.94-0.95, 0.95-0.96, 0.96-0.97, 0.97-0.98, 0.98-0.99 or 0.99-1.00 and/or an average solar absorptivity coefficient A in the range 0.00-0.01, 0.01-0.02, 0.02-0.03, 0.03-0.04, 0.04-0.05, 0.05-0.06, 0.06-0.07, 0.07-0.08, 0.08-0.09 or 0.09-0.10 across the solar spectrum 0.3-2.5 μm.

The alkali (or alkaline) metal silicate preferably comprises potassium silicate ($K_2SiO_3$). Alternatively, the alkali (or alkaline) metal silicate may comprise sodium silicate. The sodium silicate may comprise sodium metasilicate ($Na_2SiO_3$), sodium orthosilicate ($Na_4SiO_4$) or sodium pyrosilicate ($Na_6Si_2O_7$).

According to an embodiment the alkali (or alkaline) metal silicate may comprise lithium silicate ($Li_2SiO_3$).

According to another embodiment the alkali (or alkaline) metal silicate may comprise calcium silicate ($Ca_2SiO_4$) or calcium orthosilicate.

According to another embodiment the alkali (or alkaline) metal silicate may comprise magnesium aluminium silicate ($AlMgSiO_4$).

The alkali metal silicate preferably comprises a water based coating which is dehydrated, dried or cured after the first coating is provided on at least a portion of the one or more electrical conductors. The water based coating may be dehydrated or dried by thermal curing.

The present invention represents a significant advance in the art as an overhead conductor according to the present invention has both a high average thermal emissivity coefficient E (i.e. E ≥ 0.90) across the infrared spectrum 2.5-30.0 μm and also a high average solar reflectivity coefficient R (i.e. R ≥ 0.80, preferably R ≥ 0.90) across the solar spectrum 0.3-2.5 μm.

It will be recalled that known conductors having a single black coating have a high thermal emissivity coefficient E but a poor solar reflectivity coefficient R. Conversely, other known conductors having a single white coating have a high solar reflectivity coefficient R but a poor thermal emissivity coefficient E.

Accordingly, a single coated conductor according to the present invention has a significantly improved performance in terms of temperature reduction performance relative to conventional single coated conductors. The single coated conductor according to the present invention also has a good or excellent corrosion resistance in contrast to some known single coatings such as magnesium oxide white paint.

According to various embodiments an optional photocatalytic agent may be included into the inorganic alkali metal silicate resin. The photocatalytic agent preferably comprising ≥ 70 wt% anatase titanium dioxide ($TiO_2$) and preferably has an average particle size ≤ 100 nm which results in the photocatalytic conversion of any organic matter which may have adhered or which may otherwise adhere to the coating. In particular, when anatase titanium dioxide ($TiO_2$) is excited by ultraviolet light it creates hydroxyl (OH-) and superoxide ($O_2^-$) radicals which will decompose surface organic matter into carbon dioxide ($CO_2$) and water ($H_2O$).

According to an embodiment the photocatalytic agent may comprise a commercially available form of titanium dioxide ($TiO_2$) known as DEGUSSA (EVONIK) (RTM) P25 or AEROXIDE (RTM) $TiO_2$ P25.

DEGUSSA (EVONIK) (RTM) P25 titanium oxide ($TiO_2$) is a conventional powdered form of titanium dioxide ($TiO_2$). The properties of P25 titanium oxide have been investigated in detail and reference is made to the Journal of Photochemistry and Photobiology A: Chemistry, 216(2-3): 179-182 which found that the powder comprised titanium dioxide ($TiO_2$) in the ratio anatase:rutile:amorphous 78:14:8.

It is noted that DEGUSSA (EVONIK) (RTM) P25 is commonly reported as comprising 70:30, 80:20 or 85:15 anatase:rutile crystallites and that no reference is often made to the presence of the amorphous form of titanium dioxide ($TiO_2$).

It has been reported that the average particle size ("aps") of the anatase titanium dioxide ($TiO_2$) in DEGUSSA (EVONIK) (RTM) P25 is approximately 85 nm and that the average particle size of rutile titanium dioxide ($TiO_2$) in

DEGUSSA (EVONIK) (RTM) P25 is approximately 25 nm.

Titanium dioxide ($TiO_2$) is particularly preferred as a photocatalyst according to embodiments of the present invention for decomposition of organic pollutants because it is chemically stable and biologically benign. The band gap of titanium dioxide ($TiO_2$) is larger than 3 eV (~3.0 for rutile and ~3.2 for anatase) thereby making pure titanium dioxide ($TiO_2$) primarily active for ultra-violet light.

It is believed that the specific phase mixture of different polymorphs of titanium dioxide ($TiO_2$) as are present in DEGUSSA (EVONIK) (RTM) P25 have a synergistic effect and an increased photocatalytic activity is observed compared to pure phases (i.e. either relative to pure rutile titanium dioxide ($TiO_2$) or to pure anatase titanium dioxide ($TiO_2$)).

It is also generally accepted that pure anatase titanium dioxide ($TiO_2$) exhibits a higher photocatalytic activity than pure rutile titanium dioxide ($TiO_2$).

It is known that anatase titanium dioxide ($TiO_2$) has a larger band gap than rutile titanium dioxide ($TiO_2$). While this reduces the light that can be absorbed, it may raise the valence band maximum to higher energy levels relative to redox potentials of adsorbed molecules. Accordingly, the oxidation power of electrons may be increased and electron transfer may be facilitated from the titanium dioxide ($TiO_2$) to the adsorbed molecules.

The present invention integrates solar reflectivity and self-cleaning superhydrophobic activity into a single layer. Not only does this save on application complexity/expense, but it also avoids self-cleaning top coats materially affecting the optics of the underlying white reflective coating.

A single conductor according to the present invention has a significantly improved performance at lower temperatures (e.g. up to 80°C).

It is not known to provide a single coated conductor which is arranged to have both a very high emissivity E ($E \geq 0.90$) and also a very high solar reflectance ($R \geq 0.80$, preferably $R \geq 0.90$) coupled with good or excellent corrosion resistance and a superhydrophobic agent which is effective at converting organic matter (which may accrete on the conductor) into carbon dioxide and water.

According to various embodiments the emissivity E of the single coated conductor may be such that $E \geq 0.91$, $E \geq 0.92$, $E \geq 0.93$, $E \geq 0.94$, $E \geq 0.95$, $E \geq 0.96$, $E \geq 0.97$, $E \geq 0.98$ or $E \geq 0.99$. Similarly, according to various embodiments the reflectance R may be such that $R \geq 0.81$, $R \geq 0.82$, $R \geq 0.83$, $R \geq 0.84$, $R \geq 0.85$, $R \geq 0.86$, $R \geq 0.87$, $R \geq 0.88$ or $R \geq 0.89$. Preferably, the reflectance R is such that $R \geq 0.91$, $R \geq 0.92$, $R \geq 0.93$, $R \geq 0.94$, $R \geq 0.95$, $R \geq 0.96$, $R \geq 0.97$, $R \geq 0.98$ or $R \geq 0.99$.

Differences between various known conventional approaches and the approach according to the present invention will now be discussed in further detail below.

WO 2015/105972 (Ranganathan) discloses an arrangement comprising a conductor having a single polymeric layer of a carbon black based polymer which is a good infra-red emitter. The emissivity E is stated as being $\geq 0.85$ (i.e. relatively good) but the absorptivity A is stated as only being $\leq 0.3$ (i.e. poor).

In contrast, the single coated conductor according to the present invention has an improved emissivity $E \geq 0.90$ compared with the coating disclosed in WO 2015/105972 (Ranganathan) which has a lower emissivity $E \geq 0.85$. Furthermore, importantly a conductor according to the present invention also has a significantly improved solar reflectance ($R \geq 0.80$, preferably $R \geq 0.90$) which is significantly superior to the reflectance of the conductor disclosed in WO 2015/105972 (Ranganathan) which is stated as having a much lower reflectance of $R \geq 0.70$ (based upon a stated absorptivity coefficient $A \leq 0.3$).

US 2015/0194237 (Ranganathan) discloses a conductor having a self-cleaning coating comprising a photocatalyst such as anatase titanium oxide. However, the photocatalyst is not provided in a binder - the self-cleaning layer is described as being free of polymer and the photocatalyst is described as being free from a polymeric binder. Accordingly, US 2015/0194237 (Ranganathan) does not disclose providing a coating comprising an inorganic binder comprising an alkali metal silicate. US 2015/0194237 (Ranganathan) does not disclose providing a coating which has both a high thermal emissivity $E \geq 90\%$ in the infrared and also a high solar reflectivity $R \geq 90\%$ in the solar spectrum 0.3-2.5 $\mu$m.

WO 2014/025420 (Davis) discloses coating an overhead conductor with a single layered coating comprising an inorganic binder (e.g. metal silicate or colloidal silica ($SiO_2$)) and a heat radiating agent such as boron carbide ($B_4C$), titanium dioxide ($TiO_2$) or silicon dioxide ($SiO_2$). A number of different coatings are disclosed as having been formulated and tested.

Out of all the various different formulations disclosed in WO 2014/025420 (Davis) it is considered that perhaps the closest formulation to the present invention is coating #7 which comprises a silicate binder (20% weight), silicon dioxide (37% weight), boron carbide (3% weight) and water (40% weight). The overall known coating has a dark grey colour with a L* of 43.495. The dark grey coating is stated as having an emissivity E of 0.882 which is lower than the requirements of the present invention namely that the conductor has a higher emissivity coefficient $E \geq 0.90$.

Furthermore, the solar absorptivity A of the dark grey coating #7 disclosed in WO 2014/025420 (Davis) is stated as being A = 0.86 which is significantly higher than the requirements of the present invention which requires that the solar absorptivity coefficient $A \leq 0.20$, preferably $A \leq 0.10$. Equally, the solar reflectance of the dark grey coating #7 is R = 0.14 which is significantly lower than the requirements of the present invention which requires the conductor to have

a high solar reflectance R ≥ 0.80, preferably R ≥ 0.90.

Accordingly, the various compositions disclosed in WO 2014/025420 (Davis) are not considered to be particularly relevant to the present invention.

US 2016/0032107 (Siripurapu) discloses a two part compositional kit for creating a coating to coat a conductor with a single coating. The first part of the kit comprises a filler (2-55% by dry weight of the compositional kit), a cross-linking agent (5-20% by dry weight of the compositional kit) and an emissivity agent (6-42% by dry weight of the compositional kit). The filler may comprise quartz or aluminium oxide. The cross-linking agent may comprise magnesium hydroxide ($Mg(OH)_2$), magnesium oxide (MgO) or zinc oxide (ZnO). The emissivity agent may comprise silicon dioxide ($SiO_2$) or titanium dioxide ($TiO_2$). The second part of the kit comprises an alkali earth metal silicate binder (20-65% by dry weight of the compositional kit). The alkali earth metal silicate binder may comprise potassium silicate sodium silicate, lithium silicate, calcium silicate or magnesium aluminium silicate.

Two examples are given in US 2016/0032107 (Siripurapu). Example #1 has an emissivity E of 0.86 which is less than the requirements of the present invention (E ≥ 0.90). Furthermore, example #1 has a high solar absorptivity A of 0.55 which is significantly higher than the requirements of the present invention which requires the absorptivity coefficient A ≤ 0.20, preferably A ≤ 0.10.

Paragraphs [0004] and [0006] of US 2016/0032107 (Siripurapu) teach that different white coatings are known which have a much lower thermal emissivity E ≥ 70% (in the infrared) and a much lower solar reflectivity R ≥ 70% (absorptivity ≤ 30%) in the solar spectrum 0.3-2.5 μm than a coating according to the present invention.

It will be understood by those skilled in the art that a conventional white coated conductor having an E ≥ 70% and a solar reflectivity R ≥ 70% is significantly inferior to a (white) coated conductor according to the present invention which has an E ≥ 90% and a solar reflectivity R ≥ 80%, preferably R ≥ 90%.

According to US 2016/0032107 (Siripurapu) a coating composition for a conductor is disclosed comprising 6-42 wt% of an emissivity agent which may comprise titanium dioxide. Two specific examples are given on page 7 ("Example 1" and "Example 2") and reference is made to Table 1. It is assumed from the context that the titanium dioxide is provided in the rutile form not the less common anatase form according to the present invention especially as no mention is made of photocatalysts. The rutile form as assumed to be disclosed in US 2016/0032107 (Siripurapu) is likely to have an average particle size larger than 100 nm. The emissivity and solar absorptivity of Example 1 as disclosed in US 2016/0032107 (Siripurapu) was tested and the results are shown in Table 3 of US 2016/0032107 (Siripurapu). It will be noted that the emissivity E is stated as being 86% which is lower than the ≥ 90% requirement according to the present invention. The solar absorptivity A is also stated as being 55% and hence the corresponding solar reflectivity R is 45%. It will be apparent, therefore, that whilst the emissivity E is high (86%), the solar reflectivity R at 45% is much lower than the requirement of the present invention which requires a solar reflectivity R ≥ 80%, preferably R ≥ 90%.

Accordingly, US 2016/0032107 (Siripurapu) does not disclose providing a single coated conductor having an emissivity E ≥ 90% and a solar reflectivity R ≥ 80%, preferably R ≥ 90%, as is required by the present invention.

US 2005/0266981 (Nakajima) discloses providing a liquid composition that includes a photocatalytic material dispersed in a hydrophilic binder that includes an essentially completely hydrolysed organosilicate (paragraph [0002]). According to paragraph [0093] the liquid composition may be applied to a high voltage cable. However, the present invention relates to a single coated conductor for an overhead power transmission or distribution line. Applying a liquid composition as disclosed in US 2005/0266981 (Nakajima) to a high voltage cable would result in an electrical conductor which had two coatings - a first inner insulating coating and a second outer hydrophilic coating and as such would not meet the requirements of the present invention.

WO 2007/034248 (Simic) discloses a number of white coatings. One disclosed coating is magnesium oxide aluminium oxide paint. This is reported as having a low absorptivity and a high emissivity. The present invention is different in that according to the present invention a superhydrophobic agent is included. Furthermore, magnesium oxide aluminium oxide paint has been tested but has been found to have an inferior performance to that stated in WO 2007/034248 (Simic). The paint is also problematic to apply and cure and is not considered to be durable. Accordingly, magnesium oxide aluminium oxide paint is not considered to present a commercial solution.

Another problem with attempting to use magnesium oxide as a coating is that magnesium oxide will act as a sacrificial corrosion primer as it corrodes very easily. Accordingly, the optical properties of the magnesium oxide coating will deteriorate rather rapidly. Magnesium is the most electrochemically active metal used in engineering applications and corrodes so readily in some environments that magnesium and magnesium alloys are purposely utilised as sacrificial anodes on steel structures such as ship hulls and steel pipes. Magnesium and magnesium alloys stored at room temperature or in humid atmospheric conditions develop a compositionally varied surface film consisting of magnesium oxide, hydroxide and carbonates. These films are less stable than the passive films formed on metals such as aluminium and stainless steels.

It has also been observed that magnesium rich primers fail rapidly and exhibit heavy blistering very early on in salt spray tests (ASTM B117) which is a key test for certifying coatings for corrosion protection.

Accordingly, the magnesium oxide white paint coating disclosed in WO 2007/034248 (Simic) is not considered

to be relevant to the present invention and is not considered as offering a practical commercial solution to the problems which the present invention seeks to address.

Another disclosed composition in WO 2007/034248 (Simic) is titanium oxide white paint with potassium silicate. However, this has a stated absorptivity of A = 0.17 i.e. higher than the requirements of the present invention.

Accordingly, although a few of the white paint compositions disclosed in WO 2007/034248 (Simic) may initially appear to be potentially relevant to the present invention, upon more detailed consideration and further investigation their performance has been found to be inferior to that of a single coated conductor in accordance with the present invention.

FR-2971617 (Nexans) discloses a white paint having a white pigment such as magnesium oxide, aluminium oxide or barium sulphate. The polymeric coating has an emissivity $E \geq 0.7$ and a solar absorption coefficient $A \leq 0.3$. Accordingly, it is apparent that the requirements of the present invention are not met.

It will be apparent, therefore, that the various known approaches to providing a coating which will reduce the temperature of an overhead conductor are limited to providing a single coating which does not meet the dual requirements of the present invention namely of providing a conductor which has both a very high emissivity $E \geq 0.90$ and also a very high solar reflectivity $R \geq 0.80$, preferably $R \geq 0.90$ (or conversely a very low solar absorptivity $A \leq 0.20$, preferably $A \leq 0.10$).

It will be apparent, therefore, that the present invention represents a significant advance in the art since a single coated conductor according to the present invention has a significantly improved temperature performance. As a result, the single coated conductor according to the present invention exhibits advantageously reduced power losses and further advantageously has a higher ampacity relative to conventional monolayer coated conductors or bare conductors.

A single coated conductor according to the present invention also has a good or excellent corrosion resistance in contrast to some known coatings.

Furthermore, a significant advantage of the single coating according to the present invention is the optional presence of a photocatalytic agent which preferably acts to convert organic matter which may have accreted onto the conductor into carbon dioxide and water. As a result, a single coated conductor according to the present invention will suffer less discolouration than other known temperature reducing white coatings applied to overhead power transmission or distribution lines and hence the performance of such coated conductors according to the present invention will remain high over an extended period of time. This is in contrast to known coated conductors which suffer from a marked deterioration in performance over a relatively short period of time due to becoming dirty, discoloured and having a reduced reflectance.

It will be appreciated, therefore, that the single coated conductor according to the present invention which includes a self-cleaning superhydrophobic agent is of significant commercial interest.

Optionally, a photocatalytic agent may be included in the coating resin and may comprise ≥ 75%, ≥ 80%, ≥ 85%, ≥ 90%, ≥ 95% or ≥ 99% wt% anatase titanium dioxide ($TiO_2$).

The single coated conductor may be arranged and adapted to operate, in use, at a temperature of 60-300°C or 90-250°C above ambient temperature.

According to various embodiments the single coated conductor may further comprise a reflective agent.

The reflective agent preferably comprises rutile titanium dioxide ($TiO_2$). The rutile titanium dioxide ($TiO_2$) may have an average particle size ("aps"): (i) ≥ 100 nm; (ii) 100-200 nm; (iii) 200-300nm; (iv) 300-400 nm; (v) 400-500 nm; (vi) 500-600 nm; (vii) 600-700 nm; (viii) 700-800 nm; (ix) 800-900 nm; and (x) 900-1000 nm.

According to various embodiments the rutile titanium dioxide ($TiO_2$) comprises substantially spherical particles (as opposed to having a nanorod structure).

According to an embodiment the reflective agent may comprise sodium aluminosilicate ($AlNa_{12}SiO_5$). In particular, the sodium aluminosilicate ($AlNa_{12}SiO_5$) may be provided in conjunction with other reflective agents such as rutile titanium dioxide ($TiO_2$).

The reflective agent may comprise a white filler such as: (i) magnesium oxide (MgO); (ii) calcium oxide (CaO); (iii) aluminium oxide ($Al_2O_3$); (iv) zinc oxide (ZnO); (v) calcium carbonate (CaCOs); (vi) aluminium silicate ($Al_2SiO_5$); (vii) kaolin ($Al_2O_3.2SiO_2$); (viii) titanium dioxide ($TiO_2$); or (viii) barium sulphate ($BaSO_4$).

According to various embodiments the single coated conductor may further comprise an emissive agent. The emissive agent may comprise an inorganic filler, wherein the inorganic filler may comprise either: (i) calcium carbonate (CaCOs); (ii) calcined kaolin ($Al_2O_3.2SiO_2$); or (iii) talc (hydrated magnesium silicate ($H_2Mg_3(SiO_3)_4$ or $Mg_3Si_4O_{10}(OH)_2$)).

According to various embodiments the single coated conductor may further comprise a curing agent. The curing agent may be selected from the group consisting of: (i) zinc oxide (ZnO); (ii) zinc stearate ($C_{36}H_{70}O_4Z_n$); (iii) trimagnesium orthophosphate ($Mg_3O_6P_2$); (iv) magnesium oxide (MgO); (v) magnesium carbonate ($MgCO_3$); and (vi) magnesium hydroxide ($Mg(OH)_2$).

The first coating is preferably substantially white in colour and preferably has a L* ≥ 80, L* ≥ 85, L* ≥ 90 or a L* ≥ 95 i.e. has a high degree or level of whiteness.

The first coating preferably has an average thermal emissivity coefficient $E \geq 0.90$ across the infrared spectrum 2.5-30.0 μm when tested in accordance with ASTM E408 (2013) and/or an average solar reflectivity coefficient $R \geq 0.80$,

preferably R ≥ 0.90 and/or an average solar absorptivity coefficient A ≤ 0.20, preferably A ≤ 0.10 across the solar spectrum 0.3-2.5 μm when tested in accordance with ASTM E903 (2012).

The single coated conductor when tested in accordance with ANSI C119.4-2004 preferably operates at a lower temperature than the temperature of the same one or more electrical conductors without the first coating.

The one or more electrical conductors are preferably arranged and adapted to transmit, in use, electrical power at a voltage ≥ 2 kV, 2-50 kV, 50-100 kV, 100-150 kV, 150-200 kV, 200-250 kV, 250-300 kV, 300-350 kV, 350-400 kV, 400-450 kV, 450-500 kV, 500-550 kV, 550-600 kV, 600-650 kV, 650-700 kV, 700-750 kV, 750-800 kV or ≥ 800 kV.

The single coated conductor is preferably arranged and adapted to operate, in use, up to a maximum operating temperature of 80°C, 90°C, 100°C, 110°C, 120°C, 130°C, 140°C, 150°C, 160°C, 170°C, 180°C, 190°C, 200°C, 210°C, 220°C, 230°C, 240°C, 250°C, 260°C, 270°C, 280°C, 290°C, 300°C or > 300 °C.

The single coated conductor is preferably arranged and adapted to be suspended, in use, between overhead pylons.

The one or more electrical conductors preferably comprise one or more metallic conductors.

The one or more electrical conductors preferably comprise one or more metal cables.

The one or more metallic conductors and/or the one or more metal cables preferably comprise aluminium or an aluminium alloy.

The one or more electrical conductors preferably comprise one or more: (i) All Aluminium Conductors ("AAC"); (ii) All Aluminium Alloy Conductors ("AAAC"); (iii) Aluminium Conductor Steel Reinforced ("ACSR") conductors; (iv) Aluminium Conductor Aluminium Clad Steel Reinforced ("ACSR/AW") conductors; (v) Areal Bundled Cables ("ABC"); (vi) High Temperature Low Sag ("HTLS") conductors; (vii) Aluminium Conductor Composite Core ("ACCC") conductors; (viii) Aluminium Conductor Steel Supported ("ACSS/MA") conductors; (ix) Aluminium Conductor Aluminium Clad Steel Supported ("ACSS/AW") conductors; (x) Thermal Resistant Aluminium Alloy Conductor Steel Reinforced ("TACSR") conductors; (xi) Thermal Resistant Aluminium Alloy Conductor Aluminium Clad Steel Reinforced ("TACSR/AW") conductors; or (xii) Super Thermal Resistant Aluminium Alloy Conductor Aluminium Clad Invar Reinforced ("STACIR/AW") conductors.

The first coating preferably has a thickness in the range 1-10 μm, 10-20 μm, 20-30 μm, 30-40 μm, 40-50 μm, 50-60 μm, 60-70 μm, 70-80 μm, 80-90 μm, 90-100 μm, 100-110 μm, 110-120 μm, 120-130 μm, 130-140 μm, 140-150 μm, 150-160 μm, 160-170 μm, 170-180 μm, 180-190 μm, 190-200 μm, 200-300 μm, 300-400 μm, 400-500 μm, 500-600 μm, 600-700 μm, 700-800 μm, 800-900 μm, 900-1000 μm or > 1 mm.

The inorganic binder preferably comprises a water based inorganic binder which is subsequently dehydrated, dried or otherwise thermally cured.

The coating according to various embodiments may be applied to one or more conductors as a pre-prepared (one part) mixture or coating.

Alternatively, the coating may be supplied in kit form comprising a first part and a second part, wherein the two parts are mixed together usually at the point of application to the conductors.

The first part may further comprise one or more of: (i) a reflective agent; (ii) an emissive agent; (iii) a curing agent; and (iv) a rheology agent.

The second part may further comprise one or more of: (i) a reflective agent; (ii) an emissive agent; (iii) a curing agent; and (iv) a rheology agent.

The kit may further comprise a first device for spraying, painting or applying the first mixture on to at least a portion of one or more electric conductors to form the first coating. The first mixture once applied to the electric conductor(s) is then preferably dried, dehydrated or cured so as to form the first coating.

According to another aspect of the present invention there is provided a method of coating one or more electrical conductors to form a single coated conductor for an overhead power transmission or distribution line comprising:
spraying, painting, coating or applying a first coating or first mixture on to at least a portion of one or more electrical conductors, wherein the first coating or first mixture is as described above.

The inorganic binder comprises a water based inorganic binder and the method further comprises dehydrating or drying the inorganic binder. The first mixture preferably dries to form the first coating.

The method preferably further comprises thermally curing the first coating or first mixture.

According to an aspect of the present invention there is provided a method of retro-fitting an overhead power transmission or distribution line comprising one or more electrical conductors, the method comprising:
spraying, painting, coating or applying a first coating or first mixture on to at least a portion of one or more electrical conductors, wherein the first coating or first mixture is as described above.

## BRIEF DESCRIPTION OF THE DRAWINGS

Various embodiments of the present invention together with other arrangements given for illustrative purposes will now be described, by way of example only, and with reference to the accompanying drawings in which:

Fig. 1 illustrates some of the heat transfer mechanisms associated with an overhead electrical conductor including gaining energy by solar radiation and losing energy by conductor radiation and by convection (wind);

Fig. 2A shows a side view of a known coated conductor and Fig. 2B shows a cross-sectional view of the known coated conductor;

Fig. 3A shows a cross-sectional view of a known single coated conductor, Fig. 3B shows a cross-sectional view of a known 6/1 ACSR conductor with a coating, Fig. 3C shows a cross-sectional view of a known 26/7 ACSR conductor with a coating and Fig. 3D shows a cross-sectional view of a known 54/19 ACSR conductor with a coating;

Fig. 4 shows a single coated conductor according to a preferred embodiment of the present invention;

Fig. 5 shows how the ampacity of different types of conductors varies as a function of solar irradiance;

Fig. 6 shows UV-VIS-NIR absorbance spectra of a layer having a high solar reflectance according to an embodiment of the present invention;

Fig. 7 shows the solar spectrum from 0.3-2.5 $\mu$m for comparison purposes with Fig. 6;

Fig. 8 shows a test aluminium conductor;

Fig. 9 shows test data relating to the mean temperatures of different test conductors over a peak solar irradiation period;

Fig. 10 shows test data relating to the mean temperatures of different test conductors over a peak solar irradiation period and illustrates the significantly improved performance of a single coated conductor according to a preferred embodiment of the present invention operating at elevated temperatures up to 250°C;

Fig. 11 shows the reflectance of anatase and rutile titanium dioxide ($TiO_2$) pigments as a function of wavelength;

Fig. 12 shows the results of a current cycling test and shows that a preferred coated conductor according to an embodiment of the present invention was particularly effective in reducing the temperature of an Aluminium Conductor Steel Reinforced ("ACSR") conductor;

Fig. 13 shows the results of a current cycling test performed on a preferred coated conductor according to an embodiment of the present invention in terms of the temperature reduction (%) per cycle;

Fig. 14 shows the results of an outdoor cooling performance test performed on a preferred coated conductor according to an embodiment of the present invention;

Fig. 15 shows the temperature reduction (%) difference between a preferred coated conductor according to an embodiment of the present invention and an uncoated conductor during a week in the month of May in the United Kingdom; and

Fig. 16 shows an example of a superhydrophobicity agent comprising a functional polysiloxane which imparts a strong hydrophobic effect.

## DETAILED DESCRIPTION

Various embodiments of the present invention together with conventional arrangements given for illustrative purposes will now be discussed in more detail.

Fig. 1 illustrates some of the heat transfer mechanisms associated with an overhead conductor 100.

There are two predominate heat transfer mechanisms which will cause the temperature of the conductor 100 to rise. The first heat transfer mechanism is solar radiative heating of the conductor 100. It will be understood that incident solar radiation upon the conductor 100 will result in the temperature of the electrical conductor 100 increasing.

The second heat transfer mechanism (not shown in Fig. 1) which will cause the temperature of the conductor 100 to rise is the effect of Ohmic losses due to the transmission of electrical current through the conductor 100. The resistance of the conductor 100 to the transmission of electrical current through the conductor 100 will result in Joule heating of the conductor 100.

Accordingly, the combined effect of solar radiative heating of the conductor 100 and Joule heating will cause the temperature of the conductor 100 to rise.

The gain in energy of the conductor 100 may be offset by three thermal transfer mechanisms through which the conductor 100 may lose energy namely by radiation, conduction and convection.

Heat loss by conduction is negligible. Heat loss by convection (i.e. due to air currents or wind) will be dependent upon the geographic location of the conductor 100. A conductor 100 may be deployed in a hot region of the world such as Southern USA, the Middle East or Australia. Winds in non-coastal regions may be relatively light and hence heat loss by convection may not normally be a significant consideration. Accordingly, the predominant mechanism by which a conductor 100 may lose energy is by thermal radiation.

It will be understood by those skilled in the art that overhead bare conductors as are conventionally deployed in regions of the world such as Southern USA, the Middle East and Australia can reach significantly elevated temperatures. Accordingly, the issue of being able to reduce the operational temperature of an overhead conductor deployed in a region of the world such as Southern USA, the Middle East and Australia is of considerably commercial concern to e.g. utilities companies.

High voltage power lines in many countries are considered to form part of the national infrastructure and hence may be state owned and controlled.

Overhead electricity transmission lines generally comprise a core formed of one or more conductive wires. Various different types of overhead conductors are known.

All Aluminium Conductors ("AAC") comprise hard drawn aluminium wires stranded in successive layers in opposite directions to form the conductor as per BS EN 50182 or IEC 61089. AAC conductors may be used for aerial distribution lines having relatively short spans, aerial feeders and bus bars of substations. AAC conductors have a high corrosion resistance since steel is not present. Conventional AAC conductors are typically rated up to a maximum operating temperature of 80°C.

All Aluminium Alloy Conductors ("AAAC") comprise All Aluminium Alloy ("ALMELEC") wires stranded in successive layers in opposite directions to form the conductor as per IEC 61089, BS EN 50182 or ASTM B 399. AAAC conductors are mainly used for overhead lines in transmission and distribution electrical networks having relatively long spans. They are also used as a messenger to support overhead electrical cables. AAAC conductors have a high corrosion resistance since steel is not present. Conventional AAAC conductors are typically rated up to a maximum operating temperature of 80°C.

Aluminium Conductor Steel Reinforced ("ACSR") conductors comprise an outer layer of aluminium conductor concentrically stranded over a central core of galvanized or stranded steel wires to form the conductor as per BS EN 50182, ASTM B 232 or IEC 61089. ACSR conductors are widely used for electrical power transmission over long distances. ACSR conductors may also be used as a messenger for supporting overhead electrical cables. Conventional ACSR conductors are typically rated up to a maximum operating temperature of 80°C.

Aluminium Conductor Aluminium Clad Steel Reinforced ("ACSR/AW") conductors comprise an outer layer of aluminium conductor concentrically stranded over a central core of aluminium clad steel solid or stranded cable to form the conductor as per ASTM B 549. ACSR/AW conductors are used for electrical power transmission and are ideal for long overhead lines spans like ACSR conductors but with slightly better resistance and current carrying capacity in addition to good corrosion resistance. Conventional ACSR/AW conductors are typically rated up to a maximum operating temperature of 80°C.

Areal Bundled Cables ("ABC") are made from aluminium conductors which are insulated by XLPE insulation and assembled to form two (Duplex), three (Triplex), four (Quadruplex) or more conductors as per ICEA S 474-76 or BS EN 50182. They are used for secondary overhead lines (in circuits not exceeding 600 V phase to phase) on poles or as feeders to residential premises.

Various High Temperature Low Sag ("HTLS") conductors are also known which are designed to operate at significantly higher operational temperatures of up to 150-250°C.

Known HTLS conductors include Aluminium Conductor Composite Core ("ACCC") conductors, Aluminium Conductor Steel Supported ("ACSS/MA") conductors, Aluminium Conductor Aluminium Clad Steel Supported ("ACSS/AW") conductors, Thermal Resistant Aluminium Alloy Conductor Steel Reinforced ("TACSR") conductors, Thermal Resistant Aluminium Alloy Conductor Aluminium Clad Steel Reinforced ("TACSR/AW") conductors and Super Thermal Resistant Aluminium Alloy Conductor Aluminium Clad Invar Reinforced ("STACIR/AW") conductors.

Aluminium Conductor Composite Core ("ACCC") conductors comprise a concentrically stranded conductor with one or more layers of trapezoidal shaped annealed 1350-0 aluminium wires on a central core of light weight carbon-glass fibre composite. ACCC conductors comprising a hybrid carbon composite core are stronger and lighter than traditional steel cores. ACCC conductors are capable of carrying twice the current of traditional ACSR conductors as ACCC conductors are designed for continuous operating temperatures of up to 180°C in addition to its lighter core which allows approx. 30% more aluminium to be used without increasing the total weight. Usage of ACCC conductors reduces line losses by 30-40% under equal load conditions compared with traditional ACSR conductors of the same diameter and weight. ACCC conductors have greater strength, effective self-damping, superior fatigue resistance and a low coefficient of expansion thereby reducing conductor sag under heavy electrical load conditions. As a result, ACCC conductors can be used to increase spans between fewer or shorter structures. ACCC conductors have greater corrosion resistance than traditional ACSR conductors.

ACCC conductors are used for overhead distribution and transmission lines and are particularly useful in reconductoring applications requiring increased current with existing tensions and clearances, new line applications where structures can be economised due to reduced conductor sag, new line applications requiring high emergency loading and lines where vibration due to wind is a problem. ACCC conductors can also be used at corrosive and coastal environments due to their good corrosion resistance. Conventional ACCC conductors are typically rated up to a maximum operating temperature of 180°C.

Aluminium Conductor Steel Supported ("ACSS/MA") conductors comprise one or more layers of annealed aluminium 1350-0 wires stranded over a central core of zinc-5% aluminium mischmetal alloy coated steel wires that are designed to withstand most or all of the mechanical load on the ACSS conductor. ACSS conductors may be manufactured according to ASTM B 856.

ACSS/MA conductors are similar to traditional ACSR conductors except that ACSS/MA conductors can be operated continuously at high temperatures up to 250°C without damage. ACSS/MA conductors sag less under emergency loading than ACSR conductors, have self-damping properties and final sag is not affected by long time creep of the aluminium.

ACSS/MA conductors are used for overhead distribution and transmission lines and are particularly useful in reconductoring applications requiring increased current with existing tensions and clearances. ACSS/MA conductors are also used for new line applications where structures can be economised due to reduced conductor sag, new line applications requiring high emergency loadings and lines where vibration due to wind is a problem. Conventional ACSS/MA conductors are typically rated up to a maximum operating temperature of 250°C.

Aluminium Conductor Aluminium Clad Steel Supported ("ACSS/AW") conductors comprise one or more layers of annealed aluminium 1350-0 wires stranded over a central core of aluminium clad steel wires that are designed to withstand most or all of the mechanical load on ACSS/AW conductors. ACSS/AW conductors may be manufactured according to ASTM B 856.

ACSS/AW conductors can operate continuously at high temperatures up to 200°C without damage. The aluminium clad steel core which consists of a thick layer of aluminium (approx. 10% of the nominal wire radius) over steel gives ACSS/AW conductors the advantages of ACSS conductors along with light weight and good conductivity of aluminium with the high tensile strength and ruggedness of steel.

ACSS/AW conductors are used for overhead distribution and transmission lines and are especially useful in reconductoring applications requiring increased current with existing tensions and clearances. ACSS/AW conductors are also used for new line applications where structures can be economised due to reduced conductor sag, new line applications requiring high emergency loadings and lines where vibration due to wind is a problem.

ACSS/AW conductors have strength characteristics similar to ACSS conductors along with slightly greater ampacity and resistance to corrosion due to aluminium cladding of the steel core wires. Conventional ACSS/AW conductors are typically rated up to a maximum operating temperature of 200°C.

Thermal Resistant Aluminium Alloy Conductor Steel Reinforced ("TACSR") conductors comprise one or more layers of thermal resistant aluminium zirconium alloy (AT1) wires stranded over a central core of zinc coated steel wire(s) as per IEC 62004 and IEC 60888 and generally according to IEC 61089.

TACSR conductors are able to carry higher (150%) load current than traditional ACSR conductors as they are designed for continuous operating temperatures of up to 150°C. TACSR conductors have the same installation technique as ACSR conductors.

TACSR conductors are used for overhead distribution and transmission lines and are particularly useful in new line applications requiring increased current. Conventional TACSR conductors are typically rated up to a maximum operating temperature of 150°C.

Thermal Resistant Aluminium Alloy Conductor Aluminium Clad Steel Reinforced ("TACSR/AW") conductors comprise one or more layers of thermal resistant aluminium zirconium alloy (AT1) wires stranded over a central core of stranded aluminium clad steel (20SA Type A) wire(s) as per IEC 62004 and IEC 61232 and generally according to IEC 61089.

TACSR/AW conductors are able to carry higher load current than traditional ACSR conductors as they are designed for continuous operating temperatures of up to 150°C. TACSR/AW conductors have increased corrosion resistance and lower electrical resistance and lower mass than TACSR conductors. TACSR/AW conductors have the same installation technique as ACSR conductors.

TACSR/AW conductors are used for overhead distribution and transmission lines and are particularly useful in new line applications requiring increased current. TACSR/AW may be used at corrosive and coastal environments due to their good corrosion resistance. Conventional TACSR/AW conductors are typically rated up to a maximum operating temperature of 150°C.

Super Thermal Resistant Aluminium Alloy Conductor Aluminium Clad Invar Reinforced ("STACIR/AW") conductors comprise one or more layers of super thermal resistant aluminium zirconium alloy (AT3) wires stranded over a central core of stranded aluminium clad invar wires as per IEC 62004 and generally according to IEC 61089 and IEC 61232. Invar is a special Fe/Ni alloy having a very low coefficient of linear expansion.

STACIR/AW conductors are able to carry higher (200%) load current than traditional ACSR conductors as they are designed for continuous operating temperatures of up to 210°C. Beyond knee point STACIR/AW conductors experience a sag increase due to the expansion of the Invar core alone (extremely low value $\leq 3.7 \times 10^{-6}$ /°C) which controls sag at high operating temperatures. STACIR/AW conductors have increased corrosion resistance and have the same installation technique as ACSR conductors.

STACIR/AW conductors are used for overhead distribution and transmission lines and are particularly useful in new line applications requiring increased current. STACIR/AW conductors may be used at corrosive and coastal environments due to their good corrosion resistance. Conventional STACIR/AW conductors are typically rated up to a maximum operating temperature of 210°C.

Accordingly, known HTLS conductors enable high voltage overhead electric conductors to be operated at significantly higher operating temperatures up to a maximum operating temperature typically in the range 150-250°C.

Fig. 2A shows a side view and Fig. 2B shows a cross-sectional view of a known coated conductor 200 as disclosed in WO 2015/105972 (Ranganathan). The known conductor 200 comprises 19 aluminium cables or wires 202 surrounded by an outer polymeric coating 201. Gaps 203 may be present between the outer polymeric coating 201 and the individual conductive cables or wires 202. The outer polymeric coating 201 is provided in order to decrease the temperature of the conductor 200 when the conductor 200 is tested in accordance with ANSI C119.4.

Fig. 3A shows a cross-sectional view of another known conductor having a central aluminium core 301 and a single outer polymeric coating 302.

Fig. 3B shows a cross-sectional view of a known 6/1 ACSR conductor comprising a central steel reinforcing element 303 surrounded by a ring of six aluminium electrical wires 310. Each of the six aluminium wires 310 has a polymeric coating 302.

Fig. 3C shows a cross-sectional view of a known 26/7 ACSR conductor comprising seven central steel reinforcing elements 303 surrounded by a first ring of aluminium wires 310 which in turn are surrounded by a second ring of aluminium wires 310. The second outer ring of aluminium wires are enclosed by an outermost polymeric coating 302.

Fig. 3D shows a known 54/19 ACSR conductor comprising 19 central steel reinforcing elements 303 surrounded by a first ring of aluminium wires 310 which are in turn surrounded by a second ring of aluminium wires 310. The second ring of aluminium wires 310 are in turn surrounded by a third ring of aluminium wires 310. The third outer ring of aluminium wires 310 is enclosed by an outermost polymeric coating 302.

Fig. 4 shows a single coated conductor according to a preferred embodiment of the present invention. The single coated conductor comprises an inner metallic conductor 400 preferably of aluminium. The inner metallic conductor 400 may comprise one or more steel reinforcing elements (not shown) and/or one or more composite elements.

The single coated conductor according to a preferred embodiment of the present invention preferably comprises a first inorganic coating 401 surrounding the metallic conductor 400. The first coating 401 includes a self-cleaning superhydrophobic agent. Optionally, the first coating 401 may also include a self-cleaning photocatalytic agent such as anatase titanium dioxide ($TiO_2$).

According to the present invention one or more electrical conductors 400 are provided which have a first coating or layer 401 which has an average thermal emissivity coefficient $E \geq 0.90$ and an average solar reflectivity coefficient R $\geq 0.80$, preferably $R \geq 0.90$ and/or an average solar absorptivity coefficient $A \leq 0.20$, preferably $A \leq 0.10$.

The one more electrical conductors 400 may form part of an overhead power transmission or distribution line.

The first coating or layer 401 comprises: (i) an inorganic binder comprising an alkali metal silicate; (ii) from about 5 to about 25 wt.% of an optically active element and/or reflective agent which comprises rutile titanium dioxide ($TiO_2$) having an average particle size ("aps") of $\geq 100$ nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate, such as rutile titanium dioxide ($TiO_2$) preferably having an average particle size $\geq 250$ nm; and (iii) a superhydrophobic agent which comprises surface functionalised silica nanoparticles; one or more functional polysiloxanes; or micro powder polymethylsilsesquioxane.

According to various embodiments the binder may optionally include a photocatalytic agent comprising $\geq 70$ wt% anatase titanium dioxide ($TiO_2$) optionally having an average particle size $\leq 100$ nm.

The first coating or layer 401 preferably has an average thermal emissivity coefficient $E \geq 0.90$ across at least 10%, 20%, 30%, 40%, 50%, 60%, 70%, 80% or 90% of the infrared spectrum 2.5-30.0 $\mu$m.

The first coating or layer 401 preferably has an average solar reflectivity coefficient $R \geq 0.80$, preferably $R \geq 0.90$ and/or an average solar absorptivity coefficient $A \leq 0.20$, preferably $A \leq 0.10$ across at least 10%, 20%, 30%, 40%, 50%, 60%, 70%, 80% or 90% of the solar spectrum 0.3-2.5 $\mu$m.

According to an embodiment the first coating 401 may be provided on at least a portion of the one or more electrical conductors 400.

A single coated conductor according to the present invention has been tested and found to have a good or excellent corrosion resistance when tested in accordance with ASTM B117 (Salt spray) testing procedure.

Using the industry standard CIGRE 207-2002 method of calculating conductor temperature the importance of utilising a single coated conductor having a high solar reflectivity coating in regions with high solar radiation will now be demonstrated. For illustrative purposes only, a power line may be considered which is deployed at a location 30° North in latitude and which is exposed to 12 hours of August solar radiation. The air temperature is modelled as being 40°C.

Under the above conditions a Drake ACSR overhead electrical conductor with different coatings transmitting a constant current of 1000A will have the following characteristics:

Table 1

| Optical characteristics | Conductor temperature (°C) | Conductor resistance Ohms/km |
|---|---|---|
| Uncoated conductor<br>Emissivity: 0.5<br>Absorptivity: 0.5<br>Reflectivity: 0.5 | 99.1 | 0.0945 |
| Conductor having a grey emissive coating<br>Emissivity: 0.86<br>Absorptivity: 0.55<br>Reflectivity: 0.45 | 91.1 | 0.0921 |
| A single coated conductor according to a preferred embodiment of the present invention having both high emissivity and high reflectivity<br>Emissivity: 0.95<br>Absorptivity: 0.1<br>Reflectivity: 0.9 | 83.3 | 0.0898 |

The figures shown above in Table 1 were calculated using the industry standard CIGRE model and demonstrate that a single coated conductor according to a preferred embodiment of the present invention having both high reflectivity and high emissivity results in nearly a doubling of the cooling effect (x1.975 15.8°C c.f. 8.0°C) relative to a conventional conductor having a grey coating. As detailed below, the above calculations were further confirmed through empirical testing using two different test rigs.

A single coated conductor according to a preferred embodiment of the present invention having both an increased emissivity and at the same time a high reflectivity (i.e. without increasing solar absorption) is shown to be particularly effective and to provide a significantly improved performance relative to conventional arrangements operating at temperatures up to 100°C (as per Table 1 above) and also at elevated temperatures in the range 150-250°C (data shown below).

The first coating 401 may comprise a white filler. The white filler may, for example, comprise: (i) magnesium oxide (MgO); (ii) calcium oxide (CaO); (iii) aluminium oxide ($Al_2O_3$); (iv) zinc oxide (ZnO); (v) calcium carbonate ($CaCO_3$); (vi) aluminium silicate ($Al_2SiO_5$); (vii) kaolin ($Al_2O_2.2SiO_2$); (viii) titanium dioxide ($TiO_2$); or (viii) barium sulphate ($BaSO_4$). The first coating 401 may include one or more other white fillers.

Inorganic coatings

According to various embodiments the first coating 401 comprises an inorganic binder, preferably a water based inorganic binder.

The inorganic binder comprises an alkali (or alkaline) metal silicate. For example, the alkali (or alkaline) metal silicate may comprise potassium silicate ($K_2SiO_3$). Alternatively, the alkali (or alkaline) metal silicate may comprise sodium silicate. The sodium silicate may comprise sodium metasilicate ($Na_2SiO_3$), sodium orthosilicate ($Na_4SiO_4$) or sodium pyrosilicate ($Na_6Si_2O_7$).

According to an embodiment the alkali (or alkaline) metal silicate may comprise lithium silicate ($Li_2SiO_3$).

The first inorganic coating 401 may comprise one or more braids, ceramic fibres, adhesives yarns or special tapes.

The first inorganic coating 401 may be semi-conductive and may have a volume resistivity of $10^{12}$ ohm-cm or less, preferably a volume resistivity of $10^{10}$ ohm-cm or less, further preferably a volume resistivity of $10^8$ ohm-cm or less.

The first inorganic coating 401 may have a thermal deformation temperature in the range 140-150°C, 150-160°C, 160-170°C, 170-180°C, 180-190°C, 190-200°C, 200-210°C, 210-220°C, 220-230°C, 230-240°C, 240-250°C, 250-260°C, 260-270°C, 270-280°C, 280-290°C, 290-300°C or > 300°C.

The first inorganic coating 401 may have a retention of elongation at break of 50% or more after 2000 hours of exterior weathering test in accordance with ASTM 1960.

The first inorganic coating 401 may have a heat conductivity of 0.15 W/m or more.

The first coating 401 may less preferably have a lightness value L* in the range 0-10, 10-20, 20-30, 30-40, 40-50, 50-60, 60-70, 70-80. More preferably, the first coating 401 is white and has a lightness value L* in the range

80-90 or 90-100 wherein when L* = 0 the observed colour is black and wherein when L* = 100 the observed colour is white. According to the preferred embodiment the coating 401 has a L* ≥ 80.

The first inorganic coating 401 may be substantially free of hydrorepellent additives, a hydrophilic additive and/or a dielectric fluid.

The first coating preferably comprises from about 40 to about 75 wt.% inorganic binder, such as inorganic alkali metal silicate resin.

The first coating preferably comprises from about 45 to about 70 wt.% inorganic binder, such as inorganic alkali metal silicate resin.

The first coating preferably comprises from about 50 to about 65 wt.% inorganic binder, such as inorganic alkali metal silicate resin.

The first coating preferably comprises from about 50 to about 60 wt.% inorganic binder, such as inorganic alkali metal silicate resin.

Fillers

In a similar manner to the arrangements disclosed in WO 2015/105972 (Ranganathan) according to various embodiments of the present invention the first inorganic coating 401 may include one or more fillers. The first inorganic coating 401 may contain one or more fillers at a concentration of 0-50 % (by weight of the total composition) and the one or more fillers may have an average particle size of 0.1-50 μm. The filler particles may be spherical, hexagonal, flake like, fibres or ribbon like.

IR reflective additives

In a similar manner to the arrangements disclosed in WO 2015/105972 (Ranganathan) according to various preferred embodiments of the present invention, the first inorganic coating 401 may comprise one or more infrared reflective pigments or additives. The one or more infrared reflective ("IR") pigments or additives may be included in the first inorganic coating 401 at a concentration from e.g. 0.1-10 wt%. The IR reflective additives are preferably white.

Stabilisers

In a similar manner to the arrangements disclosed in WO 2015/105972 (Ranganathan) according to various preferred embodiments of the present invention one or more stabilisers may be included in the first inorganic coating 401 at a concentration of e.g. 0.1-5% (by weight of the total composition or coating).

The one or more stabilisers may comprise a light stabiliser and/or a dispersion stabiliser such as bentonite. The stabiliser is preferably white.

Coating process

The first inorganic coating 401 or a first mixture may be applied to one or more conductors 400 such as an overhead cable by being sprayed or painted on. The first coating or first mixture is preferably water based and may be dehydrated or dried e.g. by thermal curing optionally over a period of hours.

One or more pre-treatment processes may be used to prepare a surface of the conductor 400 or one or more conductive wires for the first inorganic coating 401. For example, according to various embodiments the conductor 400 or one or more conductive wires may be subjected to chemical treatment, pressurised air cleaning, hot water treatment, steam cleaning, brush cleaning, heat treatment, sand blasting, ultrasound, deglaring, solvent wipe, plasma treatment and the like.

A surface of one or more overhead conductors 400 may be deglared by sand blasting. An overhead conductor may be heated to temperatures between 23-250°C as part of a heat treatment process to prepare the surface of the conductor 400 or one or more conductive wires for the first coating 401. The temperature may be selected dependent upon the first coating 401.

In certain embodiments, the coating processes may be solvent free or essentially solvent free. Solvent free, or essentially solvent free may mean that no more than about 1% of a solvent is used in any of the processes relative to the total weight of the product.

Characteristics of coated conductors

As will be appreciated, the application of a single coating or monolayer 401 provides cables, such as overhead conductors, with a number of superior characteristics including self-cleaning properties.

The first inorganic coating 401 may provide a cable with a uniform thickness around the exterior of the conductor 400 or one or more conductive wires. Each method of applying the first inorganic coating 401 may compensate for differing amounts of unevenness.

The first coating layer 401 according to various preferred embodiments of the present invention may provide the conductor 400 or one or more conductive wires with an increased mechanical strength relative to that of a bare conductor. For example, according to various embodiments a single coated conductor 400 or one or more conductive wires may have a minimum tensile strength of 10 MPa and may have a minimum elongation at break of 50% or more.

As another advantage, a single coating 401 may in a similar manner to the arrangements disclosed in WO 2015/105972 (Ranganathan) serve as a protective layer against corrosion and bird caging in the conductor 400 or one or more conductive wires. As may be appreciated, bare or liquid coated conductors may lose their structural integrity over time and may become vulnerable to bird caging in any spaces between the conductor wire strands. In contrast, a conductor 400 or one or more conductive wires having a single coating 401 are shielded and may eliminate bird caging problems.

As another advantage, the first inorganic coating 401 may eliminate water penetration, may reduce ice and dust accumulation and may improve corona resistance.

As another advantage, a conductor 400 or one or more conductive wires coated with a single coating 401 may have an increased heat conductivity, an increased emissivity and decreased absorptivity characteristics.

As an additional advantage, the first inorganic coating 401 may have a thermal deformation resistance at higher temperatures including temperatures of 140-150°C, 150-160°C, 160-170°C, 170-180°C, 180-190°C, 190-200°C, 200-210°C, 210-220°C, 220-230°C, 230-240°C, 240-250°C, 250-260°C, 260-270°C, 270-280°C, 280-290°C, 290-300°C or > 300°C.

Advantageously, the first inorganic coating 401 may maintain flexibility at lower temperatures and may have improved shrink back and low thermal expansion at the lower temperature range.

The addition of the first inorganic coating 401 may add relatively little weight to an overhead conductor 400. For example, the weight increase of a single coated overhead conductor according to a preferred embodiment of the present invention may be < 5%, 5-10%, 10-15% or 15-20%.

A yet further significant advantage is that the first inorganic coating 401 have either a good or excellent corrosion resistance in contrast to some known single coatings.

Experimental data

Various simulations were performed following CIGRE technical specification 601, further details of which are given below.

For steady state situations, fixed weather and conductor parameters were assumed in order to calculate the maximum expected ratings or conductor temperatures. The environmental data were chosen to represent a hot, cloudless, sunny subtropical desert location, as detailed below.

Table 2

| **Environmental data** | |
|---|---|
| Location | 30 Degrees North |
| Date | 10th June |
| Time | 12 hours |
| Ambient temperature (°C) | 40 |
| Wind velocity perpendicular to conductor (m/s) | 0.6096 |
| Conductor orientation | E-W |
| Atmospheric conditions | Clear |
| Albedo | 0.1 |
| Calculated solar irradiance ($W/m^2$) | Varied from night to noon |

Reduction in operating temperature

Generally, a new uncoated conductor will have an emissivity E = 0.5 and solar absorptivity A = 0.5. Over the

course of a year the emissivity E of an uncoated conductor will increase to e.g. approx. 0.8 as the surface of conductor becomes coated with organic matter and/or is exposed to pollution. Similarly, the absorptivity will also increase during the course of the year to 0.8. These figures are dependent upon location and it will be understood, for example, that if the conductor is located in a less polluted location then the final values may end up being different (e.g. higher/lower).

Table 3 below shows current and temperature as a function of surface characteristics.

Table 3

| | **Aged uncoated Drake conductor E = 0.8**<br>**A = 0.8** | **New uncoated Drake conductor E = 0.5**<br>**A = 0.5** | **Conductor having a preferred coating E = 0.95**<br>**A = 0.1** |
|---|---|---|---|
| Current at 100 °C (A) | 907 | 908 | 1126 |
| Temperature (°C) at 976 Amps | n/a | 99.9 | 78.75 |
| Increase in current | n/a | 1 | 119 |
| $I^2R$ power savings (running at a cooler temperature) | n/a | n/a | 6% |

It will be understood that Drake ACSR conductors are commonly used for CIGRE simulations.

<u>Increase in ampacity</u>

Table 4 below shows how the ampacity varies with time of day and corresponding solar irradiance for a perfect conductor, an aged conductor, a new uncoated conductor and a coated conductor according to a preferred embodiment.

Table 4

| | | **Theoretical perfect Drake conductor (26/7) E = 1.0**<br>**A = 0.0** | **Drake conductor (26/7) after 1 year E = 0.8**<br>**A = 0.8** | **New Drake conductor (26/7) E = 0.5**<br>**A = 0.5** | **Drake conductor (26/7) with a preferred coating E = 0.95**<br>**A = 0.1** | | |
|---|---|---|---|---|---|---|---|
| Time of Day | Total Solar Irradiance ($W/m^2$) | Current (A) | Current (A) | Current (A) | Current (A) | %Uplift on E=0.8 A=0.8 | %Uplift on E=0.5 A=0.5 |
| 04: 00:00 | 0 | 1161 | 1115 | 1043 | 1149 | 3% | 10% |
| 05: 00:00 | 0 | 1161 | 1115 | 1043 | 1149 | 3% | 10% |
| 06: 00:00 | 266 | 1161 | 1078 | 1018 | 1145 | 6% | 12% |
| 07: 00:00 | 463 | 1161 | 1044 | 996 | 1141 | 9% | 15% |
| 08: 00:00 | 689 | 1161 | 1006 | 971 | 1137 | 13% | 17% |
| 09: 00:00 | 911 | 1161 | 967 | 946 | 1133 | 17% | 20% |
| 10: 00:00 | 1093 | 1161 | 935 | 926 | 1129 | 21% | 22% |

(continued)

| | | Theoretical perfect Drake conductor (26/7) E = 1.0 A = 0.0 | Drake conductor (26/7) after 1 year E = 0.8 A = 0.8 | New Drake conductor (26/7) E = 0.5 A = 0.5 | Drake conductor (26/7) with a preferred coating E = 0.95 A = 0.1 | | |
|---|---|---|---|---|---|---|---|
| 11: 00:00 | 1210 | 1161 | 914 | 912 | 1127 | 23% | 24% |
| 12: 00:00 | 1251 | 1161 | 907 | 908 | 1126 | 24% | 24% |

Fig. 5 shows a plot of ampacity or current capacity against time of day solar intensity for a new, aged and dual coated conductor (included for illustrative purposes only) compared against a theoretical perfect conductor.

Fig. 5 shows that the ampacity of a modified conductor performs close to the performance of a theoretical perfect conductor (wherein the ampacity does not reduce with increasing solar irradiance). In particular, it is noted from Fig. 5 that the performance of a modified conductor shows a high level of performance after 8 hours in marked contrast to conventional conductors.

Technology validation in a laboratory environment

Initial lab-scale prototypes were manufactured and tested based on the performance of flat aluminium sheeting of the same grade as power lines but configured flat for ease of testing. Accordingly, coatings were applied to flat sheeting rather than to cylindrical cables.

Optical proof of concept was demonstrated by demonstrating that the first coating 401 has the necessary optical performance (e.g. high reflectivity, high emissivity) in the specific wavelengths required to produce optimal radiative cooling.

Furthermore, electrical proof of concept was demonstrated by demonstrating that a modified conductor operates at a significantly cooler temperature than that of an uncoated conductor when transmitting a relatively high current.

The electrical proof of concept testing involved both: (i) constant current testing wherein multiple flat coated conductors were tested outdoors with their temperatures being the output; and (ii) constant temperature testing involving testing multiple different coatings at the same temperature but with the wattage required to heat each being the output.

Solar reflective layer

UV-VIS-NIR spectral analysis of a solar reflective layer was carried out by a third party using a JASCO (RTM) V670 UV-VIS-NIR spectrometer with ISN-723 integrating sphere attachment. An integrating sphere attachment allowed collection of diffuse radiation (about 180°) reflected by the sample. Analysis was undertaken in reflectance mode, with specular reflectance excluded. One spectrum was collected from each side of the sample. The sample was also turned 90° around the incident beam for analysis of the second side. This should have low absorbance in the solar spectrum (0.3-2.5 $\mu$m). The modified conductor demonstrates this.

Fig. 6 shows UV-VIS-NIR absorbance or reflectivity spectra of a solar reflective layer according to an embodiment of the present invention. The absorbance or reflectivity spectra demonstrates that over 90% of solar energy is not absorbed thereby promoting cooling under direct sunlight. Notably the reflectivity reduces towards 2.5 $\mu$m which is advantageous so as not to prevent or interfere with thermal emission of infra-red radiation in the wavelength range 2.5-30.0 $\mu$m. The particular solar reflective layer which was tested with reference to Fig. 6 comprised a single layer reflective/emissive silicate coating according to a preferred embodiment.

Fig. 7 shows the solar spectrum for comparison purposes with Fig. 6. The solar spectrum at the top of the atmosphere broadly corresponds with a 5250°C blackbody spectrum. The solar radiation at sea level shows various absorption bands due to absorption by $O_2$, $H_2O$ and $CO_2$ molecules.

Constant current electrical proof of concept

Rig design and experimental method

Further testing was performed in order demonstrate that a modified coating 401 according to a preferred

embodiment of the present invention functions to lower the operating temperature of an electrical conductor. A series of conductors comprising several lengths of flat aluminium conductor of allot 1350 were connected in series and tested with at least one of the conductors being uncoated.

The upper surface of each of the conductor(s) was exposed to the atmosphere whilst the lower surface of the conductor(s) was thermally insulated by being adhered to CELOTEX (RTM) foam board. DC current was then applied to the conductors which then became hot due to Joule heating. Temperature measurements of the coated and uncoated conductors were taken to demonstrate the efficacy of the single coating 401 according to a preferred embodiment of the present invention in terms of reducing the temperature of an aluminium conductor 400. Sensors were mounted behind the conductors and were located between the conductors and the insulation in order to reduce influences of poor thermal connections which might otherwise introduce errors if they were connected to the side directly exposed to solar radiation.

Several rigs were designed and iteratively optimised in order to remove the possibility of performance measurements being due to artefacts of experimental design. It was desired to explore the performance of different coatings when exposed to sunlight and natural convection, as these environmental conditions represent the operating conditions of the end product.

As no standards exist for constant current testing in an external environment a new purpose built rig was designed specifically for testing outdoors. When testing outdoors and under sunlight and using insulated surface mounted thermocouples to measure temperature a number of problems may arise. Thermocouples may introduce an optical irregularity into the surface of the conductor. Also, a temperature gradient may form from the surface of the conductor to air, where small deviations in the distance from thermocouple to the conductor can lead to large differences in the temperature measuring accuracy between thermocouples.

In turn, a test rig was designed which equally thermally insulated thermocouples and which minimised potential differences in thermal gradients between the sensors and the conductors. A piece of CELOTEX (RTM) insulation, with dimensions 50 x 450 $\times$ 600 mm was used as the base for the test rig.

CELOTEX (RTM) has a lower thermal conductivity than air and can operate at the higher temperatures required for the constant current testing. Holes were drilled in the rear of the CELOTEX (RTM) insulation and thermocouple sensors were threaded through to the surface. A few millimetres of the sensor cable were then pulled through allowing the sensor to lie parallel to the CELOTEX (RTM) surface. Thermocouples sensors were kept electrically insulated from the test strips by a 0.1 mm thick high temperature double sided adhesive tape which was placed on top in order to secure thermocouples to lie within 1 mm of the central line of the conductor. The aluminium conductors were then placed on top of the sensors so that thermocouples were concealed between the CELOTEX (RTM) and the aluminium conductor thereby minimising the potential for thermal gradients to exist between the sensors and the conductors. The number of connections between the conductors and the power source was minimised by utilising a single piece of conductor which was cut into a wave-like or serpentine pattern or shape as shown in Fig. 8.

Fig. 8 shows an aluminium test conductor with various dimensions indicated. The conductor was arranged to comprise ten rows of which the outer two were used for making electrical connections and the inner eight were for coating testing. The wave-like or serpentine shaped conductor was then placed on top of the sensors and was secured underneath using double sided thermally stable tape. The aluminium conductor comprised alloy 1350 and had a thickness of 0.7 mm. The transition point from one type of coating to another was arranged to be midway through the semi-circular connecting curve portions.

Temperature testing up to 100°C

Four different conductor strips were tested namely: (i) an uncoated bright aluminium (control) conductor; (ii) a conductor having a grey emissive coating comprising 10 wt% silicon carbide in a condensation cured silicone rubber binder; (iii) a conductor having a black emissive coating comprising a carbon black layer comprising 1 wt% carbon black in acetone; and (iv) a conductor 400 according to a preferred embodiment comprising a first or single layer 401 comprising a superhydrophobic agent,.

Samples were tested outdoors under low wind conditions with solar radiation levels greater than 800 W/m$^2$. Two nominal temperature ranges were tested. A low voltage DC power supply comprising 1.5 V batteries supplying currents up to 100A were connected continuously to the test rig which resulted in the conductors increasing in temperature to a temperature of approx. 0-100°C above ambient. Ambient temperature was typically 20°C but in the range 10-30°C.

Mean temperatures were calculated for each of the coatings at peak. The key environmental conditions were: (i) 10-30°C ambient temperature; (ii) low wind (Beaufort scale typically 2-3); and (iii) $\geq$ 800 W/m$^2$ perpendicular solar irradiation.

The results are shown in Fig. 9 which shows the mean temperatures of the different conductors over the peak period. At these temperatures it is apparent that a single coated conductor according to a preferred embodiment of the present invention is particularly advantageous. The empirical test data is consistent with the calculated values shown

and described above with reference to Table 1. The test data accordingly demonstrates the significant performance benefits which result from increasing the solar reflectivity in the presence of sunlight by utilising a single coated conductor according to a preferred embodiment of the present invention.

Temperature testing up to 250°C

Three different conductor strips were tested namely: (i) an uncoated bright aluminium (control) conductor; (ii) a conductor having a black emissive coating comprising a carbon black layer comprising 1 wt% carbon black in acetone; (iii) a conductor according to a preferred embodiment.

Samples were tested outdoors under low wind conditions. A 6V lead acid battery with 70AH nominal capacity was used. The battery was shorted with jump leads in order to heat the strip up to around 250°C. The current was set between 100-150A and was connected continuously to the test rig which resulted in the conductors increasing in temperature such that the uncoated control conductor reached an average temperature of 249.5°C.

Mean temperatures were calculated for each of the coatings at peak.

The results are shown in Fig. 10 which shows the mean temperatures of the different conductors over the peak period. At these elevated temperatures it is again apparent that a single coated conductor according to a preferred embodiment of the present invention is particularly advantageous. In particular, the test results show that compared to the control conductor, the single coated provides a temperature reducing effect of 55.4°C which represent a very significant performance advantage.

Self-cleaning photonic coatings to increase the capacity of overhead conductors

The present invention is particularly concerned with the inclusion of a superhydrophobic agent in the coating 401 provided on an overhead conductor 400 in order to render the coating self-cleaning in addition to be being corrosion resistant.

The coating 401 provided on the overhead conductor 400 according to the preferred embodiment is preferably white (or less preferably may be considered as having a high degree of whiteness). According to the preferred embodiment white may be defined as $L^* \geq 80$.

Two particularly preferred embodiments will now be discussed in more detail below namely: (i) a single inorganic layer 401 formed from a two-part kit; and (ii) a single inorganic layer 401 formed from a one part kit.

Surface modification has emerged recently as a cost effective method to increase the performance of overhead conductors. These work by optimising the external surface of the overhead conductor in terms of its solar reflectivity and thermal emissivity. Having high values (e.g. $\geq 0.9$) for both solar reflectivity (R) and thermal emissivity (E) promotes a significant cooling effect on overhead conductors. This reduction in operating temperature reduces the resistance of the conductor and increases the current carrying capacity.

Several coating based solutions have been proposed to achieve this. For example, various inorganic and organic based coatings are known to lower the operating temperature of overhead lines.

However, the known coatings are predominantly non-white. Furthermore, a known problem with white conductors is that they suffer from discoloration over time.

It will be appreciated by those skilled in the art that conventional single layer (or monolayer) white coating products will accrete dirt and invariably darken over time as they are exposed to environmental pollutants.

As such, there is a particular emphasis in conventional arrangements in promoting thermal emissivity which in turn increases the solar absorptivity. As overhead conductors may operate above 90°C, this approach does result in a net cooling effect.

However, according to the present invention the solar reflectivity (R) is also maximised which advantageously can increase the cooling power.

Thus, substantial performance benefits exist by providing both a highly reflective and a highly emissive coating for a conductor in a manner according to various embodiments of the present invention.

In contrast, conventional arrangements such as those disclosed, for example, in FR-2971617 (Nexan) and WO 2007/034248 (Simic) are considered to be ineffective from a commercial perspective due to the propensity for white coatings to darken and discolour over time.

The progressive darkening of initially white coatings over a period of time makes conventional white coatings preclusive as solutions for overhead conductors as network operators need to be able confidently to thermally rate their lines according to stable levels of solar reflectivity and thermal emissivity.

Thus, end users and network operators must plan according to an aged solar reflectance not the new or initial solar reflectance. It will be appreciated that significant and variable drops in solar reflectance are not practical from a network operators perspective who need to be able to thermally rate their overhead lines.

The dirt resistance of a distribution or power line could in theory be increased by using a coating having an

additive such as colloidal silica ($SiO_2$). However, the use of such additives has been shown to result in up to a 20% reduction in the solar reflectance.

The surface of the conductor might also be washed with a high powered jet wash. However, a person skilled in the will understand this to be impractical from a commercial, safety and cost perspective especially when considering that the distribution or power line will be a high voltage overhead line.

The provision of a coating having a superhydrophobic agent according to the present invention which provides a self-cleaning effect will immediately be recognised as being advantageous.

A particular advantage of incorporating a superhydrophobic agent to impart self-cleaning functionality into the coating according to the present invention is the ability to provide a durable white coating which requires little or no maintenance over time. According to various embodiments of the present invention the (white) coating will maintain a high degree of whiteness (i.e. $L^* \geq 80$) for a substantially longer period of time than conventional white coatings. According to an embodiment the coating may remain white having a $L^* \geq 80$ for an indefinite period of time when subjected to standard levels of airborne pollution.

According to various embodiments self-cleaning capabilities are preferably integrated into a white reflective monolayer.

Self-cleaning coatings may have a number of operating mechanisms. According to various embodiments the coating may be simultaneously: (i) anti-static thereby reducing the ability of particles to stick to the surface; (ii) super-hydrophilic thereby reducing the water contact angle of surface water thereby acting to collect and clear surface particulate matter on the surface more effectively in the presence of atmospheric water; and (iii) photocatalytic.

According to an embodiment anatase titanium dioxide ($TiO_2$) may be utilised as an additional self-cleaning agent. Anatase titanium dioxide ($TiO_2$) is a semi-conductor with a band gap of 3.2 eV, which when excited with ultra-violet light, creates hydroxyl ($OH^-$) and superoxide ($O_2^-$) radicals which preferably act to decompose surface organic matter accreted onto the coating into carbon dioxide ($CO_2$) and water ($H_2O$).

Single inorganic layer formed from a two-part kit

A self-cleaning white photonic coating according to an embodiment of the present invention may be formed by mixing together two parts of a kit.

The two part composition may comprise a first composition (part A) comprising: (i) a coating binder 50-70 wt% (of part A); (ii) one or more optically active pigments e.g. rutile titanium dioxide ($TiO_2$) 10-20 wt% (of part A); (iii) a superhydrophobic agent 1.76%-2.75 wt% (of part A); (iv) optionally a photocatalytic agent; (v) optionally inert fillers 10-20 wt% (of part A); and (vi) optionally zinc based co-curatives 0.4-1wt% (of part A).

The two part composition preferably comprises a second composition (part B) comprising: (i) water 50-70 wt% (of part B); (ii) optionally a rheology modifier 0.3-1 wt% (of part B); (iii) optionally magnesium based co-curatives 10-15 wt% (of part B); (iv) optionally zinc based co-curative 1-3 wt% (of part B); and (v) optionally an aqueous emulsion 7-15 wt% (of part B).

Coating binder

According to a particularly preferred embodiment the binder may comprise an alkali or alkaline metal silicate binder and the binder may be water based. For example, the alkali (or alkaline) metal silicate preferably comprises potassium silicate ($K_2SiO_3$). Alternatively, the alkali (or alkaline) metal silicate may comprise sodium silicate. The sodium silicate may comprise sodium metasilicate ($Na_2SiO_3$), sodium orthosilicate ($Na_4SiO_4$) or sodium pyrosilicate ($Na_6Si_2O_7$).

According to an embodiment the alkali (or alkaline) metal silicate may comprise lithium silicate ($Li_2SiO_3$).

According to another embodiment the alkali (or alkaline) metal silicate may comprise calcium silicate ($Ca_2SiO_4$) or calcium orthosilicate.

According to another embodiment the alkali (or alkaline) metal silicate may comprise magnesium aluminium silicate ($AlMgSiO_4$).

Nanosilica ("nS") or colloidal silica ($SiO_2$)

Nanosilica ("nS") or colloidal silica ($SiO_2$) may be added to increase the Si:alkali metal ratio and thereby increase the polymerisation of a coating according to a preferred embodiment. The resulting coating may comprise a siloxane polymer. The nanosilica ("nS") or colloidal silica ($SiO_2$) can increase the abrasion resistance and adhesion of the silicate to aluminium. Further, the addition of nanosilica ("nS") or colloidal silica ($SiO_2$) preferably further increases the inherent emissivity of the silicate binder further improving the cooling effect.

Siloxane (silicone) polymers

According to various embodiments of the present invention a single coating may be formed which may at least partially comprise a siloxane (silicone) polymer.

For reference purposes the chemical structure of several different siloxanes is shown below in Table 5:

Table 5

| **Name** | **Hexamethylcyclo-trisiloxane (D3)** | **Octamethylcyclo-tetrasiloxane (D4)** | **Decamethylcyclopentasiloxane (D5)** | **Dodecamethylcyclo-hexasiloxane (D6)** | **Hexamethyldisiloxane (HMDS)** |
|---|---|---|---|---|---|
| Molecular formula | $C_8$-$H_{18}$-$O_3$-$Si_3$ | $C_8$-$H_{24}$-$O_4$-$Si_4$ | $C_{10}$-$H_{30}$-$O_5$-$Si_5$ | $C_{12}$-$H_{36}$-$O_6$-$Si_6$ | $C_6$-$H_{18}$-O-$Si_2$ |
| Structural formula | 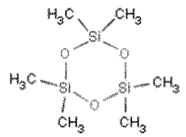 | 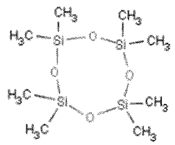 | 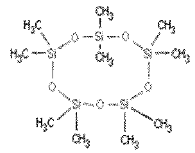 | 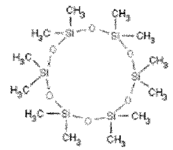 | 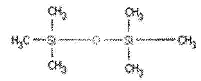 |
| Molecular weight | 222.46 | 296.64 | 370.80 | 444.93 | 162.42 |
| CAS-no | 541-05-9 | 556-67-2 | 541-02-6 | 540-97-6 | 107-46-0 |
| Synonyms (among others) | Dimethylsiloxane cyclic trimer | Cyclic dimethylsiloxane tetramer,<br>KF994<br>Part of Cyclomethicone | Cyclic dimethylsiloxane pentamer,<br><br>KF995<br>Oow coming 245 fluid.<br>Part of Cyclomethicone | Cyclohexasiloxane | Oxybis(trimethylsilane), Bis (trimethylsilyl)ether |

Rheology additive

Optionally viscosity modifiers/rheology agents can be included in the resin. These thickeners can be cellulosic including methyl cellulose, hydroxy ethyl cellulose ("HEC"), carboxy methyl cellulose ("CMC"), hydroxy propyl cellulose ("HPC") and hydrophobically modified hydroxy ethyl cellulose. Alternatively, alkali swellable emulsions ("ASE"), hydrophobic alkali swellable emulsions ("HASE"), hydrophobically modified ethylenoxide urethane rheology modifier ("HUER"), organoclays, polyamides and fumed silicas can be used.

Photocatalytically active pigments

According to various embodiment a photocatalytic agent may additionally be included into the conductor coating.

According to a preferred embodiment the photocatalytic agent may comprise ≥ 70 wt% anatase titanium dioxide ($TiO_2$) further preferably having an average particle size ≤ 100 nm.

The photocatalytic agent preferably results in the photocatalytic conversion of organic matter which may have adhered to the coating provided on the conductor. In particular, when anatase titanium dioxide ($TiO_2$) is excited by ultraviolet light it creates hydroxyl (OH-) and superoxide ($O_2^-$) radicals which preferably decompose surface organic matter into carbon dioxide ($Co_2$) and water ($H_2O$).

According to an embodiment the photocatalytic agent may comprise a commercially available form of titanium dioxide ($TiO_2$) known either as DEGUSSA (EVONIK) (RTM) P25 or AEROXIDE (RTM) $TiO_2$ P25.

DEGUSSA (EVONIK) (RTM) P25 titanium dioxide ($TiO_2$) is a powdered form of titanium dioxide ($TiO_2$). The properties of P25 titanium dioxide ($TiO_2$) have been investigated in detail and reference is made to the Journal of Photochemistry and Photobiology A: Chemistry, 216(2-3): 179-182 which refers to the powdered form of titanium dioxide ($TiO_2$) as comprising a mixture of anatase, rutile and amorphous titanium dioxide ($TiO_2$) in the ratio anatase:rutile:amorphous 78:14:8.

It is noted that DEGUSSA (EVONIK) (RTM) P25 titanium dioxide ($TiO_2$) is often (incorrectly) reported as comprising 70:30, 80:20 or 85:15 anatase:rutile crystallites. Accordingly, the presence of the amorphous form of titanium dioxide ($TiO_2$) in DEGUSSA (EVONIK) (RTM) P25 titanium dioxide ($TiO_2$) seems often (incorrectly) to be ignored.

It has been reported that the average particle size ("aps") of the anatase titanium dioxide ($TiO_2$) in DEGUSSA (EVONIK) (RTM) P25 is approximately 85 nm and the average particle size ("aps") of rutile titanium dioxide ($TiO_2$) in DEGUSSA (EVONIK) (RTM) P25 is approximately 25 nm.

Titanium dioxide ($TiO_2$) may be used as a photocatalyst for decomposition of organic pollutants because it is chemically stable and biologically benign. The band gap of titanium dioxide ($TiO_2$) is larger than 3 eV (~3.0 for rutile and ~3.2 for anatase) thus making pure titanium dioxide ($TiO_2$) primarily active for ultra-violet light.

It is believed that the specific phase mixture of different polymorphs of titanium dioxide ($TiO_2$) as are present in DEGUSSA (EVONIK) (RTM) P25 has a synergistic effect and an increased photocatalytic activity is observed compared to pure phases (i.e. either relative to pure rutile titanium dioxide ($TiO_2$) or to pure anatase titanium dioxide ($TiO_2$)).

It is also generally accepted that pure anatase titanium dioxide ($TiO_2$) exhibits a higher photocatalytic activity than pure rutile titanium dioxide ($TiO_2$).

It is known that anatase titanium dioxide ($TiO_2$) has a larger band gap than rutile titanium dioxide ($TiO_2$). While this reduces the light that can be absorbed, it may raise the valence band maximum to higher energy levels relative to redox potentials of adsorbed molecules. Accordingly, the oxidation power of electrons may be increased and electron transfer may be facilitated from the titanium dioxide ($TiO_2$) to the adsorbed molecules.

Optically active pigments

Depending on the composition the coating may further comprise non-photocatalytic pigments. The pigments are preferably white in colour. According to a particularly preferred embodiment the coating may be arranged to have over 90% total solar reflectivity. This may be achieved in part by including optically active pigments in the coating which preferably promote solar reflectance without increasing absorption of visible light.

The optically active pigments may include rutile titanium dioxide ($TiO_2$).

According to other embodiments the optically active pigment may comprise silicon dioxide ($SiO_2$), Copper Oxide CuO or cerium hydroxide ($Ce(OH)_3$).

Fillers

An inorganic filler may be included for a number of purposes including pigment extension and increasing the thermal emissivity. The pigments preferably do not increase the absorption of solar radiation. According to various embodiments the filler may comprise calcium carbonate ($CaCO_3$), calcined kaolin ($Al_2O_3.2SiO_2$) or talc (e.g. hydrated

magnesium silicate ($H_2Mg_3(SiO_3)_4$ or $Mg_3Si_4O_{10}(OH)_2$)).

According to another embodiment a filler with a high brightness such as sodium alumino silicate may be used to increase the total solar reflectivity.

Curing agent - co-curative metal salts

According to various embodiments the coating may comprise a metal salt. In particular, polyvalent metal cations, such as Zn2+, Ca2+ and Mg2+ can increase the viscosity of alkali metal silicate coatings (and siloxane coatings) and decrease the curing time. These can be added to make a two part solution. The solubility of the metal salt added determines the pot-life of the coating. For example, highly soluble metal salts such as magnesium sulphate ($MgSO_4$) will react readily with the alkali metal silicate coating (or siloxane coating) and reduce the pot-life substantially. Preferred salts include zinc oxide (ZnO), zinc stearate ($C_{36}H_{70}O_4Z_n$), trimagnesium orthophosphate ($Mg_3O_3P_2$), magnesium oxide (MgO) and magnesium carbonate (MgCOs).

Reference to the "pot-life" of the coating is intended to be understood in the conventional sense of a two-pack or multi-component coating systems that cure through a chemical reaction. These systems generally consist of a base component (often called the "Part A") and a catalyst or hardener component (often called the "Part B"). When these components are mixed together a chemical reaction starts which will lead to the curing of the coating. In practical terms the term "pot-life" may be considered as the time from combining the components of the coating to the point at which the mixed coating is no longer useable. Pot-life is commonly thought of as the length of time that a mixed (catalysed) coating system retains a viscosity low enough to be applied to a surface (although this is not strictly true).

These materials can be combined to make a two part silicate coating with self-cleaning properties which adheres strongly to aluminium and provides sufficient flexibility required to be applied on conductors which are wrapped around cylindrical drums. The zinc based co-curative is important in both part A and part B to allow for rapid curing and the formation of insoluble films. The following section demonstrates how self-cleaning rates compare with dirt accretion on white surfaces.

Non-superhydrophobic comparative example 1A

The following comparative example which is disclosed for general information purposes only relates to a base non-superhydrophobic coating composition.

A two part water based inorganic photonic coating was manufactured comprising a first composition (part A) and a second composition (part B).

The first composition (part A) comprised: (i) potassium silicate (BETOLIN (RTM) K35, WOLLNER (RTM) GMBH, Ludwigshafen) 68.3 p.b.w.; (ii) rutile titanium dioxide ($TiO_2$) having an average particle size of 500 nm 20 p.b.w.; (iii) calcined kaolin ($Al_2O_3.2SiO_2$) 7.4 p.b.w.; (iv) talc (e.g. hydrated magnesium silicate ($H_2Mg_3(SiO_3)_4$ or $Mg_3Si_4O_{10}(OH)_2$)) 9.6 p.b.w.; (v) zinc stearate ($C_{36}H_{70}O_4Z_n$) 0.3 p.b.w.; and (vi) zinc oxide (ZnO) 0.2 p.b.w.

The second composition (part B) comprised: (i) water 56.7 p.b.w.; (ii) hydroxyethyl cellulose ($CH_2CH_2OH$) 0.6 p.b.w.; (iii) trimagnesium orthophosphate ($Mg_3O_8P_2$) 9.4 p.b.w.; (iv) magnesium carbonate ($MgCO_2$) 6 p.b.w.; and (v) zinc oxide (ZnO) 2.3 p.b.w.

It will be understood that "p.b.w." refers to "parts by weight" and can be used to indicate the relative proportion of components to be included in each composition.

The reagents were mixed in that order in two separate beakers. These were then mixed in a 1:1 ratio and mixed with a high speed mixer until uniform dispersal was achieved.

It is to be noted that this example is not superhydrophobically active as no superhydrophobically agent was included in this formulation.

However, as a based formulation, the following tests were performed: (i) coating finish; (ii) mandrel bend test; and (iii) coating finish. The results are presented in Table 6 below.

Non-superhydrophobic comparative example 1B

The following comparative example which is disclosed for general information purposes only relates to a base non-superhydrophobic coating composition.

A two part water based inorganic photonic coating was manufactured comprising a first composition (part A) and a second composition (part B).

The first composition (part A) comprised: (i) potassium silicate (BETOLIN (RTM) K35, WOLLNER (RTM) GMBH, Ludwigshafen) 68.3 p.b.w.; (ii) rutile titanium dioxide ($TiO_2$) having an average particle size of 500 nm 20 p.b.w.; (iii) calcined kaolin ($Al_2O_3.2SiO_2$) 7.4 p.b.w.; (iv) talc (e.g. hydrated magnesium silicate ($H_2Mg_3(SiO_3)_4$ or $Mg_3Si_4O_{10}(OH)_2$)) 9.6 p.b.w.; (v) zinc stearate ($C_{36}H_{70}O_4Z_n$) 0.3 p.b.w.; and (vi) zinc oxide (ZnO) 0.2 p.b.w.

The second composition (part B) comprised: (i) water 56.7 p.b.w.; (ii) hydroxyethyl cellulose ($CH_2CH_2OH$) 0.6 p.b.w.; (iii) trimagnesium orthophosphate ($Mg_3O_8P_2$) 9.4 p.b.w.; (iv) magnesium carbonate ($MgCO_2$) 6 p.b.w.; (v) zinc oxide (ZnO) 2.3 p.b.w.; and (vi) 40% solids acrylic latex emulsion additive 3.5 p.b.w.

The reagents were mixed in that order in two separate beakers. These were then mixed in a 1:1 ratio and mixed with a high speed mixer until uniform dispersal was achieved.

It is to be noted that this example is not superhydrophobically active as no superhydrophobically active agent was included in this formulation.

However, as a based formulation, the following tests were performed: (i) coating finish; (ii) mandrel bend test; and (iii) coating finish. The results are presented in Table 6 below.

Non-superhydrophobic comparative example 1C

The following comparative example which is disclosed for general information purposes only relates to a base non-superhydrophobic coating composition.

A two part water based inorganic photonic coating was manufactured comprising a first composition (part A) and a second composition (part B).

The first composition (part A) comprised: (i) potassium silicate (BETOLIN (RTM) K35, WOLLNER (RTM) GMBH, Ludwigshafen) 68.3 p.b.w.; (ii) rutile titanium dioxide ($TiO_2$) having an average particle size of 500 nm 20 p.b.w.; (iii) calcined kaolin ($Al_2O_3.2SiO_2$) 7.4 p.b.w.; (iv) talc (e.g. hydrated magnesium silicate ($H_2Mg_3(SiO_3)_4$ or $Mg_3Si_4O_{10}(OH)_2$)) 9.6 p.b.w.; (v) zinc stearate ($C_{36}H_{70}O_4Z_n$) 0.3 p.b.w.; (vi) zinc oxide (ZnO) 0.2 p.b.w.

The second composition (part B) comprised: (i) water 56.7 p.b.w.; (ii) hydroxyethyl cellulose ($CH_2CH_2OH$) 0.6 p.b.w.; (iii) trimagnesium orthophosphate ($Mg_3O_8P_2$) 9.4 p.b.w.; (iv) magnesium carbonate ($MgCO_2$) 6 p.b.w.; (v) zinc oxide (ZnO) 2.3 p.b.w.; and (vi) 40% solids acrylic latex emulsion additive 7.55 p.b.w.

The reagents were mixed in that order in two separate beakers. These were then mixed in a 1:1 ratio and mixed with a high speed mixer until uniform dispersal was achieved.

It is to be noted that this example is not superhydrophobically active as no superhydrophobically active agent was included in this formulation.

However, as a based formulation, the following tests were performed: (i) coating finish; (ii) mandrel bend test; and (iii) coating finish. The results are presented in Table 6 below.

Non-superhydrophobic comparative example 1D

The following comparative example which is disclosed for general information purposes only relates to a base non-superhydrophobic coating composition.

A two part water based inorganic photonic coating was manufactured comprising a first composition (part A) and a second composition (part B).

The first composition (part A) comprised: (i) potassium silicate (BETOLIN (RTM) K35, WOLLNER (RTM) GMBH, Ludwigshafe) 68.3 p.b.w.; (ii) rutile titanium dioxide ($TiO_2$) having an average particle size of 500 nm 20 p.b.w.; (iii) calcined kaolin ($Al_2O_3.2SiO_2$) 7.4 p.b.w.; (iv) talc (e.g. hydrated magnesium silicate ($H_2Mg_3(SiO_3)_4$ or $Mg_3Si_4O_{10}(OH)_2$)) 9.6 p.b.w.; (v) zinc stearate ($C_{36}H_{70}O_4Z_n$) 0.3 p.b.w.; and (vi) zinc oxide (ZnO) 0.2 p.b.w.

The second composition (part B) comprised: (i) water 56.7 p.b.w.; (ii) hydroxyethyl cellulose ($CH_2CH_2OH$) 0.6 p.b.w.; (iii) trimagnesium orthophosphate ($Mg_3O_8P_2$) 9.4 p.b.w.; (iv) magnesium carbonate ($MgCO_2$) 6 p.b.w.; (v) zinc oxide (ZnO) 2.3 p.b.w.; and (vi) 40% solids polydimethylsiloxane ("PDMS" ($C_2H_6OSi)_n$) latex emulsion additive 3.5 p.b.w.

The reagents were mixed in that order in two separate beakers. These were then mixed in a 1:1 ratio and mixed with a high speed mixer until uniform dispersal was achieved.

It is to be noted that this example is not superhydrophobically active as no superhydrophobically active agent was included in this formulation.

However, as a based formulation, the following tests were performed: (i) coating finish; (ii) mandrel bend test; and (iii) coating finish. The results are presented in Table 6 below.

Non-superhydrophobic comparative example 1E

The following comparative example which is disclosed for general information purposes only relates to a base non-superhydrophobic coating composition.

A two part water based inorganic photonic coating was manufactured comprising a first composition (part A) and a second composition (part B).

The first composition (part A) comprised: (i) potassium silicate (BETOLIN (RTM) K35, WOLLNER (RTM) GMBH, Ludwigshafen) 68.3 p.b.w.; (ii) rutile titanium dioxide ($TiO_2$) having an average particle size of 500 nm 20 p.b.w.; (iii)

calcined kaolin ($Al_2O_3.2SiO_2$) 7.4 p.b.w.; (iv) talc (e.g. hydrated magnesium silicate ($H_2Mg_3(SiO_3)_4$ or $Mg_3Si_4O_{10}(OH)_2$)) 9.6 p.b.w.; (v) zinc stearate ($C_{36}H_{70}O_4Z_n$) 0.3 p.b.w.; and (vi) zinc oxide 0.2 p.b.w.

The second composition (part B) comprised: (i) water 56.7 p.b.w.; (ii) hydroxyethyl cellulose ($CH_2CH_2OH$) 0.6 p.b.w.; (iii) trimagnesium orthophosphate ($Mg_3O_8P_2$) 9.4 p.b.w.; (iv) magnesium carbonate ($MgCO_2$) 6 p.b.w.; (v) zinc oxide (ZnO) 2.3 p.b.w.; and (vi) 40% solids polydimethylsiloxane ("PDMS" $(C_2H_6OSi)_n$) latex emulsion additive 7.55 p.b.w.

The reagents were mixed in that order in two separate beakers. These were then mixed in a 1:1 ratio and mixed with a high speed mixer until uniform dispersal was achieved.

It is to be noted that this example is not superhydrophobically active as no superhydrophobically active agent was included in this formulation.

However, as a based formulation, the following tests were performed: (i) coating finish; (ii) mandrel bend test; and (iii) coating finish. The results are presented in Table 6 below.

Results - application/applicability, adhesion and coating finish/flexibility

Examples 1A-1E detailed above were subjected to the following tests.

*Mandrel Bend Test:* The samples were bent round a 6 mm cylindrical mandrel. If the coating cracked and detached from the aluminium sample this was counted as a fail.

*Cross Hatch Adhesion Test:* The samples adhesion to aluminium was tested with a cross hatch adhesion test.

*Coating Finish:* The general usability of the coating was rated as "Fail", "Acceptable" or "Pass" according to the number of coating defects and ease of application of the coating.

Table 6

| Example | Application/applicability | Adhesion | Coating finish/flexibility |
|---|---|---|---|
| 1C | Pass | 4A | Fail |
| 1B | Pass | 4A | Fail |
| 1E | Poor | 4A | Fail |
| 1D | Pass | 4A | Pass |
| 1A | Pass | 4A | Pass |

This demonstrates that whilst acrylic latex additives can improve the rheology and usability of the coating it generally vitiates the mechanical properties of the coating. PDMS ($(C_2H_6OSi)_n$) emulsion additives should be minimised to below 5 wt% to ensure there is no significant effect on usability or flexibility.

Superhydrophobic coating compositions

The previous section demonstrated it was feasible to get flexible coatings with high solar reflectance for aluminium. The following section outlines formulation variants to incorporate superhydrophobic capabilities within the silicate layer in accordance with various embodiments of the present invention.

Photocatalytic comparative example 2

The following comparative example which is disclosed for general information purposes only relates to a base non-superhydrophobic but photocatalytic coating composition.

A water based coating was prepared by mixing together two compositions.

The first composition (part A) comprised: (i) potassium silicate (BETOLIN (RTM) K35, WOLLNER (RTM) GMBH, Ludwigshafen) 26 p.b.w.; (ii) photocatalytic titanium dioxide ($TiO_2$) (DEGUSSA (EVONIK) (RTM) P25) 15 p.b.w.; (iii) colloidal silica ($SiO_2$) (LUDOX (RTM) SK, GRACE GMBH and Co) 18 p.b.w.; (iv) calcium carbonate ($CaCO_3$) 5 $\mu$m 30 p.b.w.; (v) sodium aluminosilicate ($AlNa_{12}SiO_5$) 1.5 p.b.w.; and (vi) stabiliser 1.5 p.b.w.

The second composition (Part B) comprised: (i) water 70.4 p.b.w.; (ii) hydroxyethyl cellulose ($CH_2CH_2OH$) 0.6 p.b.w.; (iii) magnesium carbonate ($MgCO_2$) 9.2 p.b.w.; (iv) magnesium oxide (MgO) 4.6 p.b.w.; and (v) zinc oxide (ZnO) 2 p.b.w.

The reagents or compositions were mixed in the order as listed above in two separate beakers. The contents of the two beakers were then mixed in a 1:1 ratio and mixed with a high speed mixer until uniform dispersal was achieved.

Photocatalytic comparative example 3

The following comparative example which is disclosed for general information purposes only relates to a base non-superhydrophobic but photocatalytic coating composition.

A water based coating was prepared by mixing together two compositions.

The first composition (part A) comprised: (i) potassium silicate (BETOLIN (RTM) K35, WOLLNER (RTM) GMBH, Ludwigshafen) 26 p.b.w.; (ii) photocatalytic titanium dioxide ($TiO_2$) (DEGUSSA (EVONIK) (RTM) P25) 15 p.b.w.; (iii) colloidal silica ($SiO_2$) (LUDOX (RTM) SK, GRACE GMBH and Co) 18 p.b.w.; (iv) calcined kaolin ($Al_2O_3.2SiO_2$) 12 p.b.w.; (v) talc (e.g. hydrated magnesium silicate ($H_2Mg_3(SiO_3)_4$ or $Mg_3Si_4O_{10}(OH)_2$)) 18 p.b.w.; (vi) sodium aluminosilicate ($AlNa_{12}SiO_5$) 1.5 p.b.w.; and (vii) stabiliser 1.5 p.b.w.

The second composition (part B) comprised: (i) water 70.4 p.b.w.; (ii) hydroxyethyl cellulose ($CH_2CH_2OH$) 0.6 p.b.w.; (iii) trimagnesium orthophosphate ($Mg_3O_8P_2$) 9.2 p.b.w.; (iv) magnesium carbonate ($MgCO_2$) 4.6 p.b.w.; and (v) zinc oxide (ZnO) 2 p.b.w.

The reagents or compositions were mixed in the order as listed above in two separate beakers. The contents of the two beakers were then mixed in a 1:1 ratio and mixed with a high speed mixer until uniform dispersal was achieved.

In comparative example 2 and comparative example 3, high solar reflectivity is achieved with relatively high volumes or wt% of titanium dioxide ($TiO_2$) (DEGUSSA (EVONIK) (RTM) P25) or equivalent and other high brightness materials including sodium aluminosilicate ($AlNa_{12}SiO_5$). These examples combine the coating properties of comparative example 1A with photocatalytic properties to provide a durable, self-cleaning coating for cooling overhead lines. Once the first coating or mixture is applied to an electrical conductor, the first coating or mixture is preferably dehydrated or dried. According to a preferred embodiment the conductor and applied coating is preferably thermally cured.

Examples have been given above of various two-part compositions. However, according to various further embodiments of the present invention the components necessary for providing the first coating 401 may be provided in a single composition which is formed or mixed and then sprayed or painted on to the conductor 400. Accordingly, although a two-part kit may be preferred it is not essential to provide the various components which form the single coating in a multi-part kit. Instead, all the components may be provided in a single mixture.

Water based alkali metal silicate inorganic coatings

According to the preferred embodiment the coating or mixture which is provided on the electrical conductor comprises an inorganic binder which preferably comprises a water based alkali metal silicate binder. Water based silicate coatings include a silicate anion stabilised by an alkali metal cation as shown in Eqn. 5 below:

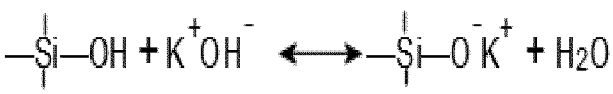

(5)

Eqn. 5 above illustrates equilibrium between undissociated silanol (Si-OH) groups and an alkali metal stabilised silicate anion ($Si-O^-$).

According to various embodiments the alkali metal cation may comprise either sodium, potassium or lithium creating sodium silicate, potassium silicate or lithium silicate.

The above preferred water-based coatings may be cured by a condensation reaction whereby the silicate anions condense to form a siloxane chain and produce water as shown below:

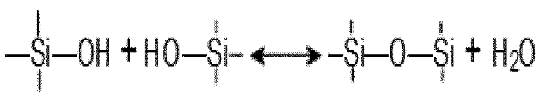

(6)

Eqn. 6 above shows equilibrium between two silanol groups and a siloxane bond, with water as a by-product.

The full removal of water is desirable for the silicate polymer to form completely i.e. the equilibrium needs to be driven completely to the right. Without the full removal of water, the film might resolubilise and the coating might degrade.

The coatings according to various embodiments of the present invention may be self-cured through the addition of divalent metal cations and/or may be post-cured with dilute phosphoric acid. According to various embodiments dried films may be assisted by the addition of divalent metal cations such as $Mg^{2+}$ and $Ca^{2+}$. The resultant coatings according to various embodiments are moisture stable at ambient temperatures.

According to various embodiments the alkali metal silicate film or coating may be cured. According to an embodiment the coating may be subjected to a stepwise thermal curing process over a period of several hours. The thermal curing process may according to various embodiments be for a period of 4-24 hours. According to various embodiments, the alkali metal silicate film or coating may be thermally cured for a period of < 1 hour, 1-2 hours, 2-3 hours, 3-4 hours, 4-5 hours, 5-6 hours, 6-7 hours, 7-8 hours, 8-9 hours, 9-10 hours, 10-11 hours, 11-12 hours, 12-13 hours, 13-14 hours, 14-15 hours, 15-16 hours, 16-17 hours, 17-18 hours, 18-19 hours, 19-20 hours, 20-21 hours, 21-22 hours, 22-23 hours, 23-24 hours or > 24 hours.

According to various embodiments the thermal curing process may be arranged to dehydrate the silicate film or inorganic coating which includes a self-cleaning superhydrophobic agent.

According to various embodiments the thermal curing process may comprise a stepwise curing process in order to incrementally dehydrate the film and cause the first coating or mixture to solidify or otherwise harden.

According to various embodiments the final curing temperature may in the range 50-80°C. For example, the final curing temperature may be in the range 50-60°C, 60-70°C or 70-80°C. In particular, if the coating is applied to a conductor which has a maximum operating temperature of 80°C then the final curing temperature may be arranged to be ≤ 80°C, ≤ 90°C or ≤ 100°C .

According to other embodiments the final curing temperature may in the range 150-250°C. For example, the final curing temperature may be in the range 150-160°C, 160-170°C, 170-180°C, 180-190°C, 190-200°C, 200-210°C, 210-220°C, 220-230°C, 230-240°C or 240-250°C. In particular, if the coating is applied to a conductor which has a maximum operating temperature of 250°C then the final curing temperature may be arranged to be ≤ 250°C, ≤ 260°C, ≤ 270°C, ≤ 280°C, ≤ 290°C or ≤ 300°C.

The silicate coating which is applied to conductors according to various embodiments may have a long lifetime due to their purely inorganic nature, which makes degradation by ultra-violet and general atmospheric exposure very limited.

The silicate inorganic coating including a superhydrophobic agent is also particularly effective as a self-cleaning layer which maintains the substantially white coating to a high level of whiteness for an extended period of time.

Comparative example 4

The following comparative example which is disclosed for general information purposes only relates to a base non-superhydrophobic but photocatalytic coating composition.

A particularly preferred water based coating was prepared by mixing together two compositions. The first composition (part A) comprised: (i) potassium silicate (BETOLIN (RTM) 20 K35, WOLLNER (RTM) GMBH, Ludwigshafen) 64 p.b.w.; (ii) rutile titanium dioxide (500 nm APS) 8 p.b.w.; (iii) photocatalytic titanium dioxide ($TiO_2$) (DEGUSSA (EVONIK) (RTM) P25) 3.2 p.b.w.; (iv) calcined kaolin (MATTEX (RTM) PRO BSF) 1.88 p.b.w.; (v) sodium aluminosilicate ($AlNa_{12}SiO_5$) 1.5 p.b.w.; and (vi) a stabiliser 1.5 p.b.w.

The second composition (Part B) comprised: (i) water 15 p.b.w.; (ii) 25 hydroxyethyl cellulose ($CH_2CH_2OH$) 0.6 p.b.w.; (iii) trimagnesium orthophosphate (4.5 p.b.w) and (iv) zinc oxide (ZnO) 2 p.b.w.

The reagents or compositions were mixed in the order as listed above in two separate beakers. The contents of the two beakers were then mixed in a 1:1 ratio and mixed with a high speed mixer until uniform dispersal was achieved.

Tests performed on comparative example 4

The following tests were performed on Inventive Example 4.

*Coating Finish:* The general usability of the coating was rated as "Fail", "Acceptable" or "Pass" according to the number of coating defects and ease of application of the coating.

*Cross Hatch Adhesion Test:* The sample's adhesion to aluminium was tested with a cross hatch adhesion test.

*Mandrel Bend Test:* The sample was bent round a 6 mm cylindrical mandrel. If the coating cracked and detached from the aluminium sample then this was counted as a fail.

*Solar Reflectivity:* UV-VIS-NIR analysis was carried out using a JASCO (RTM) V670 UVVIS-NIR spectrometer with ISN-723 integrating sphere attachment. An integrating sphere attachment allowed collection of diffuse radiation (about 180°) reflected by the sample. The total solar reflectance was calculated.

*Thermal Emissivity:* In accordance with ASTM C 1371-15 Standard Test Method for Determination of Emittance of Materials Near Room Temperature Using Portable Emissometers. Emissivity was measured using a D & S emissometer without traceability to reference standards as described in Clause 6.1.5 of the standard. The results are for five different positions of the sample surface which have then been averaged.

*Current Cycling*: A circuit was set up with a coated and uncoated conductor connected in series. The conductor comprised an Aluminium Conductor Steel Reinforced ("ACSR") conductor. Thermocouples were inserted into the conductor core. A specified level of current was transmitted through the conductor for 30 minutes which had the effect of

increasing the temperature of the conductor. The conductor was then allowed to cool for 30 minutes. The process was then repeated and cycled. This test demonstrates a compatible coefficient of thermal expansion between the coating and the aluminium conductor.

*Outdoor Cooling Performance*: An uncoated and coated Aluminium Conductor Steel Reinforced ("ACSR") conductor were connected in series and were suspended two metres above the ground with full exposure to meteorological conditions. The conductors were subjected to 200A current and the resulting temperatures were recorded every second for a week by thermocouples which were inserted into the conductor cores. This test demonstrated real world cooling performance of coated conductors compared with uncoated conductors in the United Kingdom during the month of May.

Results of testing comparative example 4

The results of testing comparative example 4 are summarised below:

| | |
|---|---|
| Coating Finish | Pass |
| Crosshatch adhesion | 5B |
| Mandrel Bend Test | Pass |
| Solar Reflectance | 0.903 |
| Thermal Emissivity | 0.93 |

Fig. 12 shows the results of the current cycling test and shows that Inventive Example 4 was particularly effective in reducing the temperature of the Aluminium Conductor Steel Reinforced ("ACSR") conductor.

Fig. 13 shows the results of the current cycling test performed on Inventive Example 4 in terms of the temperature reduction (%) per cycle.

Fig. 14 shows the results of the outdoor cooling performance test performed on Inventive Example 4.

Fig. 15 shows the temperature reduction (%) difference between Inventive Example 4 and an uncoated conductor during a week in the month of May in the United Kingdom.

The above results and testing illustrate that comparative example 4 comprises a particularly beneficial composition which, in use, forms a first coating on a conductor which is particularly effective in reducing the temperature of the conductor as well as having beneficial self-cleaning properties.

It will be understood that an important aspect of the present invention is that a coating is provided (or is formed from a two or more part kit) which when cured comprises an inorganic alkali metal silicate based resin and which incorporates both an optically active element and also a further superhydrophobic agent.

There are two main routes to achieving or producing a superhydrophobic alkali metal silicate which may form a key component of the resin according to various embodiments of the present invention. One route is through the addition of functionalised resins which modify the surface properties of the silicate. The other route is through a hydrogel method. The two main routes will now be described in more detail below.

Functionalised resins

A superhydrophobic alkali metal silicate coating for overhead conductors may be achieved with a single mixture or by mixing two or more parts of a kit.

According to an embodiment, if a kit is provided, then the kit may comprise a first part including an inorganic alkali metal silicate, an optically active element and a superhydrophobic agent.

These essential components and other optional components will now be discussed in turn.

inorganic Alkali Metal Silicate Resin

The coating or mixture which is provided on the electrical conductor comprises an inorganic resin or binder which preferably comprises a water based alkali metal silicate binder. Water based silicate coatings include a silicate anion stabilised by an alkali metal cation as shown in Eqn. 7 below:

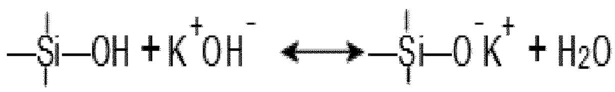

(7)

Eqn. 7 above illustrates equilibrium between undissociated silanol (Si-OH) groups and an alkali metal stabilised silicate anion (Si-O$^-$).

The alkali metal cation may comprise either sodium, potassium or lithium creating sodium silicate, potassium silicate or lithium silicate.

The above water-based coatings may be cured by a condensation reaction whereby the silicate anions condense to form a siloxane chain and produce water as shown below:

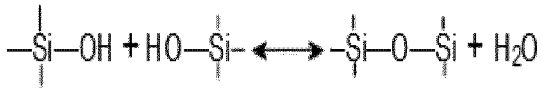

(8)

Eqn. 8 above shows equilibrium between two silanol groups and a siloxane bond, with water as a by-product.

The full removal of water is desirable for the silicate polymer to form completely i.e. the equilibrium needs to be driven completely to the right. Without the full removal of water, the film might resolubilise and the coating might degrade.

The coatings may be self-cured through the addition of divalent metal cations and/or may be post-cured with dilute phosphoric acid. Dried films may be assisted by the addition of divalent metal cations such as $Mg^{2+}$ and $Ca^{2+}$. The resultant coatings are moisture stable at ambient temperatures.

The alkali metal silicate film or coating may be cured. The coating may be subjected to a stepwise thermal curing process over a period of several hours. The thermal curing process may be for a period of 4-24 hours. The alkali metal silicate film or coating may be thermally cured for a period of < 1 hour, 1-2 hours, 2-3 hours, 3-4 hours, 4-5 hours, 5-6 hours, 6-7 hours, 7-8 hours, 8-9 hours, 9-10 hours, 10-11 hours, 11-12 hours, 12-13 hours, 13-14 hours, 14-15 hours, 15-16 hours, 16-17 hours, 17-18 hours, 18-19 hours, 19-20 hours, 20-21 hours, 21-22 hours, 22-23 hours, 23-24 hours or > 24 hours.

The thermal curing process may be arranged to dehydrate the silicate film or inorganic coating which also preferably includes a superhydrophobic agent.

The thermal curing process may comprise a stepwise curing process in order to incrementally dehydrate the film and cause the coating or film or mixture to solidify or otherwise harden.

The final curing temperature may in the range 50-80°C. For example, the final curing temperature may be in the range 50-60°C, 60-70°C or 70-80°C. In particular, if the coating is applied to a conductor which has a maximum operating temperature of 80°C then the final curing temperature may be arranged to be ≤ 80°C, ≤ 90°C or ≤ 100°C.

According to other embodiments the final curing temperature may in the range 150-250°C. For example, the final curing temperature may be in the range 150-160°C, 160-170°C, 170-180°C, 180-190°C, 190-200°C, 200-210°C, 210-220°C, 220-230°C, 230-240°C or 240-250°C. In particular, if the coating is applied to a conductor which has a maximum operating temperature of 250°C then the final curing temperature may be arranged to be ≤ 250°C, ≤ 260°C, ≤ 270°C, ≤ 280°C, ≤ 290°C or ≤ 300°C.

The silicate coating which is applied to conductors according to various arrangements may have a long lifetime due to their purely inorganic nature, which makes degradation by ultra-violet and general atmospheric exposure very limited.

The silicate inorganic coating which includes a superhydrophobic agent is also particularly effective as a self-cleaning layer which maintains the substantially white coating to a high level of whiteness for an extended period of time.

According to various embodiments the coating which is preferably applied to a conductor helps to reduce the accretion of dirt which would otherwise reduce solar reflectance. By making the coatings self-cleaning by incorporating a superhydrophobic agent into the inorganic alkali metal silicate resin are able to maintain increased solar reflectance overtime. Self-cleaning can be achieved by making the surfaces superhydrophobic.

Beneficially, the superhydrophobic coating is also self-cleaning as inspired by the lotus leaf structure. The self-cleaning functionality can be attributed to the rolling water droplets underpinned by the low water sliding angle. This is a beneficial synergy as it allows for the solar reflectance to remain highly solar reflective over time.

One aspect of the present invention is that a coating is provided comprising an inorganic alkali metal silicate resin which incorporates a superhydrophobic agent. The inorganic alkali metal silicate resin by itself has many advantages over other conventional or known coatings. In particular, the resin has a high level of ultra-violet durability which is particularly important if the coating is to be deployed on a power transmission or distribution line located in a desert or

other location where the line will be exposed to high levels of ultra-violet radiation.

However, for all the advantages of using an inorganic alkali metal silicate resin one problem with using such a coating per se is that inorganic alkali metal silicate resins can suffer from a low level of moisture resistance for the reasons explained above.

Accordingly, incorporating a superhydrophobic agent into such a resin has the beneficial effect of significantly improving the moisture resistance of the alkali metal silicate resin thereby significantly improving the corrosion resistance of the coating which is otherwise particularly vulnerable to exposure salt laden moisture during the night when a low load power line may be operating at ambient temperature and may be at a temperature below the dew point.

Accordingly, the coating according to the present invention is superhydrophobic which in turn simultaneously acts as a corrosion barrier to the electrical conductor which would otherwise be damaged from a highly corrosive desert environment and at the same time the superhydrophobic nature of the coating means that the coating is inherently self-cleaning i.e. it actively prevents the accretion of dirt or other pollutants which would have the effect of discolouring the coating i.e. changing the coating from white to off-white. As will be understood by those skilled in the art, and for the reasons given above, according to the preferred embodiment the coating preferably has a high level of whiteness which is preferably maintained for an extended period of time (years) thereby helping to ensure that a high level of solar reflectance is maintained over an extended period of time.

The inorganic alkali metal silicate resin may comprise potassium silicate ($K_2SiO_3$).

The inorganic alkali metal silicate resin may comprise sodium silicate.

The sodium silicate may comprise sodium metasilicate ($Na_2SiO_3$), sodium orthosilicate ($Na_4SiO_4$) or sodium pyrosilicate ($Na_6Si_2O_7$).

The inorganic alkali metal silicate resin may comprise lithium silicate ($Li_2SiO_3$).

Optically active fillers

Depending on the composition the coating may further comprise non-photocatalytic pigments. The pigments are preferably white in colour. According to a particularly preferred embodiment the coating may be arranged to have over 90% total solar reflectivity. This may be achieved in part by including optically active pigments in the coating which preferably promote solar reflectance without increasing absorption of visible light.

The optically active pigments may include rutile titanium dioxide ($TiO_2$).

According to other embodiments the optically active pigment may comprise silicon dioxide ($SiO_2$), Copper Oxide (CuO) or cerium hydroxide ($Ce(OH)_3$).

The coating comprises from about 5 to about 25 wt.% optically active element.

The coating preferably comprises from about 10 to about 20 wt.% optically active element.

The coating preferably comprises from about 15 to about 20 wt.% optically active element.

Superhydrophobic additive

A superhydrophobic agent is also used. One additive which can be used to increase the superhydrophobicity of the coating is surface functionalised silica nanoparticles. Silica nanoparticles can be surface functionalised with silanes coupling agents to impart superhydrophobicity. These can include hexamethyldisilazane (HMDS), tetraethyl orthosilicate (TEOS), tetramethyl orthosilicate (TMOS), Methyltrimethoxy silane (MTMS), vinyltrimethoxysilane (VTMS), phenyltrimethoxysilane (PTMS), 3-Aminopropyltriethoxysilane (APS), trimethylchlorosilane (TMCS), triethoxyoctylsilane (C8-TEOS), 3-(2-Aminoethylamino)propyldimethoxymethylsilane (AEAPS), 3-Glycidyloxypropyl)trimethoxysilane (GPTMS), 3-(Methacryloyloxy)propyl]trimethoxysilane (MAPTS), hexadecyltrimethoxysilane (C16-silane), (3-Mercaptopropyl)trimethoxysilane (MPTMS), triethoxyphenylsilane (phenyl-silane) and 1H,1H,2H,2H-Perfluorooctyltriethoxysilane (FAS), trichloro(1H,1H,2H,2H-perfluorooctyl)silane, 1H,1H,2H,2H-perfluorodecyltriethoxysilane (PFDTES), or any other appropriate silane.. After the silica nanoparticle has been surface treated the materials can be dried to form a fumed silica powder which then can be incorporated into the formulation as a dry reagent. Commercially available fumed silicas include AEROSIL (RTM) R 972 (EVONIK (RTM)) which is a fumed silica after treated with dimethyldischolrosilane ("DDS").

Alternatively, the hydrophobicity agent may include functional polysiloxanes which impart a strong hydrophobic effect as shown in Fig. 16. The polysiloxane additives typically added at 1-5% of the total formulation can be modified with amine groups or fluoro-containing groups. These systems can be water based or solvent free. Commercially available examples include SILSAN (RTM) 1300, TEGO (RTM) PHOBE (RTM) 1505 and RUCOSIL (RTM) B-HS. Further, the direct addition of the silane coupling agents listed above into the formulation can also impart a hydrophobising effect. Another hydrophobising agent includes the use of micro powder Polymethylsilsesquioxanes which can impart significant hydrophobicity into the coating finish.

The coating preferably comprises from about 0.5 to about 10 wt.% superhydrophobic agent.

The coating preferably comprises from about 1 to about 5 wt.% superhydrophobic agent.

The coating preferably comprises from about 2 to about 3 wt.% superhydrophobic agent.

Optional fillers

An inorganic filler may be included for a number of purposes including pigment extension and increasing the thermal emissivity. The pigments preferably do not increase the absorption of solar radiation. According to various embodiments the filler may comprise calcium carbonate ($CaCO_3$), calcined kaolin ($Al_2O_3.2SiO_2$) or talc (e.g. hydrated magnesium silicate ($H_2Mg_3(SiO_3)_4$ or $Mg_3Si_4O_{10}(OH)_2$)).

According to another embodiment a filler with a high brightness such as sodium alumino silicate may be used to increase the total solar reflectivity.

Optional photocatalytic agent

According to various embodiments an optional photocatalytic agent may be included into the inorganic alkali metal silicate resin. The photocatalytic agent preferably comprising ≥ 70 wt% anatase titanium dioxide ($TiO_2$) and preferably has an average particle size ≤ 100 nm which results in the photocatalytic conversion of any organic matter which may have adhered or which may otherwise adhere to the coating. In particular, when anatase titanium dioxide ($TiO_2$) is excited by ultraviolet light it creates hydroxyl ($OH^-$) and superoxide ($O_2^-$) radicals which will decompose surface organic matter into carbon dioxide ($CO_2$) and water ($H_2O$).

According to an embodiment the photocatalytic agent may comprise a commercially available form of titanium dioxide ($TiO_2$) known as DEGUSSA (RTM) (EVONIK (RTM)) P25 or AEROXIDE (RTM) $TiO_2$ P25.

DEGUSSA (RTM) EVONIK (RTM) P25 titanium oxide ($TiO_2$) is a conventional powdered form of titanium dioxide ($TiO_2$). The properties of P25 titanium oxide have been investigated in detail and reference is made to the Journal of Photochemistry and Photobiology A: Chemistry, 216(2-3): 179-182 which found that the powder comprised titanium dioxide ($TiO_2$) in the ratio anatase:rutile:amorphous 78:14:8.

It is noted that DEGUSSA (RTM) EVONIK (RTM) P25 is commonly reported as comprising 70:30, 80:20 or 85:15 anatase:rutile crystallites and that no reference is often made to the presence of the amorphous form of titanium dioxide ($TiO_2$).

It has been reported that the average particle size ("aps") of the anatase titanium dioxide ($TiO_2$) in DEGUSSA (RTM) EVONIK (RTM) P25 is approximately 85 nm and that the average particle size of rutile titanium dioxide ($TiO_2$) in DEGUSSA (RTM) (EVONIK (RTM)) P25 is approximately 25 nm.

Titanium dioxide ($TiO_2$) is particularly preferred as a photocatalyst according to embodiments of the present invention for decomposition of organic pollutants because it is chemically stable and biologically benign. The band gap of titanium dioxide ($TiO_2$) is larger than 3 eV (~3.0 for rutile and ~3.2 for anatase) thereby making pure titanium dioxide ($TiO_2$) primarily active for ultra-violet light.

It is believed that the specific phase mixture of different polymorphs of titanium dioxide ($TiO_2$) as are present in DEGUSSA (RTM) (EVONIK (RTM)) P25 have a synergistic effect and an increased photocatalytic activity is observed compared to pure phases (i.e. either relative to pure rutile titanium dioxide ($TiO_2$) or to pure anatase titanium dioxide ($TiO_2$)).

It is also generally accepted that pure anatase titanium dioxide ($TiO_2$) exhibits a higher photocatalytic activity than pure rutile titanium dioxide ($TiO_2$).

It is known that anatase titanium dioxide ($TiO_2$) has a larger band gap than rutile titanium dioxide ($TiO_2$). While this reduces the light that can be absorbed, it may raise the valence band maximum to higher energy levels relative to redox potentials of adsorbed molecules. Accordingly, the oxidation power of electrons may be increased and electron transfer may be facilitated from the titanium dioxide ($TiO_2$) to the adsorbed molecules.

The coating preferably comprises from about 0.1 to about 5 wt.% photocatalytic agent.

The coating preferably comprises from about 1 to about 4 wt.% photocatalytic agent.

Optional adjunct resin

Optionally an organic adjunct resin can be included to improve the mechanical properties of the coating and its adhesion to metal. In this invention, it is possible to include an additional resin to form a mixed binder system. Adjunct resins may include poly(diorganosiloxanes). Poly(diorganosiloxane)-based resins are raw materials in which a 3-dimensional polymer network consisting of primarily Si-O-Si linkages (where Si is silicon and O is oxygen) are dispersed in an appropriate solvent, including water or organic solvents such as xylene, toluene and other non-polar solvents, to form an emulsion or solution. This backbone imparts the resulting coating with excellent thermal, ultra-violet and chemical resistance due to the strength of the Si-O bonds.

Within the polymeric structure itself, in addition to the Si-O-Si linkages which form the backbone, other functional groups are present to satisfy the required tetravalency of the silicon atoms. These commonly include organic aryl and alkyl groups, commonly denoted as 'R' in chemical nomenclature, or further inorganic elements such as zinc, well known to incorporate into the polymeric structure and impart excellent corrosion resistance. Accordingly, for poly(diorganosiloxanes), the chemical formula of the polymer can be represented as $[R^1R^2SiO]_n$, where $R_1$ and $R_2$ are organic functional groups and may be the same or different as shown in Eqn. 9 below. This 2D chain is often used in conjunction with a crosslinking agent (see below) to increase the dimensionality of the binder:

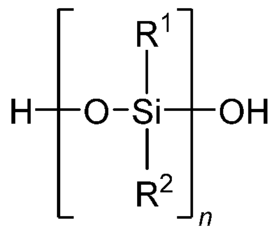

(9)

Eqn. 9 above shows the structure of poly(diorganosiloxane), where $R_1$ and $R^2$ are organic functional groups and may be the same or different.

The resin used in this formulation may include PDMS where the organic functional groups is a $C_1$ alkyl group. Further Alkyl groups relevant to this invention range from R = $C_1$ to $C_8$, i.e. octyl groups. Similarly relevant is the use of alkenyl groups of chain length $C_2$ to $C_8$ and aryl groups of compositions $C_6$ (phenyl) to $C_{10}$.

Commercially available poly(siloxane) resins suitable for use here include, but are not limited to, SILRES (RTM) BS 45, SILRES (RTM) BS 60, SILRES (RTM) MSE 100, SILRES (RTM) MPF 52 E, SILRES (RTM) MP 50 E, SILRES (RTM) BS 6042 (all water-based), SILRES (RTM) HP 2000, SILRES (RTM) HK 46, SILRES (RTM) REN 80 (solvent-based) from Wacker (RTM); SVE-2067 from ACC SILICONES (RTM); the SILIKOPHEN (RTM) range from EVONIK (RTM); DOWSIL (RTM) 2405, DOWSIL (RTM) RSN-0431 HS, DOWSIL (RTM) RSN-0808 and DOWSIL (RTM) US-CF-2403 from DOW (RTM); the SILMER (RTM) range from SILTECH (RTM).

The adjunct resin may also include acrylic resins. These typically include a waterborne acrylic emulsion of active content approximately 50%. Styrene resins may also be used, however these are more prone to degradation under ultra-violet exposure due to the presence of aromatic moieties. Epoxy resins are also commonly used in conjunction with polysiloxanes. Co-polymeric resins can also be used, including styrene-acrylic co-polymers.

Acrylic resins are those in which the repeating unit of the polymer have acrylic acid- or ester-based side chains; common acrylic resins include poly(methyl acrylate) (PMA) and poly(methyl methacrylate) ("PMMA"). For styrene resins, the repeating unit consists of an aromatic functionality in the polymer side chain, for example in poly(styrene), where every other carbon in the backbone is bonded to a phenyl ring. For a copolymer of the two, the repeating units alternate, either in a random or a structured fashion dependent on the synthetic method used. Epoxy resins are ubiquitous in the coatings industry, and consist of repeating units with epoxide functionalities. Representative examples of the chemical structure of each are shown in Eqn. 10 below:

a 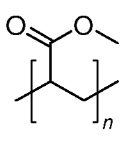 b 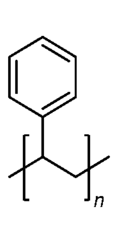 c 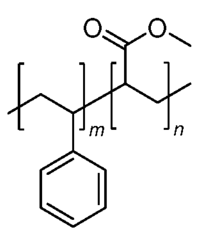 d 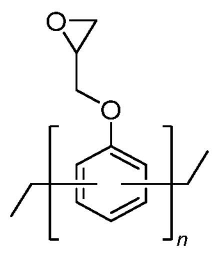

(10)

Eqn. 10 above shows the representative structure of: (a) acrylic resins (poly(methyl acrylate)); (b) styrene resins (poly(styrene)); (c) styrene-acrylic co-polymers (using styrene and methyl acrylate); and (d) epoxy resins (standard epoxy phenol novolac).

Commercially available acrylic resins suitable for use here include, but are not limited to, the ACRONAL (RTM) range from BASF (RTM); the PRIMAL (RTM) range from DOW (RTM); certain resins from the ORGAL (RTM) range from ORGANIK KIMYA (RTM). Commercially available epoxy resins suitable for use here include, but are not limited

to, ANCAREZ (RTM) AR555 from EVONIK (RTM); the D.E.R. (RTM) range from OLIN EPOXY (RTM); the EPON (RTM) range from HEXION (RTM). Commercially available styrene-acrylic copolymer resins suitable for use here include, but are not limited to, the ACRONAL (RTM) range from BASF (RTM); certain resins from the ORGAL (RTM) range from ORGANIK KIMYA (RTM). The benefits of using a mixed binding system include increased resistance to weathering and corrosion resistance in comparison to organic-only resins, and the ability to cure at ambient temperature. Adhesion is also improved over siloxane-only coatings in which poor adhesion is a notorious problem. Such coatings are also able to replace two-coat systems (i.e. primer, mid-coat, top-coat etc.) with a single layer coating. Commercially available mixed polysiloxane and organic resins suitable for use here include, but are not limited to, SILRES (RTM) HP from WACKER (RTM); SILIKOFTAL (RTM) and SILIKOPON (RTM) from EVONIK (RTM). Organic resin-compatible polysiloxane binders resins suitable for use here include, but is not limited to, SILRES (RTM) SY 409 from WACKER (RTM); DOWSIL (RTM) 5314, DOWSIL (RTM) SH 840, DOWSIL (RTM) 3037, DOWSIL (RTM) 3055, DOWSIL (RTM) 3074 and DOWSIL (RTM) RSN-0409 HS from DOW (RTM).

Optional ultra-violet stabilisers

Optionally ultra-violet stabilisers can also be formulated into the resin. These may include ultraviolet light absorbers 2-(2H-Benzotriazol-2-yl)-p-cresol or 2- -(4,6-Bis-(2,4-dimethylphenyl)-1,3,5-triazin-2-yl)-5-(octyloxy)-phenol. Alternatively, hindered amine light stabilisers ("HALS") such as Bis(1-octyloxy-2,2,6,6-tetramethyl-4-piperidyl)sebacate or Bis(1,2,2,6,6-pentamethyl-4-piperidyl)sebacate as examples.

Optionalrheology agents

Optionally viscosity modifiers/rheology agents can be included in the resin. These thickeners can be cellulosic including methyl cellulose, hydroxy ethyl cellulose ("HEC"), carboxy methyl cellulose ("CMC"), hydroxy propyl cellulose ("HPC") and hydrophobically modified hydroxy ethyl cellulose. Alternatively, alkali swellable emulsions ("ASE"), hydrophobic alkali swellable emulsions ("HASE"), hydrophobically modified ethylenoxide urethane rheology modifier ("HUER"), organoclays, polyamides and fumed silicas can be used.

The second part of a kit preferably includes a curing agent.

Optional curing agent

According to various embodiments an optional curing agent may be included and may be selected from the group consisting of: (i) zinc oxide (ZnO); (ii) zinc stearate ($C_{36}H_{70}O_4Zn$); (iii) trimagnesium orthophosphate ($Mg_3O_8P_2$); (iv) magnesium oxide (MgO); (v) magnesium carbonate ($MgCO_3$); and (vi) magnesium hydroxide ($Mg(OH)_2$). The curing agent simply supplies a source of cations (for example, $Mg^{2+}$) as an alkali metal counter ion stabilising the binder solution ($Na^+$ for example). This begins the polymerisation reaction of the silicate anions thereby significantly reducing the curing time.

Hydrogel method

According to another embodiment a different method for achieving or producing superhydrophobic alkali metal silicates may be obtained by utilising the hydrogel method. Alkali metal silicates exist in an equilibrium with the alkali metal counter ion, such as $Na^+$ stabilising the silicate anion ($SiO^-$) and consequently preventing the polymerisation of the film and forming a dense 3D network of siloxane linkages.

According to various embodiments the coating or mixture which is provided on the electrical conductor preferably comprises an inorganic resin or binder which preferably comprises a water based alkali metal silicate binder. Water based silicate coatings include a silicate anion stabilised by an alkali metal cation as shown in Eqn. 11 below:

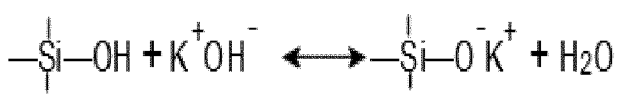

(11)

Eqn. 11 above illustrates equilibrium between undissociated silanol (Si-OH) groups and an alkali metal stabilised silicate anion (Si-$O^-$).

The alkali metal cation may comprise either sodium, potassium or lithium creating sodium silicate, potassium silicate or lithium silicate.

The above water-based coatings may be cured by a condensation reaction whereby the silicate anions condense

to form a siloxane chain and produce water as shown below:

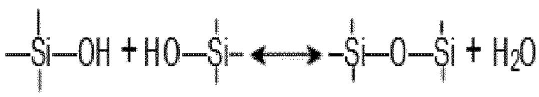

(12)

Eqn. 12 above shows equilibrium between two silanol groups and a siloxane bond, with water as a by-product.

The full removal of water is desirable for the silicate polymer to form completely i.e. the equilibrium needs to be driven completely to the right. Without the full removal of water, the film might resolubilise and the coating might degrade.

The coatings may be self-cured through the addition of divalent metal cations and/or may be post-cured with dilute phosphoric acid. Dried films may be assisted by the addition of divalent metal cations such as $Mg^{2+}$ and $Ca^{2+}$. The resultant coatings are moisture stable at ambient temperatures.

In the previous steps, the alkali metal silicate was formulated with other reagents "as is" with the curing agent used to displace the stabilisation counter ion leading to polymerisation. However, it is also possible to hydrolyse alkali metal silicates in the presence of acid to form pure silicic acid, which will then condense to form a silica sol as demonstrated in the reactions below as Eqns. 13 and 14:

$$Na_2SiO_3 + H_2O + 2HCl \rightarrow Si(OH)_4 + 2NaCl \quad (13)$$

$$Si(OH)_4 + (OH)_4Si \rightarrow (OH)_3Si{-}O{-}Si(OH)_3 + H_2O \quad (14)$$

The product of the second reaction (Eqn. 14) will then be hydrolysed and form a 3D network of siloxane bonds.

Thus, a method for creating a superhydrophobic alkali metal silicate which cools overhead conductors involves the following three.

1. Hydrolysis of alkali metal silicate to form silicic acid

Primarily this involves the removal of the sodium counter ion ex-ante coating formulation. This can be done using acids such as hydrochloric acid, oxaclic acid, silicic acid. This can also be done by using ion exchange resins which remove the counter ion from the alkali metal silicate resin. Further, once silicic acid is achieved, this can be base catalysed with ammonium hydroxide to increase the gel formation for the 3D network of siloxane bonds.

2. Solvent exchange

Once the hydrogel is formed it should be exchanged with solvents to improve its viscosity and the ability to disperse pigments into the resin.

The composition as initially applied to an overhead conductor may include a solvent. The solvent may comprise water or a non-aqueous solvent. For example, it is contemplated that a non-aqueous solvent such as xylene, xylol or dimethylbenzene ($(CH_3)_2C_6H_4$), toluene ($(CH_3)C_6H_5$), ethanol ($C_2H_5OH$), isopropanol ($CH_3CH(OH)CH_3$), 2-ethoxyethanol ($C_2H_5OC_2H_4OH$) or 2-ethoxyethyl acetate ($CH_3C(O)OC_2H_4OC_2H_5$) may be utilised.

3. Superhydrophobicity/Silynation

At this stage it is possible to modify the silanol groups with agents which make the film superhydrophobic. This includes modifying the silicate solution with agents such as functionalised with silanes coupling agents to impart superhydrophobicity. These can include hexamethyldisilazane ("HMDS"), tetraethyl orthosilicate ("TEOS"), hexadecyl trimethoxysilane ("HDTMS"), tridecafluorooctyltriethoxysilane ("FAS") or any other appropriate silane.

Coating formulation

According to various embodiments various formulations may be dispersed into the coating to make it optically active and cool overhead power lines. These will now be discussed in more detail below.

Optically active fillers

Depending on the composition the coating may further comprise non-photocatalytic pigments. The pigments are preferably white in colour. According to a particularly preferred embodiment the coating may be arranged to have over 90% total solar reflectivity. This may be achieved in part by including optically active pigments in the coating which preferably promote solar reflectance without increasing absorption of visible light.
The optically active pigments may include rutile titanium dioxide ($TiO_2$).
According to other embodiments the optically active pigment may comprise silicon dioxide ($SiO_2$) or cerium hydroxide ($Ce(OH)_3$).
The coating comprises from about 5 to about 25 wt.% optically active element.
The coating preferably comprises from about 10 to about 20 wt.% optically active element.
The coating preferably comprises from about 15 to about 20 wt.% optically active element.

Optional photocatalytic agent

According to various embodiments an optional photocatalytic agent may be included into the inorganic alkali metal silicate resin. The photocatalytic agent preferably comprising ≥ 70 wt% anatase titanium dioxide ($TiO_2$) and preferably has an average particle size ≤ 100 nm which results in the photocatalytic conversion of any organic matter which may have adhered or which may otherwise adhere to the coating. In particular, when anatase titanium dioxide ($TiO_2$) is excited by ultraviolet light it creates hydroxyl ($OH^-$) and superoxide ($O_2^-$) radicals which will decompose surface organic matter into carbon dioxide ($CO_2$) and water ($H_2O$).
According to an embodiment the photocatalytic agent may comprise a commercially available form of titanium dioxide ($TiO_2$) known as DEGUSSA (RTM) (EVONIK (RTM)) P25 or AEROXIDE (RTM) $TiO_2$ P25.
DEGUSSA (RTM) (EVONIK (RTM)) P25 titanium oxide ($TiO_2$) is a conventional powdered form of titanium dioxide ($TiO_2$). The properties of P25 titanium oxide have been investigated in detail and reference is made to the Journal of Photochemistry and Photobiology A: Chemistry, 216(2-3): 179-182 which found that the powder comprised titanium dioxide ($TiO_2$) in the ratio anatase:rutile:amorphous 78:14:8.
It is noted that DEGUSSA (RTM) (EVONIK (RTM)) P25 is commonly reported as comprising 70:30, 80:20 or 85:15 anatase:rutile crystallites and that no reference is often made to the presence of the amorphous form of titanium dioxide ($TiO_2$).
It has been reported that the average particle size ("aps") of the anatase titanium dioxide ($TiO_2$) in DEGUSSA (RTM) (EVONIK (RTM)) P25 is approximately 85 nm and that the average particle size of rutile titanium dioxide ($TiO_2$) in DEGUSSA (RTM) (EVONIK (RTM)) P25 is approximately 25 nm.
Titanium dioxide ($TiO_2$) is particularly preferred as a photocatalyst according to embodiments of the present invention for decomposition of organic pollutants because it is chemically stable and biologically benign. The band gap of titanium dioxide ($TiO_2$) is larger than 3 eV (~3.0 for rutile and ~3.2 for anatase) thereby making pure titanium dioxide ($TiO_2$) primarily active for ultra-violet light.
It is believed that the specific phase mixture of different polymorphs of titanium dioxide ($TiO_2$) as are present in DEGUSSA (RTM) (EVONIK (RTM)) P25 have a synergistic effect and an increased photocatalytic activity is observed compared to pure phases (i.e. either relative to pure rutile titanium dioxide ($TiO_2$) or to pure anatase titanium dioxide ($TiO_2$)).
It is also generally accepted that pure anatase titanium dioxide ($TiO_2$) exhibits a higher photocatalytic activity than pure rutile titanium dioxide ($TiO_2$).
It is known that anatase titanium dioxide ($TiO_2$) has a larger band gap than rutile titanium dioxide ($TiO_2$). While this reduces the light that can be absorbed, it may raise the valence band maximum to higher energy levels relative to redox potentials of adsorbed molecules. Accordingly, the oxidation power of electrons may be increased and electron transfer may be facilitated from the titanium dioxide ($TiO_2$) to the adsorbed molecules.
The coating preferably comprises from about 0.1 to about 5 wt.% photocatalytic agent.
The coating preferably comprises from about 1 to about 4 wt.% photocatalytic agent.

Additional superhydrophobic additive

A superhydrophobic agent is also used. One additive which can be used to increase the superhydrophobicity of the coating is surface functionalised silica nanoparticles. Silica nanoparticles can be surface functionalised with silanes coupling agents to impart superhydrophobicity. These can include hexamethyldisilazane (HMDS), tetraethyl orthosilicate (TEOS), tetramethyl orthosilicate (TMOS), Methyltrimethoxy silane (MTMS), vinyltrimethoxysilane (VTMS), phenyltrimethoxysilane (PTMS), 3-Aminopropyltriethoxysilane (APS), trimethylchlorosilane (TMCS), triethoxyoctylsilane (C8-TEOS), 3-(2-Aminoethylamino)propyldimethoxymethylsilane (AEAPS), 3-Glycidyloxypropyl)trimethoxysilane (GPTMS),

3- (Methacryloyloxy) propyl]tri m ethoxysi lane (MAPTS), hexadecyltrimethoxysilane (C16-silane), (3-Mercaptopropyl)trimethoxysilane (MPTMS), triethoxyphenylsilane (phenyl-silane) and 1H,1H,2H,2H-Perfluorooctyltriethoxysilane (FAS), trichloro(1H,1 H,2H,2H-perfluorooctyl)silane, 1H,1H,2H,2H-perfluorodecyltriethoxysilane (PFDTES), or any other appropriate silane.. After the silica nanoparticle has been surface treated the materials can be dried to form a fumed silica powder which then can be incorporated into the formulation as a dry reagent. Commercially available fumed silicas include AEROSIL (RTM) R 972 (EVONIK (RTM)) which is a fumed silica after treated with dimethyldischolrosilane ("DDS").

Alternatively, the hydrophobicity agent may include functional polysiloxanes which impart a strong hydrophobic effect as shown in Fig. 16. The polysiloxane additives typically added at 1-5% of the total formulation can be modified with amine groups or fluoro-containing groups. These systems can be water based or solvent free. Commercially available examples include SILSAN (RTM) 1300, TEGO (RTM) PHOBE (RTM) 1505 and RUCOSIL (RTM) B-HS. Further, the direct addition of the silane coupling agents listed above into the formulation can also impart a hydrophobising effect. Another hydrophobising agent includes the use of micro powder Polymethylsilsesquioxanes which can impart significant hydrophobicity into the coating finish.

The coating preferably comprises from about 0.5 to about 10 wt.% superhydrophobic agent.

The coating preferably comprises from about 1 to about 5 wt.% superhydrophobic agent.

The coating preferably comprises from about 2 to about 3 wt.% superhydrophobic agent.

Optional adjunct resin

Optionally an organic adjunct resin can be included to improve the mechanical properties of the coating and its adhesion to metal. In this invention, it is possible to include an additional resin to form a mixed binder system. Adjunct resins may include poly(diorganosiloxanes). Poly(diorganosiloxane)-based resins are raw materials in which a 3-dimensional polymer network consisting of primarily Si-O-Si linkages (where Si is silicon and O is oxygen) are dispersed in an appropriate solvent, including water or organic solvents such as xylene, toluene and other non-polar solvents, to form an emulsion or solution. This backbone imparts the resulting coating with excellent thermal, ultra-violet and chemical resistance due to the strength of the Si-O bonds.

Within the polymeric structure itself, in addition to the Si-O-Si linkages which form the backbone, other functional groups are present to satisfy the required tetravalency of the silicon atoms. These commonly include organic aryl and alkyl groups, commonly denoted as 'R' in chemical nomenclature, or further inorganic elements such as zinc, well known to incorporate into the polymeric structure and impart excellent corrosion resistance. Accordingly, for poly(diorganosiloxanes), the chemical formula of the polymer can be represented as $[R^1R^2SiO]_n$, where $R_1$ and $R_2$ are organic functional groups and may be the same or different (Eqn. 15). This 2D chain is often used in conjunction with a crosslinking agent (see below) to increase the dimensionality of the binder:

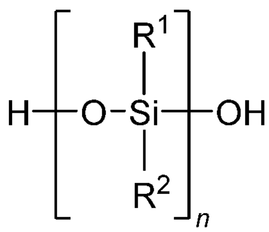

(15)

Eqn. 15 shows the structure of poly(diorganosiloxane), where $R_1$ and $R^2$ are organic functional groups and may be the same or different

The resin used in this formulation may include PDMS where the organic functional groups is a $C_1$ alkyl group. Further Alkyl groups relevant to this invention range from R = $C_1$ to $C_8$, *i.e.* octyl groups. Similarly relevant is the use of alkenyl groups of chain length $C_2$ to $C_8$ and aryl groups of compositions $C_6$ (phenyl) to $C_{10}$.

Commercially available poly(siloxane) resins suitable for use here include, but are not limited to, SILRES (RTM) BS 45, SILRES (RTM) BS 60, SILRES (RTM) MSE 100, SILRES (RTM) MPF (RTM) 52 E, SILRES (RTM) MP 50 E, SILRES (RTM) BS 6042 (all water-based), SILRES (RTM) HP 2000, SILRES (RTM) HK 46, SILRES (RTM) REN 80 (solvent-based) from WACKER (RTM); SVE-2067 (RTM) from ACC SILICONES (RTM); the SILIKOPHEN (RTM) range from EVONIK (RTM); DOWSIL (RTM) 2405, DOWSIL (RTM) RSN-0431 HS, DOWSIL (RTM) RSN-0808 and DOWSIL (RTM) US-CF-2403 from DOW (RTM); the SILMER (RTM) range from SILTECH (RTM).

The adjunct resin may also include acrylic resins. These typically include a waterborne acrylic emulsion of active content approximately 50%. Styrene resins may also be used, however these are more prone to degradation under ultra-violet exposure due to the presence of aromatic moieties. Epoxy resins are also commonly used in conjunction

with polysiloxanes. Co-polymeric resins can also be used, including styrene-acrylic co-polymers.

Acrylic resins are those in which the repeating unit of the polymer have acrylic acid- or ester-based side chains; common acrylic resins include poly(methyl acrylate) ("PMA") and poly(methyl methacrylate) ("PMMA"). For styrene resins, the repeating unit consists of an aromatic functionality in the polymer side chain, for example in poly(styrene), where every other carbon in the backbone is bonded to a phenyl ring. For a copolymer of the two, the repeating units alternate, either in a random or a structured fashion dependent on the synthetic method used. Epoxy resins are ubiquitous in the coatings industry, and consist of repeating units with epoxide functionalities. Representative examples of the chemical structure of each are shown in Eqn. 14:

a 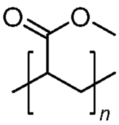 b 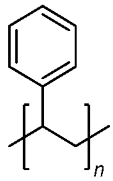 c 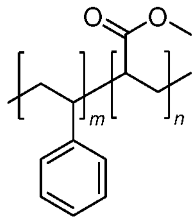 d 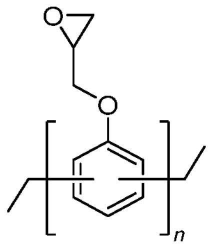

Eqn. 14 above shows representative structure of: (a) acrylic resins (poly(methyl acrylate)); (b) styrene resins (poly(styrene)); (c) styrene-acrylic co-polymers (using styrene and methyl acrylate); and (d) epoxy resins (standard epoxy phenol novolac).

Commercially available acrylic resins suitable for use here include, but are not limited to, the ACRONAL (RTM) range from BASF (RTM); the PRIMAL (RTM) range from DOW (RTM); certain resins from the ORGAL (RTM) range from ORGANIK KIMYA (RTM). Commercially available epoxy resins suitable for use here include, but are not limited to, ANCAREZ (RTM) AR555 from EVONIK (RTM); the D.E.R (RTM) range from OLIN EPOXY (RTM); the EPON (RTM) range from HEXION (RTM). Commercially available styrene-acrylic copolymer resins suitable for use here include, but are not limited to, the ACRONAL (RTM) range from BASF (RTM); certain resins from the ORGAL (RTM) range from ORGANIK KIMYA (RTM). The benefits of using a mixed binding system include increased resistance to weathering and corrosion resistance in comparison to organic-only resins, and the ability to cure at ambient temperature. Adhesion is also improved over siloxane-only coatings in which poor adhesion is a notorious problem. Such coatings are also able to replace two-coat systems (i.e. primer, mid-coat, top-coat etc.) with a single layer coating. Commercially available mixed polysiloxane and organic resins suitable for use here include, but are not limited to, SILRES (RTM) HP from WACKER (RTM); SILIKOFTAL (RTM) and SILIKOPON (RTM) from EVONIK. Organic resin-compatible polysiloxane binders resins suitable for use here include, but is not limited to SILRES (RTM) SY 409 from WACKER (RTM); DOWSIL (RTM) 5314, DOWSIL (RTM) SH 840, DOWSIL (RTM) 3037, DOWSIL (RTM) 3055, DOWSIL (RTM) 3074 and DOWSIL (RTM) RSN-0409 HS from DOW (RTM).

Optional ultra-violet stabiliser

Optionally one or more ultra-violet stabilisers can also be formulated into the resin. These may include ultraviolet light absorbers 2-(2H-benzotriazol-2-yl)-p-cresol or 2--(4,6-Bis-(2,4-dimethylphenyl)-1,3,5-triazin-2-yl)-5-(octyloxy)-phenol. Alternatively, hindered amine light stabilisers ("HALS") such as Bis(1-octyloxy-2,2,6,6-tetramethyl-4-piperidyl)sebacate or Bis(1,2,2,6,6-pentamethyl-4-piperidyl)sebacate as examples.

Optional rheology agent

Optionally one or more viscosity modifiers/rheology agents can be used. These thickeners can be cellulosic including methyl cellulose, hydroxy ethyl cellulose ("HEC"), carboxy methyl cellulose ("CMC"), hydroxy propyl cellulose ("HPC") and hydrophobically modified hydroxy ethyl cellulose ("HEC"). Alternatively, alkali swellable emulsions ("ASE"), hydrophobic alkali swellable emulsions ("HASE"), hydrophobically modified ethylenoxide urethane rheology modifier ("HUER"), organoclays, polyamides and fumed silicas can be used.

Although the present invention has been described with reference to preferred embodiments, it will be understood by those skilled in the art that various changes in form and detail may be made without departing from the scope of the invention as set forth in the accompanying claims.

## Examples

The coating of this invention is a two-part coating, consisting of an alkali metal silicate coating with all pigments,

additives, and binders (part 1) and a curing catalyst consisting of a solvent (water) and a curing catalyst (part 2).

The following curing catalysts were used:

**Catalyst 1 (Cat1):** Consisting of $Mg_3(PO_4)_2.5H_2O$ (20%) and water (80%)
**Catalyst 2 (Cat2):** Consisting of $MgCO_3.4H_2O$ (15%) and water (85%)
**Catalyst 3 (Cat3):** Consisting of $Mg_3(PO_4)_2.5H_2O$ (7.5%), $MgCOs.4H_2O$ (7.5%) and water (85%)

Examples will be denoted with an 'a' when **Cat1** was utilised, 'b' when **Cat2** was utilised, and 'c' when **Cat3** was utilised.

In each of the examples described below, parts 1 and 2 were mixed in an 1:1 ratio, applied to sandblasted aluminium plates with calibrated wound-wire application bars, dried under ambient conditions and subsequently cured at 75°C for 24 hours. The coatings were then subjected to the following tests:

**Adhesion**

Adhesion was determined using the Crosshatch Adhesion Tape Test (ASTM D3359 - 17). A crosshatch was scored into the coating using a crosshatch blade, over which scotch tape was applied and subsequently removed. The percentage of coating remaining in the scored area was evaluated and the adhesion level of the coating rated.

**Test of Curing**

The coating was drawn down on a sandblasted aluminium plate, dried at room temperature under ambient conditions, and subsequently cured at 75°C for 24 hours. In this instance, 'cured' is defined as passing the MEK (methyl ethyl ketone) rub test (ASTM D4752), in which the coating is resistant to 50 double rubs with MEK saturated cheesecloth.

**Water Resistance**

After being drawn down on a sandblasted aluminium plate and cured at 75°C for 24 hours, the coating was immersed in a water bath at room temperature for 3 days. After this time, the panel was removed and allowed to air-dry under ambient conditions. The mass difference between the panel before and after submersion was recorded to indicate any coating loss/dissolution, and the condition of the panel after testing recorded.

**Hydrophobicity**

The interaction between the surface of the cured coating and applied drops of water was recorded, and deemed to be hydrophobic if the static contact angle was >90° (and therefore considered a pass) and hydrophilic if the static contact angle was <90° (considered a fail).

Example 1

**Part 1**

Rutile titanium dioxide (17.0%), calcined kaolin (6.3%), talc (5.4%), zinc oxide (0.2%), and bis(trimethylsilyl)amine (HMDS)-functionalised fumed silica (1.9%) were added to a solution of water (9.4%), ethoxylated acetylenic diol surfactant (1.0%), polysiloxane hydrophobic agent (2.5%) and potassium silicate (Betolin K42, 56.6%) under stirring using a high-speed mixer until a homogeneous dispersion (part 1) was achieved.

**Example 1b**

Part 1 was added with vigorous mixing to **Cat2** to give a homogeneous dispersion, which was applied to the substrate as described above.

Adhesion: 4B
Curing (MEK): Pass
Hydrophobicity: Pass (Excellent water beading/high contact angle; excellent sliding angle/behaviour)
Water Immersion: Pass (No significant mass loss, no obvious dissolution, no changes to film, no chalking)

**Example 1c**

Part 1 was added with vigorous mixing to Cat3 to give a homogeneous dispersion, which was applied to the substrate as described above.

Adhesion: 4B
Curing (MEK): Pass
Hydrophobicity: Pass (Excellent water beading/high contact angle; good sliding angle/behaviour)
Water Immersion: Pass (No significant mass loss, no obvious dissolution, no changes to film, no chalking)

Example 2

**Part 1**

Rutile titanium dioxide (17.0%), calcined kaolin (6.3%), talc (5.4%), zinc oxide (0.3%), and untreated fumed silica (1.3%) were added to a solution of water (10.1%), ethoxylated acetylenic diol surfactant (1.1%), amine-functionalised polysiloxane hydrophobic agent (2.5%) and potassium silicate (Betolin K42, 56.1%) under stirring using a high-speed mixer until a homogeneous dispersion (part 1) was achieved.

**Example 2b**

Part 1 was added with vigorous mixing to **Cat2** to give a homogeneous dispersion, which was applied to the substrate as described above.

Adhesion: 4B
Curing (MEK): Pass
Hydrophobicity: Pass (Excellent water beading/high contact angle; excellent sliding angle/behaviour)
Water Immersion: Pass (No significant mass loss, no obvious dissolution, no changes to film, no chalking)

Example 3

**Part 1**

Rutile titanium dioxide (16.9%), calcined kaolin (6.2%), talc (5.4%), zinc oxide (0.3%), and spherical silica microbeads (1.3%) were added to a solution of water (8.5%), ethoxylated acetylenic diol surfactant (1.0%), tetraethyl orthosilicate (2.0%), polysiloxane hydrophobic agent (2.5%) and potassium silicate (Betolin K42, 56.0%) under stirring using a high-speed mixer until a homogeneous dispersion (part 1) was achieved.

**Example 3c**

Part 1 was added with vigorous mixing to **Cat3** to give a homogeneous dispersion, which was applied to the substrate as above.

Adhesion: 4B
Curing (MEK): Pass
Hydrophobicity: Pass (Good beading/high contact angle, good sliding angle/run-off behaviour)
Water Immersion: Pass (No significant mass loss, no obvious dissolution, no changes to film, no chalking)

Example 4

**Part 1**

Rutile titanium dioxide (16.8%), calcined kaolin (6.2%), talc (5.3%), zinc oxide (0.3%), and spherical silica microbeads (1.3%) were added to a solution of water (8.5%), ethoxylated acetylenic diol surfactant (1.0%), 1H,1H,2H,2H-perfluorooctyltrimethoxysilane (2.2%), polysiloxane hydrophobic agent (2.5%) and potassium silicate (Betolin K42, 55.8%) under stirring using a high-speed mixer until a homogeneous dispersion was achieved.

**Example 4a**

Part 1 was added with vigorous mixing to **Cat1** to give a homogeneous dispersion, which was applied to the substrate as above.

Adhesion: 4B
Curing (MEK): Pass
Hydrophobicity: Pass (Excellent beading/high contact angle, excellent sliding angle/run-off behaviour)
Water Immersion: Pass (No significant mass loss, no obvious dissolution, no changes to film, no chalking)

**Example 4c**

Part 1 was added with vigorous mixing to Cat3 to give a homogeneous dispersion, which was applied to the substrate as above.

Adhesion: 4B
Curing (MEK): Pass
Hydrophobicity: Pass (Excellent beading/high contact angle, excellent sliding angle/run-off behaviour)
Water Immersion: Pass (No significant mass loss, no obvious dissolution, no changes to film, no chalking)

Example 5

**Part 1**

Rutile titanium dioxide (16.9%), calcined kaolin (6.2%), talc (5.4%), zinc oxide (0.4%), and spherical silica microbeads (1.3%) were added to a solution of water (8.4%), ethoxylated acetylenic diol surfactant (1.1%), ethyl silicate 40 (2.0%), polysiloxane hydrophobic agent (2.5%) and potassium silicate (Betolin K42, 55.9%) under stirring using a high-speed mixer until a homogeneous dispersion was achieved.

**Example 5a**

Part 1 was added with vigorous mixing to **Cat1** to give a homogeneous dispersion, which was applied to the substrate as above.

Adhesion: 4B
MEK: Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 5c**

Part 1 was added with vigorous mixing to Cat3 to give a homogeneous dispersion, which was applied to the substrate as above.

Adhesion: 5B
MEK: Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

Example 6

**Part 1**

Rutile titanium dioxide (16.8%), calcined kaolin (6.2%), talc (5.4%), zinc oxide (0.4%), and spherical silica microbeads (1.3%) were added to a solution of water (8.4%), ethoxylated acetylenic diol surfactant (1.0%), methyltrimethoxysilane (2.1%), polysiloxane hydrophobic agent (2.6%) and potassium silicate (Betolin K42, 55.8%) under stirring

using a high-speed mixer until a homogeneous dispersion was achieved.

**Example 6a**

Part 1 was added with vigorous mixing to **Cat1** to give a homogeneous dispersion, which was applied to the substrate as above.

Adhesion: 4B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 6b**

Part 1 was added with vigorous mixing to **Cat2** to give a homogeneous dispersion, which was applied to the substrate as above.

Adhesion: 4B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 6c**

Part 1 was added with vigorous mixing to Cat3 to give a homogeneous dispersion, which was applied to the substrate as above.

Adhesion: 5B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

Example 7

**Part 1**

Rutile titanium dioxide (16.6%), calcined kaolin (6.2%), talc (5.3%), zinc oxide (0.4%), and spherical silica microbeads (2.0%) were added to a solution of water (9.8%), ethoxylated acetylenic diol surfactant (1.1%), polysiloxane hydrophobic agent (2.6%), hydroxyethyl cellulose thickener (1.0%) and potassium silicate (Betolin K42, 55.2%) under stirring using a high-speed mixer until a homogeneous dispersion was achieved.

**Example 7b**

Part 1 was added with vigorous mixing to **Cat2** to give a homogeneous dispersion, which was applied to the substrate as above.

Adhesion: 4B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 7c**

Part 1 was added with vigorous mixing to Cat3 to give a homogeneous dispersion, which was applied to the

substrate as above.

Adhesion: 5B
Curing (MEK): Pass
Hydrophobicity: Pass (Great beading/high contact angle, good sliding angle/run-off behaviour)
Water Immersion: Pass (No significant mass loss, no obvious dissolution, no changes to film, no chalking)

Example 8

**Part 1**

Rutile titanium dioxide (15.5%), calcined kaolin (5.7%), talc (4.9%), zinc oxide (0.3%), anatase $TiO_2$ (1.9%), and spherical silica microbeads (1.9%) were added to a solution of water (9.2%), ethoxylated acetylenic diol surfactant (1.0%), polysiloxane hydrophobic agent (2.5%) and potassium silicate (Betolin K42, 57.2%) under stirring using a high-speed mixer until a homogeneous dispersion was achieved.

**Example 8a**

Part 1 was added with vigorous mixing to **Cat1** to give a homogeneous dispersion, which was applied to the substrate as above.

Adhesion: 4B
Curing (MEK): Pass
Hydrophobicity: Pass (Great beading/high contact angle, great sliding angle/run-off behaviour)
Water Immersion: Pass (No significant mass loss, no obvious dissolution, no changes to film, no chalking)

**Example 8c**

Part 1 was added with vigorous mixing to **Cat3** to give a homogeneous dispersion, which was applied to the substrate as above.

Adhesion: 5B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

Example 9

**Part 1**

Rutile titanium dioxide (16.8%), calcined kaolin (6.2%), talc (5.4%), zinc oxide (0.3%), and spherical silica microbeads (1.5%) were added to a solution of water (8.5%), ethoxylated acetylenic diol surfactant (1.0%), hydroxy-terminated PDMS (2.0%), polysiloxane hydrophobic agent (2.6%) and potassium silicate (Betolin K42, 55.7%) under stirring using a high-speed mixer until a homogeneous dispersion was achieved.

**Example 9a**

Part 1 was added with vigorous mixing to **Cat1** to give a homogeneous dispersion, which was applied to the substrate as above.

Adhesion: 5B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 9b**

Part 1 was added with vigorous mixing to **Cat2** to give a homogeneous dispersion, which was applied to the substrate as above.

Adhesion: 5B
Curing (MEK): Pass
Hydrophobicity: Pass (Excellent beading/high contact angle, excellent sliding angle/run-off behaviour, no water residue remains)
Water Immersion: Pass (No significant mass loss, no obvious dissolution, no changes to film, no chalking)

**Example 9c**

Part 1 was added with vigorous mixing to **Cat3** to give a homogeneous dispersion, which was applied to the substrate as above.

Adhesion: 4B
Curing (MEK): Pass
Hydrophobicity: Pass (excellent beading/high contact angle, excellent sliding angle/run-off behaviour, no water residue remains)
Water Immersion: Pass (No significant mass loss, no obvious dissolution, no changes to film, no chalking)

All quantities are given as weight percentages of the whole (%). Percentages should be assumed to be weight percentages unless stated otherwise.

The compositions of each of Examples 1-9 are shown in Table 7 below.

Table 7

| | | Coating composition wt.% | | | | | | | | |
|---|---|---|---|---|---|---|---|---|---|---|
| **Raw Material (Trade)** | **Raw Material (Category)** | **Example 1** | **Example 2** | **Example 3** | **Example 4** | **Example 5** | **Example 6** | **Example 7** | **Example 8** | **Example 9** |
| Water | Solvent | 9.40 | 10.06 | 8.45 | 8.49 | 8.42 | 8.43 | 9.82 | 9.17 | 8.45 |
| Betolin K42 | Potassium Silicate solution | 56.63 | 56.13 | 55.97 | 55.79 | 55.94 | 55.80 | 55.16 | 57.16 | 55.68 |
| Surfynol 465 | Surfactant | 1.00 | 1.12 | 1.01 | 0.99 | 1.05 | 1.01 | 1.05 | 0.99 | 0.99 |
| Altiris W400 | Rutile TiO2 | 17.04 | 16.97 | 16.86 | 16.84 | 16.88 | 16.82 | 16.61 | 15.47 | 16.80 |
| Mattex Pro | Calcined Kaolin | 6.32 | 6.26 | 6.24 | 6.24 | 6.16 | 6.23 | 6.16 | 5.69 | 6.23 |
| Plustalc H05 | Talc | 5.42 | 5.36 | 5.38 | 5.34 | 5.36 | 5.37 | 5.26 | 4.90 | 5.35 |
| Zinc Oxide CF | Zinc Oxide | 0.16 | 0.33 | 0.29 | 0.28 | 0.38 | 0.35 | 0.38 | 0.30 | 0.32 |
| Aerosil R 812 | Silica | 1.49 | - | - | - | - | - | - | - | - |
| Acematt TS100 | Silica | - | 1.27 | - | - | - | - | - | - | - |
| Silnos 290 | Silica | - | - | 1.32 | 1.31 | 1.31 | 1.30 | 2.00 | 1.88 | 1.52 |
| Rucosil B-HS | Hydrophobising Agent | 2.54 | - | 2.46 | 2.54 | 2.47 | 2.61 | 2.56 | 2.52 | 2.63 |
| Silsan 1300 | Hydrophobising Agent | - | 2.50 | - | - | - | - | - | - | - |
| Hydroxyethyl Cellulose | HEC Thickener | - | - | - | - | - | - | 1.01 | - | - |
| TEOS (Si28) | Ethyl Silicate | - | - | 2.02 | - | - | - | - | - | - |
| Dynasylan 40 | Ethyl Silicate | - | - | - | - | 2.03 | - | - | - | - |
| 1H,1H,2H,2H-perfluorooctyltrimethoxysilane | FAS | - | - | - | 2.19 | - | - | - | - | - |
| MTMS (Si118) | Silane | - | - | - | - | - | 2.08 | - | - | - |
| Aeroxide P25 | Anatase $TiO_2$ | - | - | - | - | - | - | - | 1.92 | - |
| PDMS DMS-S31 | PDMS | - | - | - | - | - | - | - | - | 2.03 |

## Claims

1. A single coated conductor for an overhead power transmission or distribution line comprising:

one or more electrical conductors; and
a first coating provided on at least a portion of the one or more electrical conductors, wherein the first coating comprises:

(i) an inorganic alkali metal silicate resin;
(ii) from about 5 to about 25 wt.% of an optically active element which comprises rutile titanium dioxide ($TiO_2$) having an average particle size ("aps") of 2≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane;

wherein the first coating has an average thermal emissivity coefficient $E \geq 0.90$ across the infrared spectrum 2.5-30.0 μm when tested in accordance with ASTM E408 (2013) and has an average solar reflectivity coefficient $R \geq 0.80$ and/or an average solar absorptivity coefficient $A \leq 0.20$ across the solar spectrum 0.3-2.5 μm when tested in accordance with ASTM E903 (2012), preferably wherein the first coating has an average solar reflectivity coefficient $R \geq 0.90$ when tested in accordance with ASTM E408 (2013) and/or an average solar absorptivity coefficient $A \leq 0.10$ across the solar spectrum 0.3-2.5 μm when tested in accordance with ASTM E903 (2012).

2. A single coated conductor as claimed in claim 1, wherein the inorganic alkali metal silicate resin comprises potassium silicate, sodium silicate or lithium silicate ($Li_2SiO_3$), preferably wherein the sodium silicate comprises sodium metasilicate ($Na_2SiO_3$), sodium orthosilicate ($Na_4SiO_4$) or sodium pyrosilicate ($Na_6Si_2O_7$).

3. A single coated conductor as claimed in any preceding claim, wherein the optically active element comprises titanium dioxide ($TiO_2$) having an average particle size ("aps") of ≥ 100 nm.

4. A single coated conductor as claimed in any preceding claim, wherein the coating comprises

from about 45 to about 70 wt.% inorganic alkali metal silicate resin; and
from about 0.5 to about 10 wt.% superhydrophobic agent; preferably wherein the coating comprises
from about 50 to about 65 wt.% inorganic alkali metal silicate resin;
from about 10 to about 20 wt.% optically active element; and
from about 1 to about 5 wt.% superhydrophobic agent.

5. A single coated conductor as claimed in any preceding claim, wherein the inorganic alkali metal silicate resin comprises a water based coating which is dehydrated, dried or cured after the first coating is provided on at least a portion of the one or more electrical conductors.

6. A single coated conductor as claimed in any preceding claim, wherein the superhydrophobic agent comprises surface functionalised silica nanoparticles, and wherein the surface functionalised silica nanoparticles are surface functionalised with one or more silane coupling agents to impart superhydrophobicity.

7. A single coated conductor as claimed in any preceding claim, wherein the superhydrophobic agent comprises one or more functional polysiloxanes selected from hexamethyldisilazane (HMDS), tetraethyl orthosilicate (TEOS), tetramethyl orthosilicate (TMOS), Methyltrimethoxy silane (MTMS), vinyltrimethoxysilane (VTMS), phenyltrimethoxysilane (PTMS), 3-Aminopropyltriethoxysilane (APS), trimethylchlorosilane (TMCS), triethoxyoctylsilane (C8-TEOS), 3-(2-Aminoethylamino)propyldimethoxymethylsilane (AEAPS), 3-Glycidyloxypropyl)trimethoxysilane (GPTMS), 3-(Methacryloyloxy)propyl]trimethoxysilane (MAPTS), hexadecyltrimethoxysilane (C16-silane), (3-Mercaptopropyl)trimethoxysilane (MPTMS), triethoxyphenylsilane (phenyl-silane) and 1H,1H,2H,2H-Perfluorooctyltriethoxysilane (FAS), trichloro(1H,1H,2H,2H-perfluorooctyl)silane, 1H,1H,2H,2H-perfluorodecyltriethoxysilane (PFDTES).

8. A single coated conductor as claimed in any preceding claim, wherein the superhydrophobic agent comprises micro powder polymethylsilsesquioxane.

**9.** A single coated conductor as claimed in any preceding claim, wherein the first coating further comprises a photocatalytic agent, preferably wherein the photocatalytic agent comprises ≥ 70 wt% anatase titanium dioxide ($TiO_2$) having an average particle size ("aps") ≤ 100 nm.

**10.** A single coated conductor as claimed in any preceding claim, wherein the first coating further comprises an emissive agent, wherein the emissive agent comprises an inorganic filler, preferably wherein the inorganic filler comprises: (i) calcium carbonate (CaCOs); (ii) calcined kaolin ($Al_2O_3.2SiO_2$); or (iii) talc (hydrated magnesium silicate ($H_2Mg_3(SiO_3)_4$ or $Mg_3Si_40_{10}(OH)_2$)).

**11.** A single coated conductor as claimed in any preceding claim, wherein the first coating further comprises a curing agent, preferably wherein the curing agent is selected from the group consisting of: (i) zinc oxide (ZnO); (ii) zinc stearate ($C_{36}H_{70}O_4Z_n$); (iii) trimagnesium orthophosphate ($Mg_3O_8P_2$); (iv) magnesium oxide (MgO); (v) magnesium carbonate ($MgCO_3$); and (vi) magnesium hydroxide ($Mg(OH)_2$).

**12.** A single coated conductor as claimed in any preceding claim, wherein the first coating further comprises a rheology agent, preferably wherein the rheology agent is selected from the group consisting of: (i) methyl cellulose; (ii) hydroxyethyl cellulose ("HEC" $CH_2CH_2OH$); (iii) carboxy methyl cellulose ("CMC"); (iv) hydroxy propyl cellulose ("HPC"); (v) hydrophobically modified hydroxyethyl cellulose; (vi) an alkali swellable emulsion ("ASE"); (vii) hydrophobic alkali swellable emulsions ("HASE"); (viii) a hydrophobically modified ethylenoxide urethane rheology modifier ("HUER"); (ix) one or more organoclays; (x) one or more polyamides; and (xi) one or more fumed silicas.

**13.** An overhead conductor, a high voltage overhead conductor or an electric power or distribution line comprising one or more single coated conductors as claimed in any preceding claim.

**14.** A kit for coating one or more electrical conductors to form a single coated conductor for an overhead power transmission or distribution line, the kit comprising:

a first part comprising:

(i) an inorganic alkali metal silicate resin;
(ii) an optically active element which comprises rutile titanium dioxide (TiOz) having an average particle size ("aps") of ≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane; and

a second part comprising:

(i) a curing agent;

wherein, in use, the first and second parts are mixed together to form a first mixture and the first mixture is then sprayed, painted, coated or applied on to at least a portion of one or more electric conductors to form a first coating, wherein the first coating comprises from about 5 to about 25 wt.% of the optically active element and has an average thermal emissivity coefficient E ≥ 0.90 across the infrared spectrum 2.5-30.0 μm when tested in accordance with ASTM E408 (2013) and an average solar reflectivity coefficient R ≥ 0.80 and/or an average solar absorptivity coefficient A ≤ 0.20 across the solar spectrum 0.3-2.5 μm when tested in accordance with ASTM E903 (2012); preferably wherein the first coating has an average thermal emissivity coefficient E ≥ 0.90 across the infrared spectrum 2.5-30.0 μm when tested in accordance with ASTM E408 (2013) and an average solar reflectivity coefficient R ≥ 0.90 and/or an average solar absorptivity coefficient A ≤ 0.10 across the solar spectrum 0.3-2.5 μm when tested in accordance with ASTM E903 (2012).

**15.** A method of coating one or more electrical conductors to form a single coated conductor for an overhead power transmission or distribution line comprising:

spraying, painting, coating or applying a first coating on to at least a portion of one or more electrical conductors, wherein the first coating comprises:

(i) an inorganic alkali metal silicate resin;
(ii) from about 5 to about 25 wt.% of an optically active element which comprises rutile titanium dioxide ($TiO_2$) having an average particle size ("aps") of 2≥ 100 nm, silicon dioxide ($SiO_2$), cerium hydroxide ($Ce(OH)_3$), sodium aluminosilicate ($AlNa_{12}SiO_5$), magnesium oxide, calcium oxide, aluminium oxide, zinc oxide, calcium carbonate, aluminium silicate, kaolin ($Al_2O_3.2SiO_2$), or barium sulphate; and
(iii) a superhydrophobic agent which comprises surface functionalised silica nanoparticles; one or more functional polysiloxanes; or micro powder polymethylsilsesquioxane;

wherein the first coating has an average thermal emissivity coefficient $E \geq 0.90$ across the infrared spectrum 2.5-30.0 μm when tested in accordance with ASTM E408 (2013) and has an average solar reflectivity coefficient $R \geq 0.80$ and/or an average solar absorptivity coefficient $A \leq 0.20$ across the solar spectrum 0.3-2.5 μm when tested in accordance with ASTM E903 (2012); preferably wherein the first coating has an average thermal emissivity coefficient $E \geq 0.90$ across the infrared spectrum 2.5-30.0 μm when tested in accordance with ASTM E408 (2013) and has an average solar reflectivity coefficient $R \geq 0.90$ and/or an average solar absorptivity coefficient $A \leq 0.10$ across the solar spectrum 0.3-2.5 μm when tested in accordance with ASTM E903 (2012).

## Patentansprüche

1. Einfach beschichteter Leiter für eine Oberleitung zur Leistungsübertragung oder - verteilung, umfassend:

einen oder mehrere elektrische Leiter; und
eine erste Beschichtung, die auf mindestens einem Abschnitt des einen oder der mehreren elektrischen Leiter vorgesehen ist, wobei die erste Beschichtung umfasst:

(i) ein anorganisches Alkalimetallsilicatharz;
(ii) etwa 5 bis etwa 25 Gew.-% eines optisch aktiven Elements, das Rutil-Titandioxid ($TiO_2$), das eine mittlere Partikelgröße ("aps") von ≥ 100 nm aufweist, Siliciumdioxid ($SiO_2$), Cerhydroxid ($Ce(OH)_3$), Natriumaluminiumsilicat ($AlNa_{12}SiO_5$), Magnesiumoxid, Calciumoxid, Aluminiumoxid, Zinkoxid, Calciumcarbonat, Aluminiumsilicat, Kaolin ($Al_2O_3.2SiO_2$) oder Bariumsulfat umfasst; und
(iii) ein superhydrophobes Mittel, das oberflächenfunktionalisierte Siliciumdioxid-Nanopartikel; ein oder mehrere funktionelle Polysiloxane; oder Mikropulver-Polymethylsilsesquioxan umfasst;

wobei die erste Beschichtung einen mittleren Wärmeemissionskoeffizienten $E \geq 0{,}90$ über das Infrarotspektrum 2,5-30,0 μm aufweist, wenn sie nach ASTM E408 (2013) getestet wird, und einen mittleren Sonnenreflexionskoeffizienten $R \geq 0{,}80$ und/oder einen mittleren Sonnenabsorptionskoeffizienten $A \leq 0{,}20$ über das Sonnenspektrum 0,3-2,5 μm aufweist, wenn sie nach ASTM E903 (2012) getestet wird, wobei die erste Beschichtung vorzugsweise einen mittleren Sonnenreflexionskoeffizienten $R \geq 0{,}90$ aufweist, wenn sie nach ASTM E408 (2013) getestet wird, und/oder einen mittleren Sonnenabsorptionskoeffizienten $A \leq 0{,}10$ über das Sonnenspektrum 0,3-2,5 μm, wenn sie nach ASTM E903 (2012) getestet wird.

2. Einfach beschichteter Leiter nach Anspruch 1, wobei das anorganische Alkalimetallsilicatharz Kaliumsilicat, Natriumsilicat oder Lithiumsilicat ($Li_2SiO_3$) umfasst, wobei das Natriumsilicat vorzugsweise Natriummetasilicat ($Na_2Si0_3$), Natriumorthosilicat ($Na_4SiO_4$) oder Natriumpyrosilicat ($Na_6Si_2O_7$) umfasst.

3. Einfach beschichteter Leiter nach einem vorstehenden Anspruch, wobei das optisch aktive Element Titandioxid ($TiO_2$) umfasst, das eine mittlere Partikelgröße ("aps") von ≥ 100 nm aufweist.

4. Einfach beschichteter Leiter nach einem vorstehenden Anspruch, wobei die Beschichtung umfasst

etwa 45 bis etwa 70 Gew.-% anorganisches Alkalimetallsilicatharz; und
etwa 0,5 bis etwa 10 Gew.-% superhydrophobes Mittel;
wobei die Beschichtung vorzugsweise umfasst
etwa 50 bis etwa 65 Gew.-% anorganisches Alkalimetallsilicatharz;
etwa 10 bis etwa 20 Gew.-% optisch aktives Element; und etwa 1 bis etwa 5 Gew.% superhydrophobes Mittel.

5. Einfach beschichteter Leiter nach einem vorstehenden Anspruch, wobei das anorganische Alkalimetallsilicatharz eine Beschichtung auf Wasserbasis umfasst, die dehydriert, getrocknet oder gehärtet wird, nachdem die erste

Beschichtung auf mindestens einem Abschnitt des einen oder der mehreren elektrischen Leiter vorgesehen wurde.

6. Einfach beschichteter Leiter nach einem vorstehenden Anspruch, wobei das superhydrophobe Mittel oberflächenfunktionalisierte Siliciumdioxid-Nanopartikel umfasst, und wobei die oberflächenfunktionalisierten Siliciumdioxid-Nanopartikel mit einem oder mehreren Silan-Kopplungsmitteln oberflächenfunktionalisiert sind, um Superhydrophobie zu verleihen.

7. Einfach beschichteter Leiter nach einem vorstehenden Anspruch, wobei das superhydrophobe Mittel ein oder mehrere funktionelle Polysiloxane umfasst, ausgewählt aus Hexamethyldisilazan (HMDS), Tetraethylorthosilicat (TEOS), Tetramethylorthosilicat (TMOS), Methyltrimethoxysilan (MTMS), Vinyltrimethoxysilan (VTMS), Phenyltrimethoxysilan (PTMS), 3-Aminopropyltriethoxysilan (APS), Trimethylchlorsilan (TMCS), Triethoxyoctylsilan (C8-TEOS), 3-(2-Aminoethylamino)propyldimethoxymethylsilan (AEAPS), 3-Glycidyloxypropyl)trimethoxysilan (GPTMS), 3-(Methacryloyloxy)propyl]trimethoxysilan (MAPTS), Hexadecyltrimethoxysilan (C16-Silan), (3-Mercaptopropyl)trimethoxysilan (MPTMS), Triethoxyphenylsilan (Phenylsilan) und 1H,1H,2H,2H-Perfluoroctyltriethoxysilan (FAS), Trichlor(1H,1H,2H,2H-perfluorooctyl)silan, 1H,1H,2H,2H-Perfluordecyltriethoxysilan (PFDTES).

8. Einfach beschichteter Leiter nach einem vorstehenden Anspruch, wobei das superhydrophobe Mittel Mikropulver-Polymethylsilsesquioxan umfasst.

9. Einfach beschichteter Leiter nach einem vorstehenden Anspruch, wobei die erste Beschichtung weiter ein photokatalytisches Mittel umfasst, wobei das photokatalytische Mittel vorzugsweise $\geq$ 70 Gew.-% Anatas-Titandioxid ($TiO_2$) umfasst, das eine mittlere Partikelgröße ("aps") $\leq$ 100 nm aufweist.

10. Einfach beschichteter Leiter nach einem vorstehenden Anspruch, wobei die erste Beschichtung weiter ein Emissionsmittel umfasst, wobei das Emissionsmittel einen anorganischen Füllstoff umfasst, wobei der anorganische Füllstoff vorzugsweise umfasst: (i) Calciumcarbonat ($CaCO_3$); (ii) kalziniertes Kaolin ($Al_2O_3.2SiO_2$); oder (iii) Talk (hydratisiertes Magnesiumsilicat ($H_2Mg_3(SiO_3)_4$ oder $Mg_3Si_4O_{io}(OH)_2$)).

11. Einfach beschichteter Leiter nach einem vorstehenden Anspruch, wobei die erste Beschichtung weiter ein Härtungsmittel umfasst, wobei das Härtungsmittel vorzugsweise ausgewählt ist aus der Gruppe bestehend aus: (i) Zinkoxid (ZnO); (ii) Zinkstearat ($C_{36}H_{70}O_4Z_n$); (iii) Trimagnesiumorthophosphat ($Mg_3O_8P_2$); (iv) Magnesiumoxid (MgO); (v) Magnesiumcarbonat ($MgCO_3$); und (vi) Magnesiumhydroxid ($Mg(OH)_2$).

12. Einfach beschichteter Leiter nach einem vorstehenden Anspruch, wobei die erste Beschichtung weiter ein Rheologiemittel umfasst, wobei das Rheologiemittel vorzugsweise ausgewählt ist aus der Gruppe bestehend aus: (i) Methylcellulose; (ii) Hydroxyethylcellulose ("HEC" $CH_2CH_2OH$); (iii) Carboxymethylcellulose ("CMC"); (iv) Hydroxypropylcellulose ("HPC"); (v) hydrophob modifizierter Hydroxyethylcellulose; (vi) einer alkaliquellbaren Emulsion ("ASE"); (vii) hydrophoben alkaliquellbaren Emulsionen ("HASE"); (viii) einem hydrophob modifizierten Ethylenoxidurethan-Rheologiemodifikator ("HUER"); (ix) einem oder mehreren Organotonen; (x) einem oder mehreren Polyamiden; und (xi) einem oder mehreren pyrogenen Siliciumdioxiden.

13. Oberleiter, Hochspannungsoberleiter oder Starkstrom- oder Verteilungsleitung, der/die einen oder mehrere einfach beschichtete Leiter nach einem vorstehenden Anspruch umfasst.

14. Bausatz zum Beschichten eines oder mehrerer elektrischer Leiter, um einen einfach beschichteten Leiter für eine Oberleitung zur Leistungsübertragung oder -verteilung zu bilden, wobei der Bausatz umfasst:

einen ersten Teil, umfassend:

(i) ein anorganisches Alkalimetallsilicatharz;
(ii) ein optisch aktives Element, das Rutil-Titandioxid ($TiO_2$) umfasst, das eine mittlere Partikelgröße ("aps") von $\geq$ 100 nm aufweist, Siliciumdioxid ($SiO_2$), Cerhydroxid ($Ce(OH)_3$), Natriumaluminiumsilicat ($AlNa_{12}SiO_5$), Magnesiumoxid, Calciumoxid, Aluminiumoxid, Zinkoxid, Calciumcarbonat, Aluminiumsilicat, Kaolin ($Al_2O_3.2SiO_2$) oder Bariumsulfat umfasst; und
(iii) ein superhydrophobes Mittel, das oberflächenfunktionalisierte Siliciumdioxid-Nanopartikel; ein oder mehrere funktionelle Polysiloxane; oder Mikropulver-Polymethylsilsesquioxan umfasst; und

einen zweiten Teil, umfassend:

(i) ein Härtungsmittel;

wobei im Gebrauch der erste und der zweite Teil miteinander gemischt werden, um ein erstes Gemisch zu bilden, und das erste Gemisch dann auf mindestens einen Abschnitt eines oder mehrerer elektrischer Leiter gesprüht, gestrichen, beschichtet oder aufgetragen wird, um eine erste Beschichtung zu bilden, wobei die erste Beschichtung etwa 5 bis etwa 25 Gew.-% des optisch aktiven Elements umfasst und einen mittleren Wärmeemissionskoeffizienten E ≥ 0,90 über das Infrarotspektrum 2,5-30,0 μm aufweist, wenn sie nach ASTM E408 (2013) getestet wird, und einen mittleren Sonnenreflexionskoeffizienten R ≥ 0,80 und/oder einen mittleren Sonnenabsorptionskoeffizienten A ≤ 0,20 über das Sonnenspektrum 0,3-2,5 μm, wenn sie nach ASTM E903 (2012) getestet wird; wobei die erste Beschichtung vorzugsweise einen mittleren Wärmeemissionskoeffizienten E ≥ 0,90 über das Infrarotspektrum 2,5-30,0 μm aufweist, wenn sie nach ASTM E408 (2013) getestet wird, und einen mittleren Sonnenreflexionskoeffizienten R ≥ 0,90 und/oder einen mittleren Sonnenabsorptionskoeffizienten A ≤ 0,10 über das Sonnenspektrum 0,3-2,5 μm, wenn sie nach ASTM E903 (2012) getestet wird.

**15.** Verfahren zum Beschichten eines oder mehrerer elektrischer Leiter, um einen einfach beschichteten Leiter für eine Oberleitung zur Leistungsübertragung oder - verteilung zu bilden, umfassend:

Sprühen, Streichen, Beschichten oder Auftragen einer ersten Beschichtung auf mindestens einen Abschnitt eines oder mehrerer elektrischer Leiter, wobei die erste Beschichtung umfasst:

(i) ein anorganisches Alkalimetallsilicatharz;
(ii) etwa 5 bis etwa 25 Gew.-% eines optisch aktiven Elements, das Rutil-Titandioxid ($Ti0_2$), das eine mittlere Partikelgröße ("aps") von ≥ 100 nm aufweist, Siliciumdioxid ($SiO_2$), Cerhydroxid ($Ce(OH)_3$), Natriumaluminiumsilicat ($AlNa_{12}SiO_5$), Magnesiumoxid, Calciumoxid, Aluminiumoxid, Zinkoxid, Calciumcarbonat, Aluminiumsilicat, Kaolin ($Al_2O_3.2SiO_2$) oder Bariumsulfat umfasst; und
(iii) ein superhydrophobes Mittel, das oberflächenfunktionalisierte Siliciumdioxid-Nanopartikel; ein oder mehrere funktionelle Polysiloxane; oder Mikropulver-Polymethylsilsesquioxan umfasst;

wobei die erste Beschichtung einen mittleren Wärmeemissionskoeffizienten E ≥ 0,90 über das Infrarotspektrum 2,5-30,0 μm aufweist, wenn sie nach ASTM E408 (2013) getestet wird, und einen mittleren Sonnenreflexionskoeffizienten R ≥ 0,80 und/oder einen mittleren Sonnenabsorptionskoeffizienten A ≤ 0,20 über das Sonnenspektrum 0,3-2,5 μm aufweist, wenn sie nach ASTM E903 (2012) getestet wird; bevorzugt wobei die erste Beschichtung einen mittleren Wärmeemissionskoeffizienten E ≥ 0,90 über das Infrarotspektrum 2,5-30,0 μm aufweist, wenn sie nach ASTM E408 (2013) getestet wird, und einen mittleren Sonnenreflexionskoeffizienten R ≥ 0,90 und/oder einen mittleren Sonnenabsorptionskoeffizienten A ≤ 0,10 über das Sonnenspektrum 0,3-2,5 μm aufweist, wenn sie nach ASTM E903 (2012) getestet wird.

## Revendications

**1.** Conducteur revêtu d'une seule couche pour une ligne aérienne de transmission ou de distribution d'énergie comprenant :

un ou plusieurs conducteurs électriques ; et
un premier revêtement disposé sur au moins une partie des un ou plusieurs conducteurs électriques, dans lequel le premier revêtement comprend :

(i) une résine de silicate de métal alcalin inorganique ;
(ii) d'environ 5 à environ 25 % en poids d'un élément optiquement actif qui comprend du dioxyde de titane rutile ($TiO_2$) présentant une taille moyenne de particules (« aps ») de ≥ 100 nm, du dioxyde de silicium ($SiO_2$), de l'hydroxyde de cérium ($Ce(OH)_3$), de l'aluminosilicate de sodium ($AlNa_{12}SiO_5$), de l'oxyde de magnésium, de l'oxyde de calcium, de l'oxyde d'aluminium, de l'oxyde de zinc, du carbonate de calcium, du silicate d'aluminium, du kaolin ($Al_2O_3.2SiO_2$), ou du sulfate de baryum ; et
(iii) un agent superhydrophobe qui comprend des nanoparticules de silice fonctionnalisées en surface ; un ou plusieurs polysiloxanes fonctionnels ; ou de la micro-poudre de polyméthylsilsesquioxane ;

dans lequel le premier revêtement présente un coefficient d'émissivité thermique moyen E ≥ 0,90 à travers le spectre infrarouge 2,5-30,0 μm lorsqu'il est testé conformément à la norme ASTM E408 (2013) et présente un

coefficient de réflectivité solaire moyen R ≥ 0,80 et/ou un coefficient d'absorptivité solaire moyen A ≤ 0,20 à travers le spectre solaire 0,3-2,5 μm lorsqu'il est testé conformément à la norme ASTM E903 (2012), de préférence dans lequel le premier revêtement présente un coefficient de réflectivité solaire moyen R ≥ 0,90 lorsqu'il est testé conformément à la norme ASTM E408 (2013) et/ou un coefficient d'absorptivité solaire moyen A ≤ 0,10 à travers le spectre solaire 0,3-2,5 μm lorsqu'il est testé conformément à la norme ASTM E903 (2012).

**2.** Conducteur revêtu d'une seule couche selon la revendication 1, dans lequel la résine de silicate de métal alcalin inorganique comprend du silicate de potassium, du silicate de sodium ou du silicate de lithium ($Li_2SiO_3$), de préférence dans lequel le silicate de sodium comprend du métasilicate de sodium ($Na_2SiO_3$), de l'orthosilicate de sodium ($Na_4SiO_4$) ou du pyrosilicate de sodium ($Na_6Si_2O_7$).

**3.** Conducteur revêtu d'une seule couche selon une quelconque revendication précédente, dans lequel l'élément optiquement actif comprend du dioxyde de titane ($TiO_2$) présentant une taille moyenne de particules (« aps ») de ≥ 100 nm.

**4.** Conducteur revêtu d'une seule couche selon une quelconque revendication précédente, dans lequel le revêtement comprend

d'environ 45 à environ 70 % en poids de résine de silicate de métal alcalin inorganique ; et
d'environ 0,5 à environ 10 % en poids d'agent superhydrophobe ;
de préférence dans lequel le revêtement comprend
d'environ 50 à environ 65 % en poids de résine de silicate de métal alcalin inorganique ;
d'environ 10 à environ 20 % en poids d'élément optiquement actif ; et d'environ 1 à environ 5 % en poids d'agent superhydrophobe.

**5.** Conducteur revêtu d'une seule couche selon une quelconque revendication précédente, dans lequel la résine de silicate de métal alcalin inorganique comprend un revêtement à base d'eau qui est déshydraté, séché ou durci après que le premier revêtement a été disposé sur au moins une partie des un ou plusieurs conducteurs électriques.

**6.** Conducteur revêtu d'une seule couche selon une quelconque revendication précédente, dans lequel l'agent superhydrophobe comprend des nanoparticules de silice fonctionnalisées en surface, et dans lequel les nanoparticules de silice fonctionnalisées en surface sont fonctionnalisées en surface avec un ou plusieurs agents de couplage au silane pour conférer une superhydrophobicité.

**7.** Conducteur revêtu d'une seule couche selon une quelconque revendication précédente, dans lequel l'agent superhydrophobe comprend un ou plusieurs polysiloxanes fonctionnels choisis parmi l'hexaméthyldisilazane (HMDS), l'orthosilicate de tétraéthyle (TEOS), l'orthosilicate de tétraméthyle (TMOS), le méthyltriméthoxysilane (MTMS), le vinyltriméthoxysilane (VTMS), le phényltriméthoxysilane (PTMS), le 3-Aminopropyltriéthoxysilane (APS), le triméthylchlorosilane (TMCS), le triéthoxyoctylsilane (C8-TEOS), le 3-(2-Aminoéthylamino)propyldiméthoxyméthylsilane (AEAPS), le 3-Glycidyloxypropyl)triméthoxysilane (GPTMS), le 3-(Méthacryloyloxy)propyl]triméthoxysilane (MAPTS), l'hexadécyltriméthoxysilane (C16-silane), le (3-Mercaptopropyl)triméthoxysilane (MPTMS), le triéthoxyphénylsilane (phényl-silane) et le 1H,1H,2H,2H-Perfluorooctyltriéthoxysilane (FAS), le trichloro(1H,1H,2H,2H-perfluorooctyl)silane, le 1H,1H,2H,2H-perfluorodecyltriethoxysilane (PFDTES).

**8.** Conducteur revêtu d'une seule couche selon une quelconque revendication précédente, dans lequel l'agent superhydrophobe comprend de la micro-poudre de polyméthylsilsesquioxane.

**9.** Conducteur revêtu d'une seule couche selon une quelconque revendication précédente, dans lequel le premier revêtement comprend en outre un agent photocatalytique, de préférence dans lequel l'agent photocatalytique comprend ≥70 % en poids de dioxyde de titane anatase ($TiO_2$) présentant une taille moyenne de particules (« aps ») ≤ 100 nm.

**10.** Conducteur revêtu d'une seule couche selon une quelconque revendication précédente, dans lequel le premier revêtement comprend en outre un agent émissif, dans lequel l'agent émissif comprend une charge inorganique, de préférence dans lequel la charge inorganique comprend : (i) du carbonate de calcium ($CaCO_3$) ; (ii) du kaolin calciné ($Al_2O_3.2SiO_2$) ; ou (iii) du talc (silicate de magnésium hydraté ($H_2Mg_3(SiO_3)_4$ ou $Mg_3Si_4O_{10}(OH)_2$)).

**11.** Conducteur revêtu d'une seule couche selon une quelconque revendication précédente, dans lequel le premier

revêtement comprend en outre un agent de durcissement, de préférence dans lequel l'agent de durcissement est choisi dans le groupe consistant en : (i) de l'oxyde de zinc (ZnO) ; (ii) du stéarate de zinc ($C_{36}H_{70}O_4Z_n$) ; (iii) de l'orthophosphate de trimagnésium ($Mg_3O_8P_2$) ; (iv) de l'oxyde de magnésium (MgO) ; (v) du carbonate de magnésium ($MgCO_3$) ; et (vi) de l'hydroxyde de magnésium ($Mg(OH)_2$).

**12.** Conducteur revêtu d'une seule couche selon une quelconque revendication précédente, dans lequel le premier revêtement comprend en outre un agent de rhéologie, de préférence dans lequel l'agent de rhéologie est choisi dans le groupe consistant en : (i) la méthylcellulose ; (ii) l'hydroxyéthylcellulose (« HEC » $CH_2CH_2OH$) ; (iii) la carboxyméthylcellulose (« CMC ») ; l'hydroxypropylcellulose (« HPC ») ; (v) l'hydroxyéthylcellulose à modification hydrophobe ; (vi) une émulsion alcaline gonflable (« ASE ») ; (vii) des émulsions alcalines gonflables hydrophobes (« HASE ») ; (viii) un modificateur de rhéologie à uréthane d'oxyde d'éthylène à modification hydrophobe (« HUER ») ; (ix) une ou plusieurs organo-argiles ; (x) un ou plusieurs polyamides ; et (xi) une ou plusieurs silices fumées.

**13.** Conducteur aérien, conducteur aérien haute-tension ou ligne d'alimentation ou de distribution d'énergie électrique comprenant un ou plusieurs conducteurs revêtus d'une seule couche selon une quelconque revendication précédente.

**14.** Kit de revêtement d'un ou plusieurs conducteurs électriques pour former un conducteur revêtu d'une seule couche pour une ligne aérienne de transmission ou de distribution d'énergie, le kit comprenant :

une première partie comprenant :

(i) une résine de silicate de métal alcalin inorganique ;
(ii) un élément optiquement actif qui comprend du dioxyde de titane rutile ($TiO_2$) présentant une taille moyenne de particules (« aps ») de ≥ 100 nm, du dioxyde de silicium ($SiO_2$), de l'hydroxyde de cérium ($Ce(OH)_3$), de l'aluminosilicate de sodium ($AlNa_{12}SiO_5$), de l'oxyde de magnésium, de l'oxyde de calcium, de l'oxyde d'aluminium, de l'oxyde de zinc, du carbonate de calcium, du silicate d'aluminium, du kaolin ($Al_2O_3.2Si0_2$), ou du sulfate de baryum ; et
(iii) un agent superhydrophobe qui comprend des nanoparticules de silice fonctionnalisées en surface ; un ou plusieurs polysiloxanes fonctionnels ; ou de la micro-poudre de polyméthylsilsesquioxane ; et

une seconde partie comprenant :

(i) un agent de durcissement ;

dans lequel, lors de l'utilisation, les première et seconde parties sont mélangées l'une à l'autre pour former un premier mélange et le premier mélange est ensuite pulvérisé, peint, enduit ou appliqué sur au moins une partie d'un ou plusieurs conducteurs électriques pour former un premier revêtement, dans lequel le premier revêtement comprend d'environ 5 à environ 25 % en poids de l'élément optiquement actif et présente un coefficient d'émissivité thermique moyen E ≥ 0,90 à travers le spectre infrarouge 2,5-30,0 μm lorsqu'il est testé conformément à la norme ASTM E408 (2013) et un coefficient de réflectivité solaire moyen R ≥ 0,80 et/ou un coefficient d'absorptivité solaire moyen A ≤ 0,20 à travers le spectre solaire 0,3-2,5 μm lorsqu'il est testé conformément à la norme ASTM E903 (2012) ; de préférence dans lequel le premier revêtement présente un coefficient d'émissivité thermique moyen E ≥ 0,90 à travers le spectre infrarouge 2,5-30,0 μm lorsqu'il est testé conformément à la norme ASTM E408 (2013) et un coefficient de réflectivité solaire moyen R ≥ 0,90 et/ou un coefficient d'absorptivité solaire moyen A ≤ 0,10 à travers le spectre solaire 0,3-2,5 μm lorsqu'il est testé conformément à la norme ASTM E903 (2012).

**15.** Procédé de revêtement d'un ou plusieurs conducteurs électriques pour former un conducteur revêtu d'une seule couche pour une ligne aérienne de transmission ou de distribution d'énergie comprenant :

la pulvérisation, la peinture, l'enduction ou l'application d'un premier revêtement sur au moins une partie d'un ou plusieurs conducteurs électriques, dans lequel le premier revêtement comprend :

(i) une résine de silicate de métal alcalin inorganique ;
(ii) d'environ 5 à environ 25 % en poids d'un élément optiquement actif qui comprend du dioxyde de titane rutile ($TiO_2$) présentant une taille moyenne de particules (« aps ») de ≥ 100 nm, du dioxyde de silicium

($SiO_2$), de l'hydroxyde de cérium ($Ce(OH)_3$), de l'aluminosilicate de sodium ($AlNa_{12}SiO_5$), de l'oxyde de magnésium, de l'oxyde de calcium, de l'oxyde d'aluminium, de l'oxyde de zinc, du carbonate de calcium, du silicate d'aluminium, du kaolin ($Al_2O_3.2SiO_2$), ou du sulfate de baryum ; et

(iii) un agent superhydrophobe qui comprend des nanoparticules de silice fonctionnalisées en surface ; un ou plusieurs polysiloxanes fonctionnels ; ou de la micro-poudre de polyméthylsilsesquioxane ;

dans lequel le premier revêtement présente un coefficient d'émissivité thermique moyen $E \geq 0,90$ à travers le spectre infrarouge 2,5-30,0 $\mu$m lorsqu'il est testé conformément à la norme ASTM E408 (2013) et présente un coefficient de réflectivité solaire moyen $R \geq 0,80$ et/ou un coefficient d'absorptivité solaire moyen $A \leq 0,20$ à travers le spectre solaire 0,3-2,5 $\mu$m lorsqu'il est testé conformément à la norme ASTM E903 (2012) ; de préférence dans lequel le premier revêtement présente un coefficient d'émissivité thermique moyen $E \geq 0,90$ à travers le spectre infrarouge 2,5-30,0 $\mu$m lorsqu'il est testé conformément à la norme ASTM E408 (2013) et un coefficient de réflectivité solaire moyen $R \geq 0,90$ et/ou un coefficient d'absorptivité solaire moyen $A \leq 0,10$ à travers le spectre solaire 0,3-2,5 $\mu$m lorsqu'il est testé conformément à la norme ASTM E903 (2012).

Fig. 1

Prior art

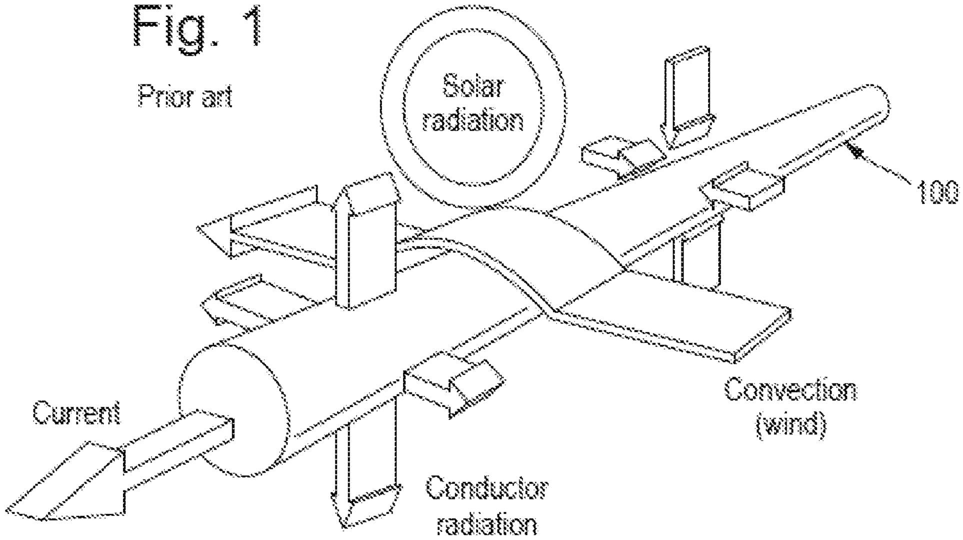


Fig. 2A

Prior art

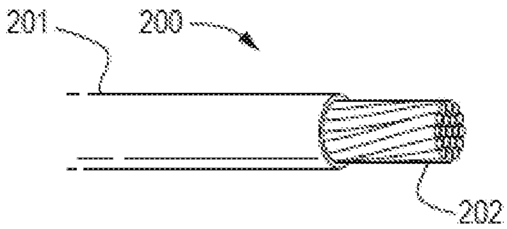


Fig. 2B

Prior art

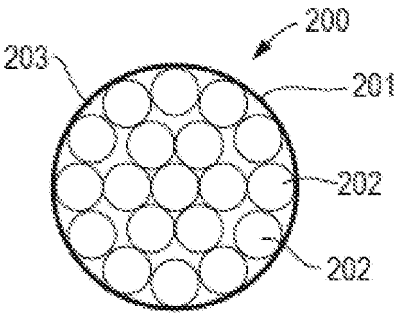

Fig. 3A

Prior art

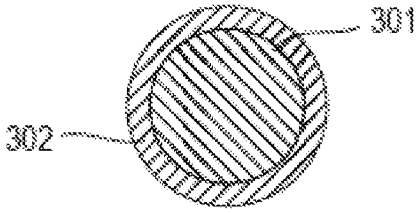


Fig. 3B

Prior art

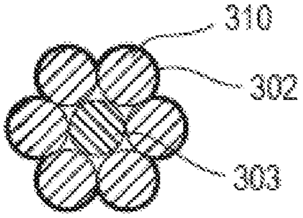


Fig. 3C

Prior art

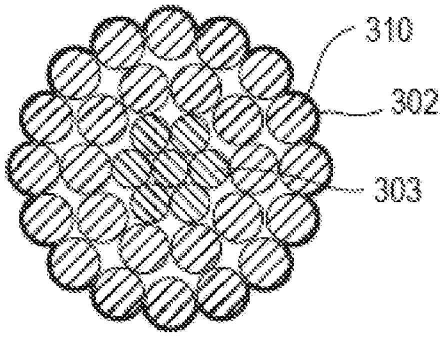


Fig. 3D

Prior art

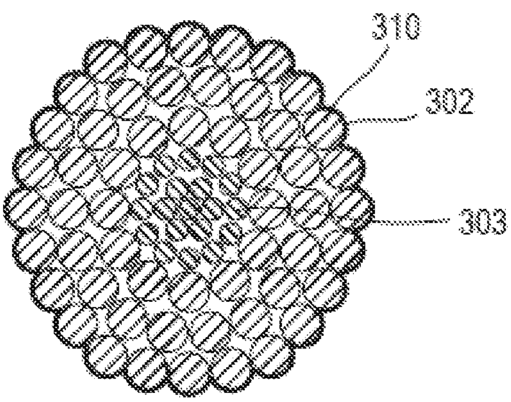

Fig. 4

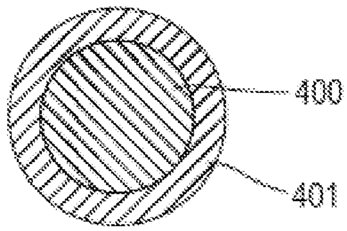
400
401

Fig. 5

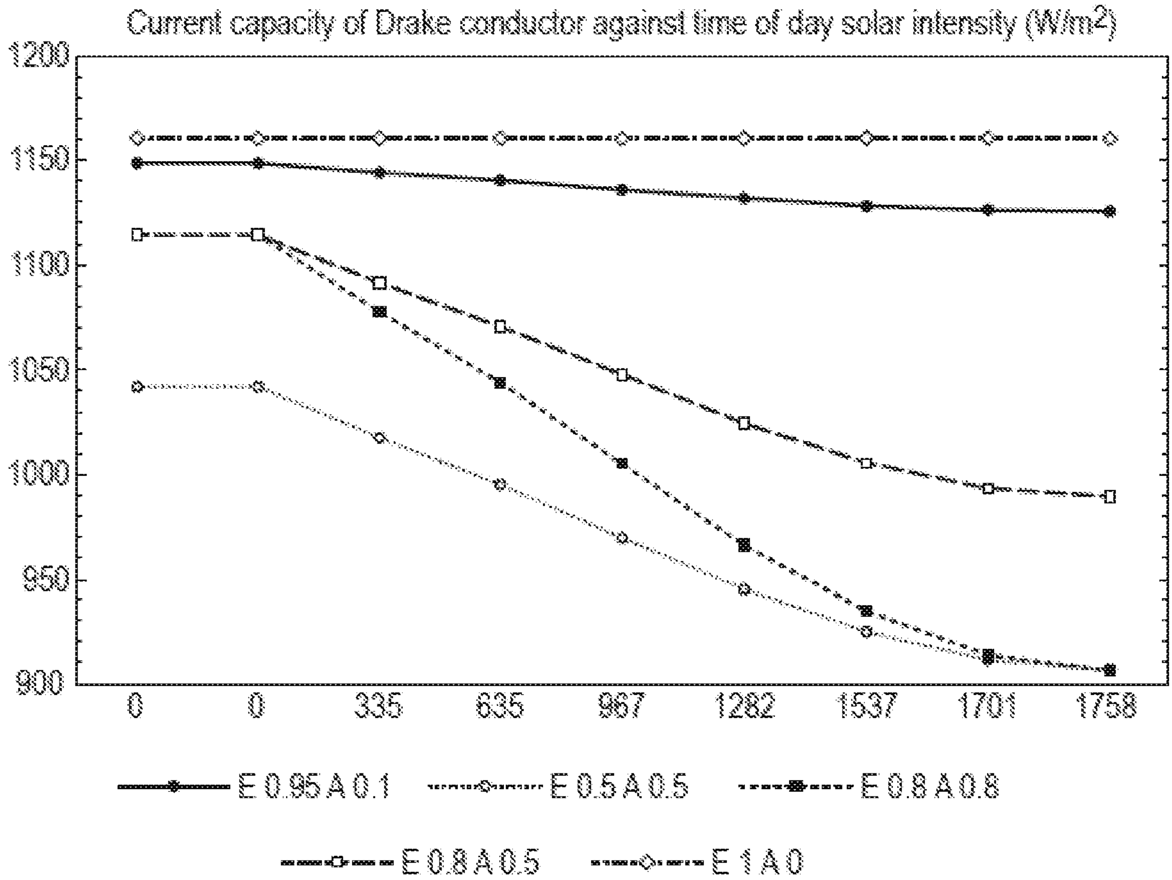
Current capacity of Drake conductor against time of day solar intensity (W/m2)
1200
1150
1100
1050
1000
950
900
0
0
335
635
967
1282
1537
1701
1758
E 0.95 A 0.1
E 0.5 A 0.5
E 0.8 A 0.8
E 0.8 A 0.5
E 1 A 0

Fig. 6

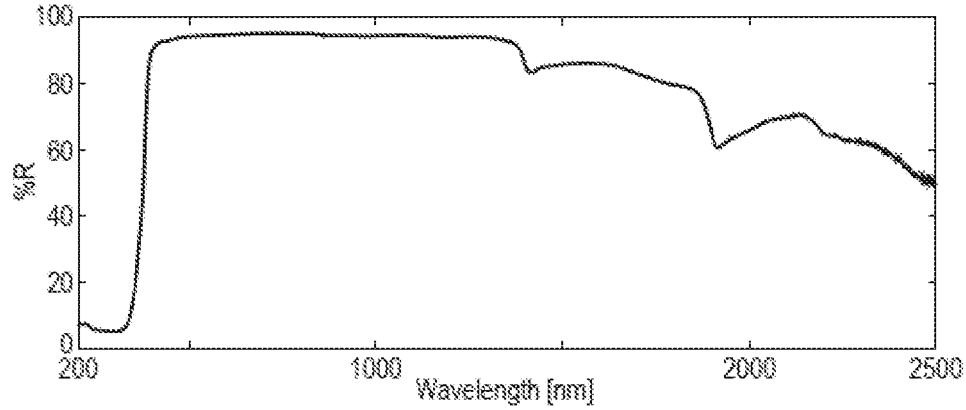
100
80
60
40
20
0
%R
200
1000
2000
2500
Wavelength [nm]

Fig. 7

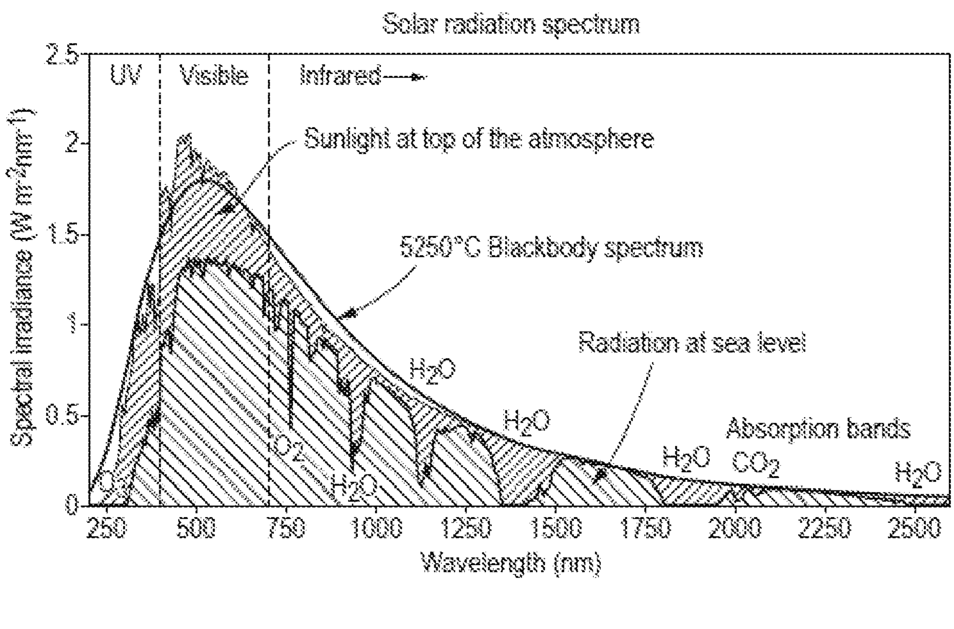
Solar radiation spectrum
UV
Visible
Infrared
Sunlight at top of the atmosphere
5250°C Blackbody spectrum
Radiation at sea level
Absorption bands
$H_2O$
$O_2$
$O_3$
$CO_2$
Spectral irradiance ($W m^{-2} nm^{-1}$)
Wavelength (nm)
2.5
2
1.5
1
0.5
0
250
500
750
1000
1250
1500
1750
2000
2250
2500

Fig. 8

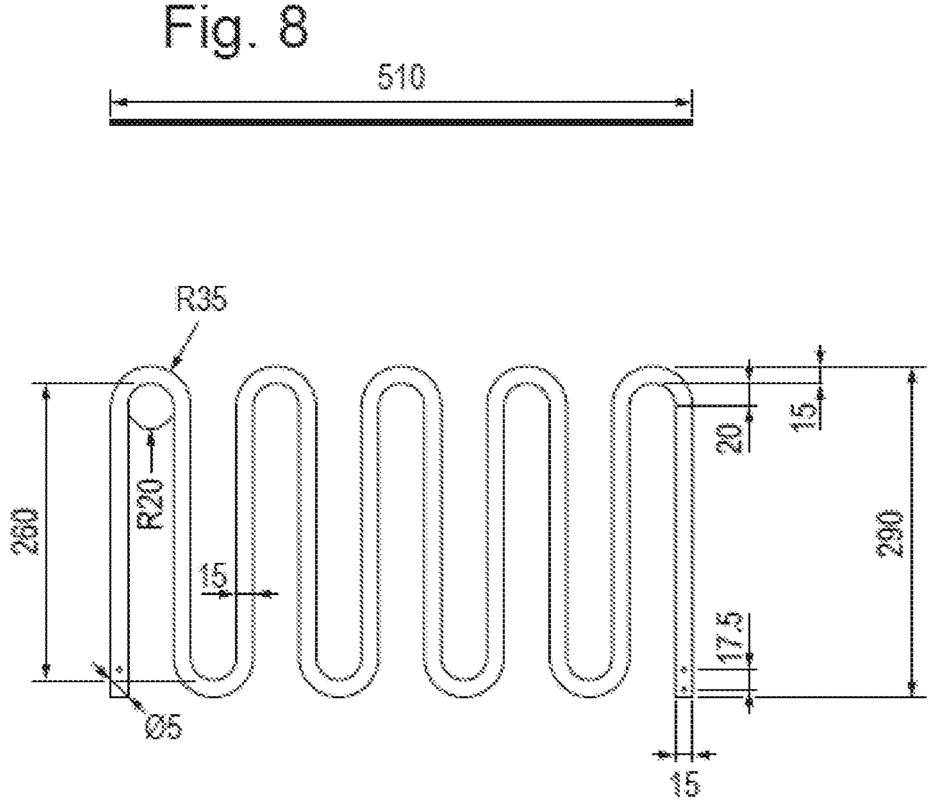
510
R35
R20
260
15
Ø5
20
15
290
17.5
15

Fig. 9

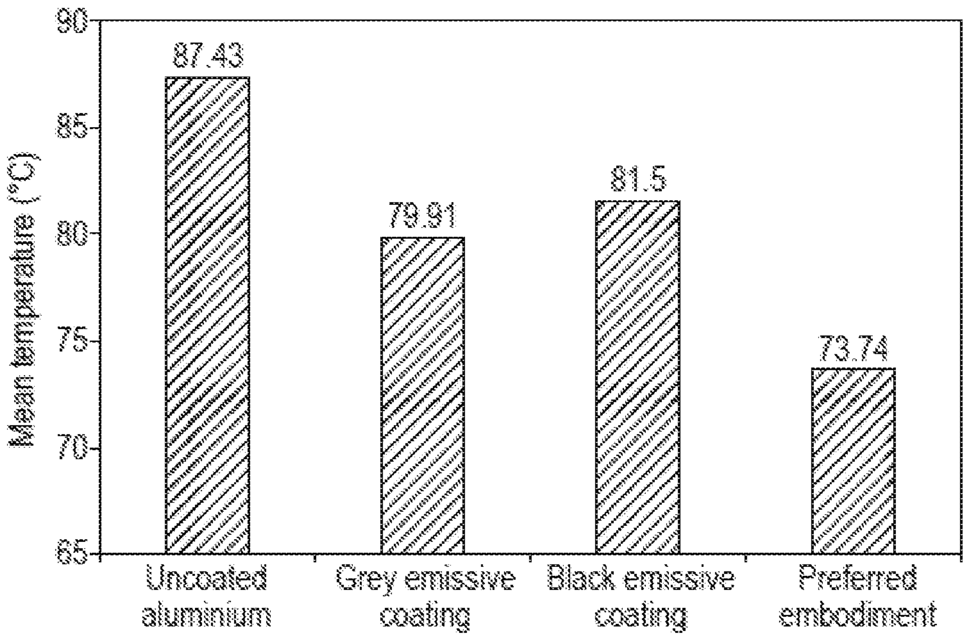
Mean temperature (°C)
90
85
80
75
70
65
87.43
79.91
81.5
73.74
Uncoated aluminium
Grey emissive coating
Black emissive coating
Preferred embodiment

Fig. 10

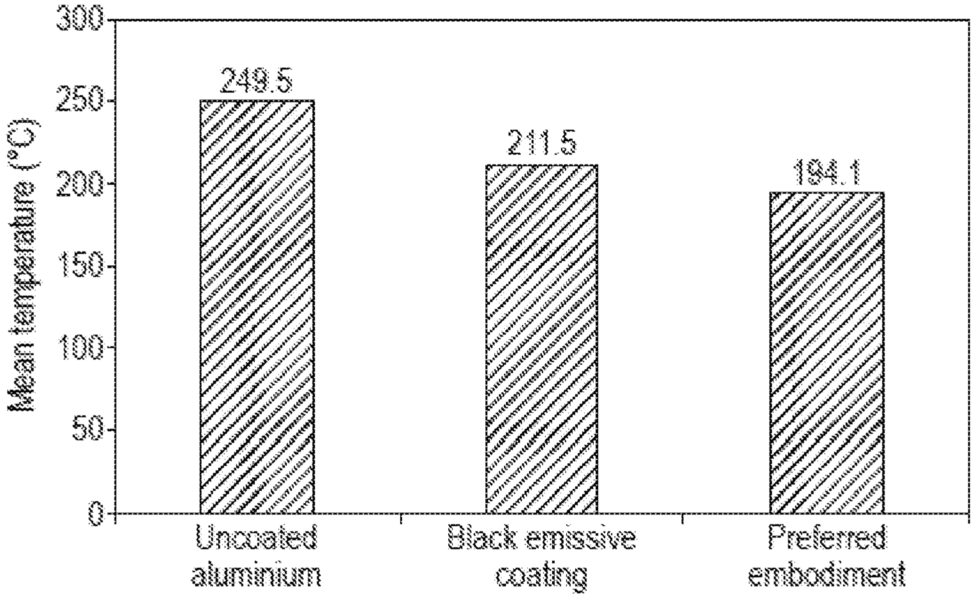
Mean temperature (°C)
300
250
200
150
100
50
0
249.5
211.5
194.1
Uncoated aluminium
Black emissive coating
Preferred embodiment

Fig. 11

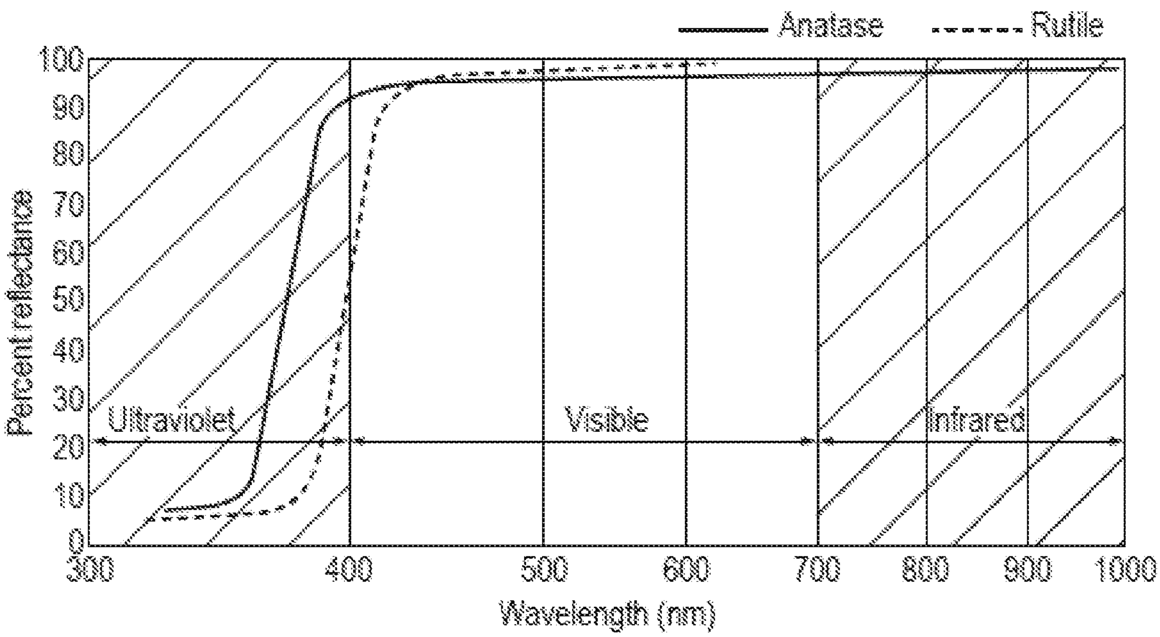
Anatase
Rutile
Percent reflectance
100
90
80
70
60
50
40
30
20
10
0
Ultraviolet
Visible
Infrared
300
400
500
600
700
800
900
1000
Wavelength (nm)

Fig. 12

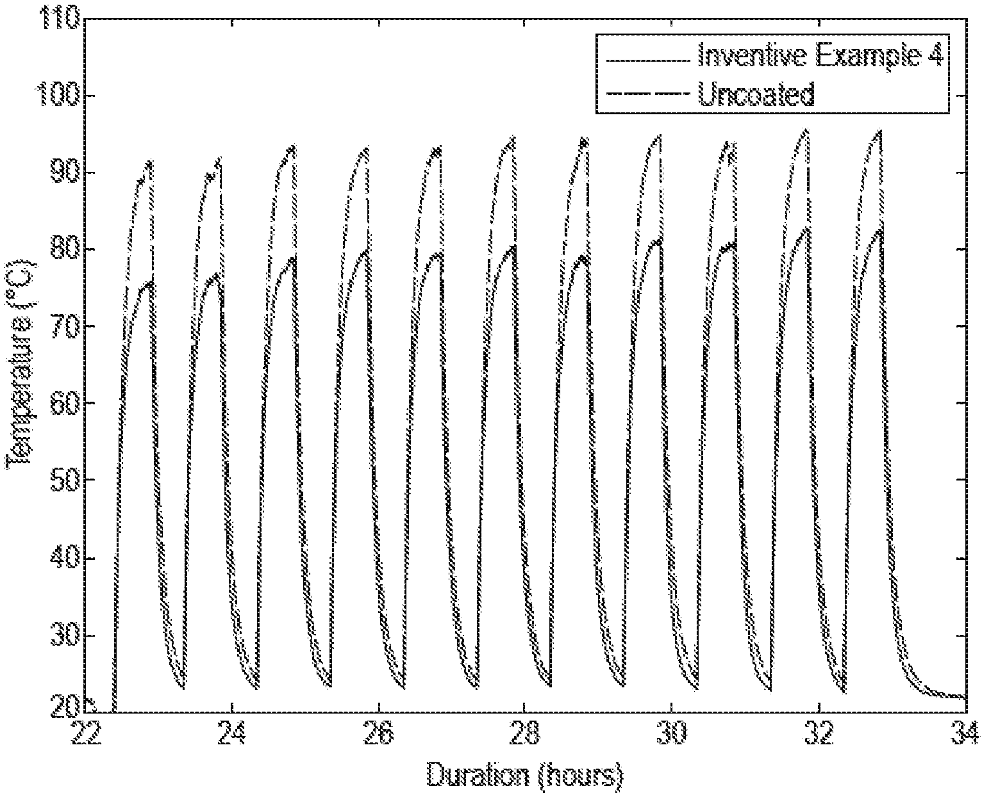
Inventive Example 4
Uncoated
Temperature (°C)
Duration (hours)
110
100
90
80
70
60
50
40
30
20
22
24
26
28
30
32
34

Fig. 13

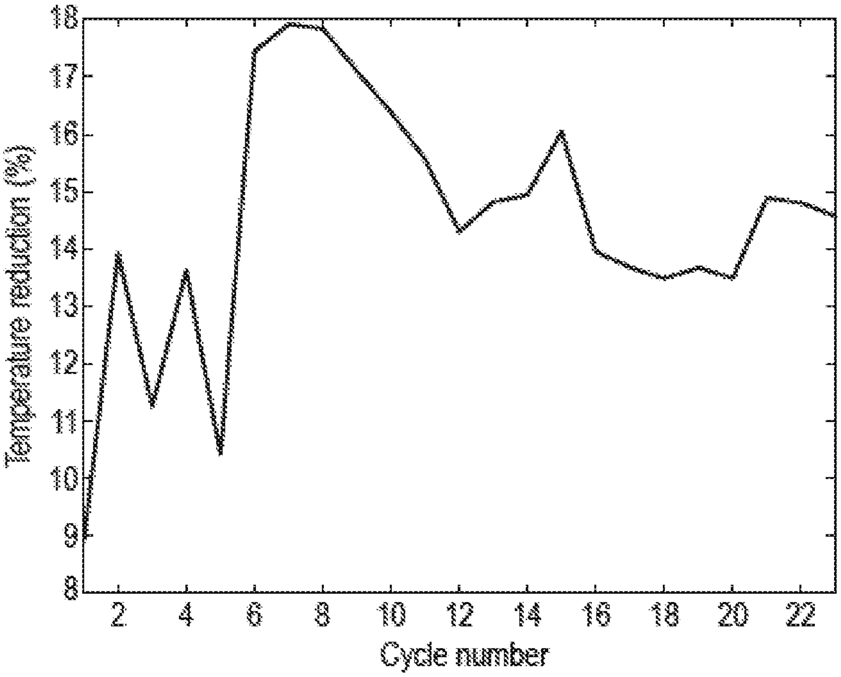
Temperature reduction (%)
Cycle number
18
17
16
15
14
13
12
11
10
9
8
2
4
6
8
10
12
14
16
18
20
22

Fig. 14

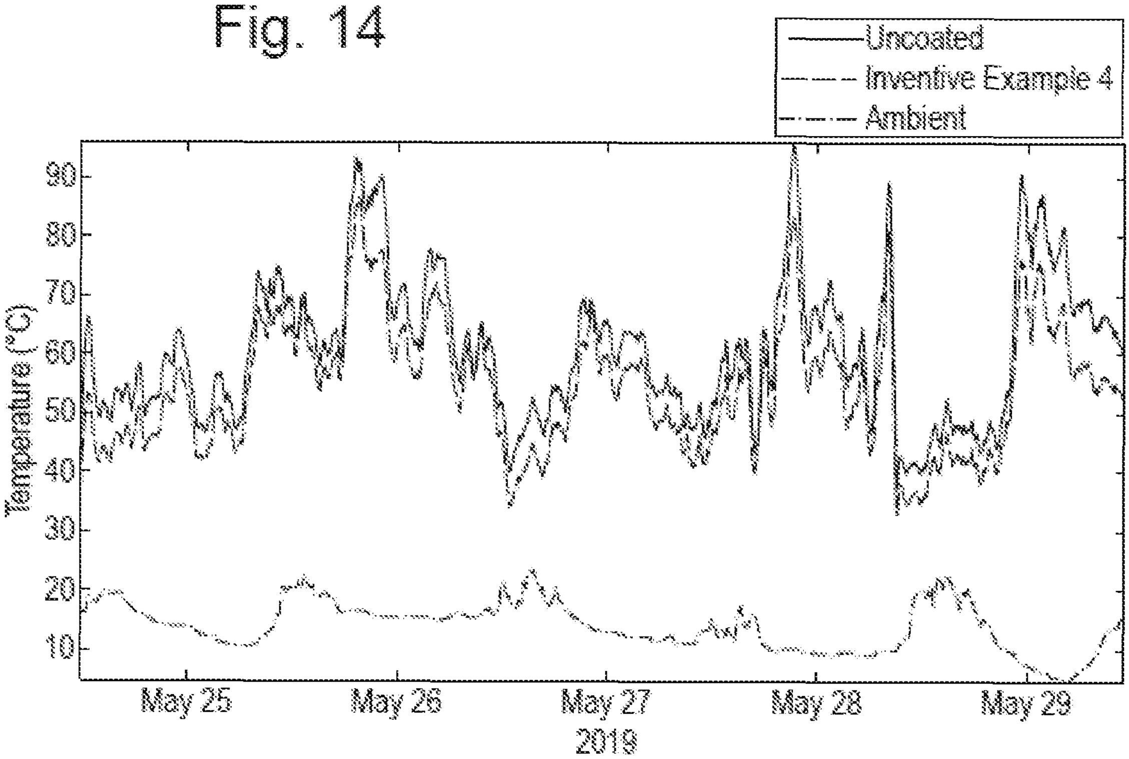
Uncoated
Inventive Example 4
Ambient
Temperature (°C)
90
80
70
60
50
40
30
20
10
May 25
May 26
May 27
May 28
May 29
2019

Fig. 15

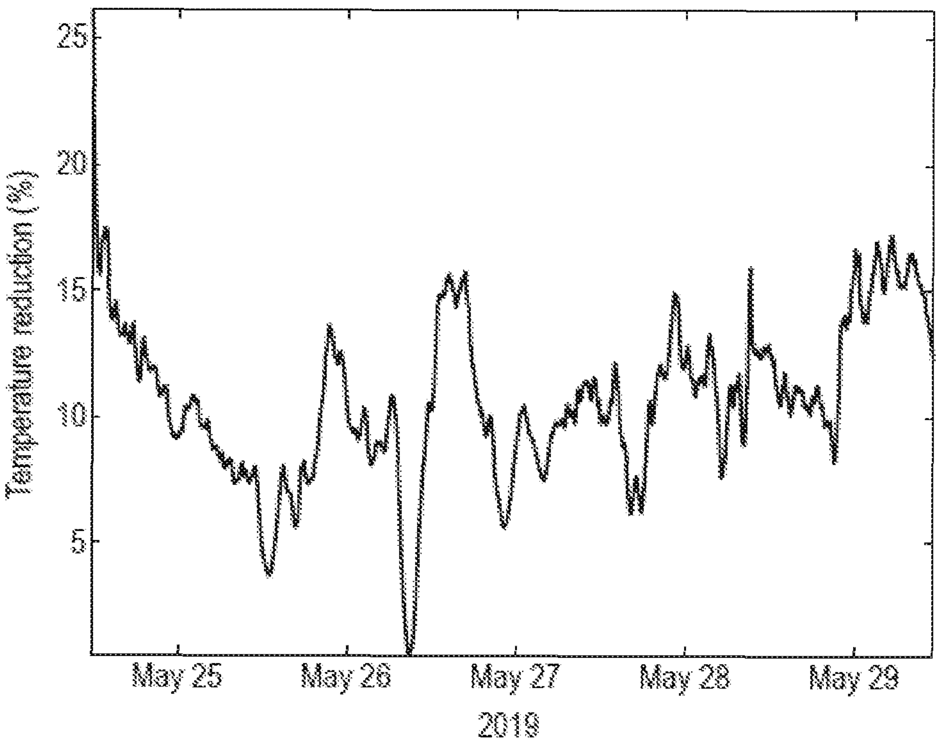
Temperature reduction (%)
25
20
15
10
5
May 25
May 26
May 27
May 28
May 29
2019

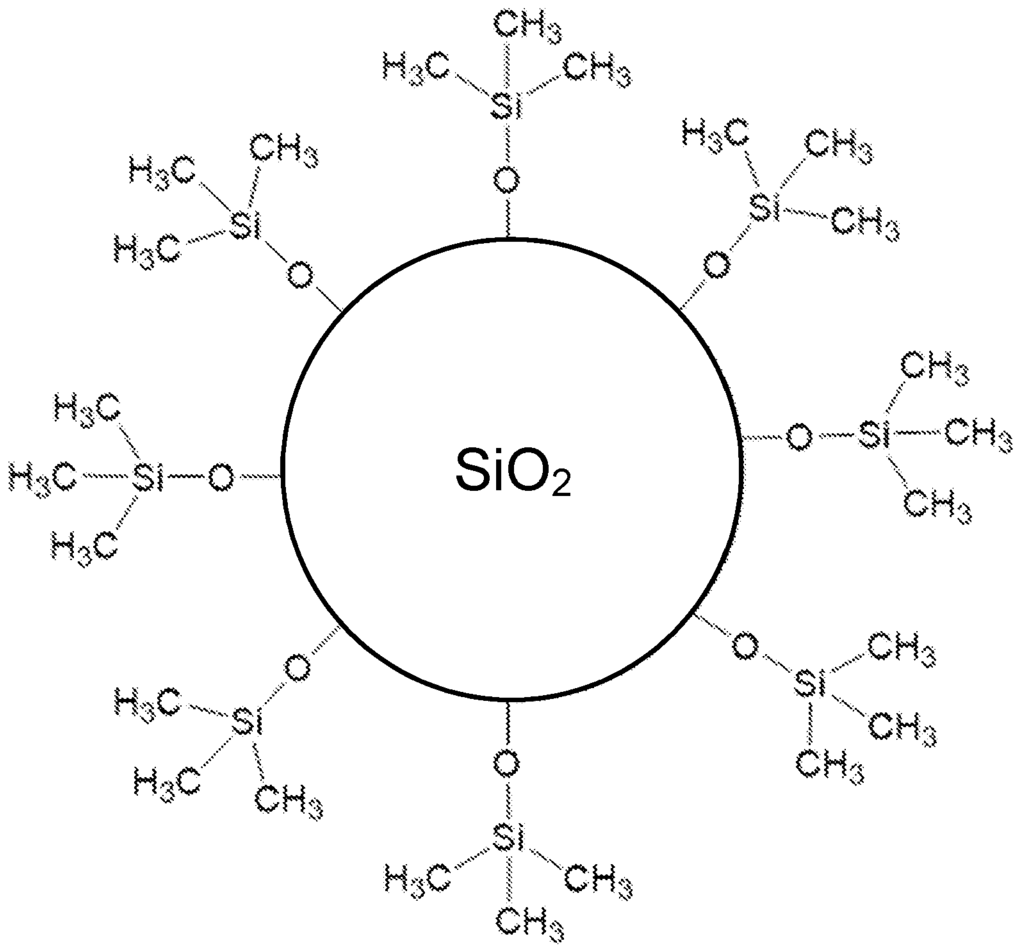

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015105972 A
- WO 2014025420 A
- WO 2007034248 A
- FR 2971617
- US 20180112078 A
- US 20150194237 A, (Ranganathan)
- US 20160032107 A, (Siripurapu)
- US 20050266981 A, (Nakajima)


### Non-patent literature cited in the description


- *CIE Publication,* 1986, vol. 15.2
- *Journal of Photochemistry and Photobiology A: Chemistry,* vol. 216 (2-3), 179-182